# EUROPEAN PATENT APPLICATION

(11) **EP 4 845 170 A1**
(43) Date of publication of application: **25.11.2026**
(21) Application number: 26180856.2
(22) Date of filing: 25.05.2026
(51) Int. Cl.: H04N 23/56, G02B 27/00, G03B 17/00, H04N 23/55, H04N 5/913

(54) **SYSTEMS AND METHODS FOR VISUAL INDICATORS ON WEARABLE DEVICES**

(30) Priority: 23.05.2025 US 202563811487 P; 28.05.2025 US 202563813292 P; 18.05.2026 US 202619680027
(71) Applicant: Meta Platforms Technologies, LLC, Menlo Park, CA 94025 (US)
(72) Inventor: WHEELWRIGHT, Brian, Menlo Park, 94025 (US); FRIEDMAN, Brandon Michael Hellman, Menlo Park, 94025 (US); BIALKE, Nathan, Menlo Park, 94025 (US); COBB, Joshua, Menlo Park, 94025 (US); XU, Di, Menlo Park, 94025 (US); BALSAM, Nava K, Menlo Park, 94025 (US); AMIRSOLAIMANI, Babak, Menlo Park, 94025 (US); SILVERSTEIN, Barry David, Menlo Park, 94025 (US)
(74) Representative: Murgitroyd & Company

(57) **Abstract**

A wearable device includes a camera configured to capture image data of a physical environment and a visible indicator configured to emit light in response to an operational state of the camera.

## Description

This application claims the benefit of priority of U.S. Provisional Application No. 63/813,292, filed 28 May 2025, and U.S. Provisional Application No. 63/811,487, filed 23 May 2025.

### FIELD

The present disclosure relates to systems and methods of indicating the operational state of a sensor that find particular, but not exclusive, utility in wearable devices.

### BACKGROUND

Virtual reality (VR) and augmented reality (AR) eyewear devices or headsets may enable users to experience events, such as interactions with people in a computer-generated simulation of a three-dimensional world or viewing data superimposed on a real-world view. By way of example, superimposing information onto a field of view may be achieved through an optical head-mounted display (OHMD) or by using embedded wireless glasses with a transparent heads-up display (HUD) or augmented reality (AR) overlay. VR/AR eyewear devices and headsets may be used for a variety of purposes. Governments may use such devices for military training, medical professionals may use such devices to simulate surgery, and engineers may use such devices as design visualization aids.

Wearable devices, such as smart glasses, can include cameras configured to capture images or video in everyday environments. Such wearable devices can include outward-facing visible indicators that notify nearby observers when a camera is active or recording. Existing indicator arrangements, in some cases, provide limited information and can be susceptible to obstruction or other tampering. For example, a user may intentionally or unintentionally obstruct or disable a visible indicator while allowing the camera to remain active, thereby limiting notice to observers within a field of view of the camera. Further, some indicator arrangements indicate that a camera is active without communicating whether a nearby observer is within the field of view of the camera. These limitations can create privacy concerns for nearby observers and can make verification of reliable communication of camera-status information more difficult during operation of the wearable device.

### SUMMARY

According to a first aspect, there is provided a wearable device comprising: a camera configured to capture image data of a physical environment; and a visible indicator configured to emit light in response to an operational state of the camera.

In some embodiments, the visible indicator comprises a light ring adjacent to a cover window or cover lens of the camera.

In some embodiments, the visible indicator comprises a light ring disposed beneath a cover window or cover lens of the camera.

In some embodiments, the visible indicator is configured to emit the light along an optical path of the camera through a lens assembly in response to the operational state of the camera; the camera is configured to detect the light emitted by the visible indicator along the optical path to verify operation of the visible indicator; and an operational state of the camera is determined based on the detected light.

In some embodiments, the visible indicator is configured to emit the light along the optical path of the camera through the lens assembly before and after an image capture event.

In some embodiments, the visible indicator is configured to emit the light along the optical path of the camera through the lens assembly during a readout period between successive frames of image capture.

In some embodiments, the wearable device further comprises: a second visible indicator different from the visible indicator; wherein the visible indicator is configured to emit the light along an optical path of the camera through a lens assembly before and after video capture by the camera in response to the operational state of the camera; wherein the second visible indicator is configured to emit second light during the video capture; wherein the camera is configured to detect the light emitted by the visible indicator along the optical path to verify operation of at least one of the visible indicator or the second visible indicator; and wherein an operational state of the camera is determined based on detected light from at least one of the visible indicator or the second visible indicator.

In some embodiments, the visible indicator is configured to emit the light along an optical path of the camera through a lens assembly during video capture by the camera in a modulated manner between successive frames of the video capture in response to the operational state of the camera; the camera is configured to detect the light emitted by the visible indicator along the optical path to verify operation of the visible indicator; and an operational state of the camera is determined based on the detected light.

In some embodiments, the visible indicator is configured to emit the light at an emission frequency less than a frame rate of the video capture.

In some embodiments, the camera comprises a global shutter or a rolling shutter.

In some embodiments, the visible indicator is configured to emit the light along an optical path of the camera through a lens assembly; and the light is directionally distributed such that a first portion of the light corresponds to a field of view of the camera and is visible to observers within the field of view, and a second portion of the light corresponds to at least one region outside the field of view and is visible to observers outside the field of view.

In some embodiments, the first portion of the light and the second portion of the light differ in at least one of color, intensity, or modulation.

In some embodiments, the visible indicator comprises a plurality of light emitters disposed over a baffle that is parallel to an image sensor of the camera; the baffle is configured to separate light corresponding to the field of view from light corresponding to the at least one region outside the field of view; a first set of light emitters of the plurality of light emitters is configured to direct light toward the image sensor such that the light directed toward the image sensor is scattered through the lens assembly; and a second set of light emitters of the plurality of light emitters is configured to direct light toward the lens assembly from a side of the baffle opposite the image sensor.

In some embodiments, the visible indicator comprises one or more optical components configured to shape an angular distribution of the light.

In some embodiments, the visible indicator comprises a single light emitter coupled to an illumination spreading structure configured to produce directionally distributed light.

According to a further aspect, there is provided a system comprising: at least one physical processor; and physical memory comprising computer-executable instructions that, when executed by the at least one physical processor, cause the at least one physical processor to: activate a visible indicator to emit light in response to an operational state of a camera; detect, via the camera, the light emitted by the visible indicator; verify, based on the detected light, operation of the visible indicator; and determine an operational state of the camera based on the detected light.

According to a further aspect, there is provided a method comprising: activating a visible indicator of a wearable device to emit light in response to an operational state of a camera of the wearable device; detecting, via the camera, the light emitted by the visible indicator; verifying, based on the detected light, an operation of the visible indicator; and determining an operational state of the camera based on the detected light.

In some embodiments, the method further comprise emitting the light from the visible indicator along an optical path of the camera through a lens assembly in response to the operational state of the camera.

In some embodiments, the method further comprises emitting the light from the visible indicator along an optical path of the camera through a lens assembly during video capture by the camera in a modulated manner between successive frames of the video capture in response to the operational state of the camera.

In some embodiments, the method further comprises emitting the light from the visible indicator along an optical path of the camera through a lens assembly in a directionally distributed manner such that a first portion of the light corresponds to a field of view of the camera and is visible to observers within the field of view, and a second portion of the light corresponds to at least one region outside the field of view and is visible to observers outside the field of view.

It will be appreciated that any features described herein as being suitable for incorporation into one or more aspects or embodiments of the present disclosure are intended to be generalizable across any and all aspects and embodiments of the present disclosure. Other aspects of the present disclosure can be understood by those skilled in the art in light of the description, the claims, and the drawings of the present disclosure. The foregoing general description and the following detailed description are exemplary and explanatory only and are not restrictive of the claims.

### BRIEF DESCRIPTION OF THE DRAWINGS

The accompanying drawings illustrate a number of examples and are a part of the specification. Together with the following description, these drawings demonstrate and explain various principles of the present disclosure.
FIGS. 1A and 1B illustrate exemplary light-emitting diode (LED) visible indicators around a lens of a camera according to some examples.
FIG. 2 illustrates exemplary LED visible indicators projecting through a lens of a camera according to certain examples.
FIG. 3 illustrates an exemplary flowchart for image capture of a camera with visible indicators through a lens of the camera according to particular examples.
FIG. 4 illustrates exemplary LED visible indicators illuminating through a lens of a camera emitting directionally distributed light according to some examples.
FIG. 5 illustrates exemplary LED visible indicators illuminating through a lens of a camera emitting directionally distributed light corresponding to different fields of view according to certain examples.
FIG. 6 illustrates exemplary LED visible indicators illuminating through a lens of a camera corresponding to a field of view and regions outside the field of view according to particular examples.
FIG. 7 illustrates an observer's visibility corresponding to a user's camera's field of view and regions outside of the user's camera's field of view according to some examples.
FIG. 8 illustrates an exemplary wearable device with illuminated stencil image (static) visible indicators according to certain examples.
FIG. 9 illustrates an exemplary wearable device with flashlights according to particular examples.
FIG. 10 illustrates an exemplary wearable device with a visible indicator detailing a state of an internal display according to some examples.
FIG. 11 illustrates an exemplary wearable device with a rear view display according to certain examples.
FIG. 12 illustrates an exemplary flowchart of a method for determining an operational state of an outwardly visible indicator and using the determined operational state to determine the resulting operational state of a camera according to some examples.
FIG. 13 is an illustration of an example artificial-reality (AR) system according to some examples of this disclosure.
FIG. 14 is an illustration of an example artificial-reality (AR) system with a handheld device according to some examples of this disclosure.
FIG. 15A is an illustration of example user interactions within an artificial-reality system according to some examples of this disclosure.
FIG. 15B is an illustration of example user interactions within an artificial-reality system according to some examples of this disclosure.
FIG. 16A is an illustration of example user interactions within an artificial-reality system according to some examples of this disclosure.
FIG. 16B is an illustration of example user interactions within an artificial-reality system according to some examples of this disclosure.
FIG. 17 is an illustration of an example wrist-wearable device of an artificial-reality system according to some examples of this disclosure.
FIG. 18 is an illustration of an example wearable artificial-reality system according to some examples of this disclosure.
FIG. 19 is an illustration of an example augmented-reality system according to some examples of this disclosure.
FIG. 20A is an illustration of an example virtual-reality system according to some examples of this disclosure.
FIG. 20B is an illustration of another perspective of the virtual-reality systems shown in FIG. 20A according to some examples of this disclosure.
FIG. 21 is a block diagram showing system components of example artificial- and virtual-reality systems according to some examples of this disclosure.
FIG. 22A is an illustration of an example intermediary processing device according to examples of this disclosure.
FIG. 22B is a perspective view of the intermediary processing device shown in FIG. 22A according to some examples of this disclosure.
FIG. 23 is a block diagram showing example components of the intermediary processing device illustrated in FIGS. 22A and 22B according to some examples of this disclosure.
FIG. 24A is a front view of an example haptic feedback device according to examples of this disclosure.
FIG. 24B is a back view of the example haptic feedback device shown in FIG. 24A according to examples of this disclosure.
FIG. 25 is a block diagram of example components of a haptic feedback device according to examples of this disclosure.
FIG. 26 is an illustration of an example system that incorporates an eye-tracking subsystem capable of tracking a user's eye(s) according to some examples of this disclosure.
FIG. 27 is a more detailed illustration of various aspects of the eye-tracking subsystem illustrated in FIG. 26 according to some examples of this disclosure.

Throughout the drawings, identical reference characters and descriptions indicate similar, but not necessarily identical, elements. While the examples described herein are susceptible to various modifications and alternative forms, specific examples have been shown by way of example in the drawings and will be described in detail herein. However, the examples described herein are not intended to be limited to the particular forms disclosed. Rather, the present disclosure covers all modifications, equivalents, and alternatives falling within the scope of the appended claims.

### DETAILED DESCRIPTION

Virtual reality (VR) and augmented reality (AR) eyewear devices or headsets may enable users to experience events, such as interactions with people in a computer-generated simulation of a three-dimensional world or viewing data superimposed on a real-world view. By way of example, superimposing information onto a field of view may be achieved through an optical head-mounted display (OHMD) or by using embedded wireless glasses with a transparent heads-up display (HUD) or augmented reality (AR) overlay. VR/AR eyewear devices and headsets may be used for a variety of purposes. Governments may use such devices for military training, medical professionals may use such devices to simulate surgery, and engineers may use such devices as design visualization aids.

Wearable devices, such as smart glasses, can include cameras configured to capture images or video in everyday environments. Such wearable devices can include outward-facing visible indicators that notify nearby observers when a camera is active or recording. Existing indicator arrangements, in some cases, provide limited information and can be susceptible to obstruction or other tampering. For example, a user may intentionally or unintentionally obstruct or disable a visible indicator while allowing the camera to remain active, thereby limiting notice to observers within a field of view of the camera. Further, some indicator arrangements indicate that a camera is active without communicating whether a nearby observer is within the field of view of the camera. These limitations can create privacy concerns for nearby observers and can make verification of reliable communication of camera-status information more difficult during operation of the wearable device.

Examples of the disclosed technology relate to outward-facing visual indicators for wearable devices that communicate operational status information associated with the wearable device. The operational status information may indicate, for example, whether a camera is active or recording, a field of view of the camera, whether an observer is within the field of view, whether an internal display is active, or another state of the wearable device. In some examples, the visual indicators are configured to resist obstruction or tampering, provide field-of-view information to nearby observers, and enable verification of indicator operation while the camera is active. The wearable device may also include additional components, such as one or more illumination devices, rear-facing cameras, or other sensors or output devices.

As disclosed herein, a wearable device includes a camera configured to capture image data of a physical environment and one or more outward-facing visible indicators configured to emit visible light in response to an operational state of the camera or another operational state of the wearable device. The visible indicators may be positioned, controlled, or optically arranged so that nearby observers receive notice of camera operation and so that operation of the visible indicators can be verified by the wearable device. For example, the visible indicators may indicate that the camera is active, inactive, capturing a still image, capturing a burst of images, recording video, streaming image data, or operating in another image-capture state (e.g., "timer mode"). The visible indicators may also communicate other states of the wearable device, such as whether an internal display, a microphone, an illumination device, a communication interface, or another component is active.

In some implementations, one or more visible indicators are located around a camera lens or around or underneath a common cover window associated with the camera. Locating the visible indicators near the camera can reduce the likelihood that the visible indicators are obstructed while the camera remains unobstructed. In some examples, one or more visible indicators are disposed beneath a common cover window with the camera. The common cover window can protect the camera and the visible indicators and can make independent obstruction of the visible indicators more difficult because both the imaging path and illumination path through the cover glass may overlap. Blocking the illumination would therefore compromise the performance of the camera. In such implementations, the visible indicators may be controlled to emit light at selected times, such as before image capture, during image capture, after image capture, between frames of video capture, during sensor readout periods, or at other times selected to reduce optical artifacts in captured image data and allow the camera sensor to detect reflector or scattered light from the indicators.

In some examples, one or more visible indicators emit light through a camera lens assembly or along an optical path of the camera. The camera lens assembly may thereby operate as both an imaging optic for the camera and an output optic for the visible indicator. In such a common-aperture arrangement, light emitted by the visible indicator exits through an aperture used by the camera to receive image light from the physical environment. Because the visible indicator and the camera share at least part of an optical path, obstructing the visible indicator can also obstruct the camera, and obstructing the camera can also affect the visible indicator. This relationship can improve resistance to tampering and can provide a basis for determining whether image capture is to be permitted, continued, modified, or disabled.

In some examples, the camera detects light emitted by a visible indicator and the wearable device verifies operation of the visible indicator based on the detected light. The verification may include determining whether the detected light has an expected intensity, color, temporal modulation, spatial distribution, angular distribution, duration, or other optical characteristic. The verification may also include determining whether the visible indicator appears to be obstructed, disabled, misaligned, degraded, or otherwise operating outside an expected operating condition. Based on the verification, the wearable device may determine a resulting operational state of the camera. For example, the wearable device may allow the camera to capture image data when the visible indicator is verified, stop or prevent image capture when the visible indicator is not verified, generate an alert, transition to a restricted operating mode, or perform another corrective action.

In some examples, visible-indicator operation is synchronized with image capture. During still-image capture or burst-image capture, a visible indicator may emit light before and after one or more exposure intervals, and the camera may capture verification information associated with the emitted light. During video capture, a visible indicator may emit light before a video clip, after a video clip, during intervals between successive frames, during sensor readout periods, or in a temporally modulated manner during capture. A global-shutter image sensor may facilitate emission during intervals in which image data is not being exposed. A rolling-shutter image sensor may be used with timing, modulation, exposure, or readout controls selected to reduce interference between the visible-indicator light and captured image data. In some cases, a common-aperture visible indicator may be used intermittently for verification while another visible indicator provides more continuous outward notice of video capture.

Coordinated timing and well-controlled delays between the sensor exposure, sensor readout, and illumination stop/start can avoid and mitigate image artifacts caused by bright illumination from within the camera. For example, proper timing margins can mitigate parasitic light sensitivity during periods of time when the sensor is not exposing (i.e., during readout of a global shutter sensor) but the illumination in on.

In some examples, the visible indicators provide field-of-view information to nearby observers. A visible indicator may emit light in a directionally distributed manner such that a first portion of the emitted light is visible to observers within a field of view of the camera and a second portion of the emitted light is visible to observers outside the field of view of the camera. The first portion and the second portion may differ by color, intensity, pattern, timing, modulation, symbol, or another visible characteristic. As a result, an observer within the field of view may receive a first indication that the observer is in a region being captured or capable of being captured by the camera, while an observer outside the field of view may receive a second indication that the camera is active without indicating that the observer is in the field of view.

In some implementations, field-of-view information is generated using one or more light emitters, baffles, masks, optical stops, diffusers, light pipes, waveguides, lens elements, or other light-shaping structures associated with the camera. For example, a baffle positioned near an image-sensor plane or another optical plane may shape emitted light so that different angular regions correspond to different visible indications. Light emitted from one region may be projected through the camera lens assembly to indicate an angular region corresponding to the camera field of view, while light emitted from another region may be projected to indicate one or more regions outside the camera field of view. A transition region may include blended colors, intermediate intensities, or other gradual changes to account for optical blur, field boundaries, or alignment tolerances. The illumination may be controlled or modulated in intensity based on ambient light, distance to objects, detected persons, gaze direction, head pose, image data, depth data, or other sensor information.

In some examples, the wearable device includes an outward-facing illuminated static image (or "stencil"), holographic element, mask, or other image-forming indicator configured to present a visible image to nearby observers. The visible image may communicate an operational state such as still-image capture, video recording, microphone activation, live streaming, display activation, device pairing, data sharing, or another device state. In some implementations, the visible image differs across viewing angles so that observers in different angular regions receive different information. For example, information visible within the camera field of view may differ from information visible outside the camera field of view, or a pairing code or other device-specific information may be visible only within a limited angular range.

In some examples, the wearable device includes an illumination device configured to operate as a flashlight, reading light, camera flash, visible indicator, or a combination thereof. The illumination device may be controlled based on ambient light, distance to objects, detected persons, gaze direction, head pose, image data, depth data, or other sensor information. The wearable device may adjust brightness, beam direction, beam shape, emission timing, or another illumination parameter to illuminate a target region, reduce direct illumination of nearby persons, provide capture illumination, or communicate a device state to observers.

In some examples, an outward-facing indicator communicates a state of an internal display of the wearable device. For example, a wearable display system may include one or more light engines and a waveguide configured to display content to a user. Light associated with the internal display may be redirected, diffused, scrambled, anonymized, or otherwise processed to provide an outward-facing indication that the display is active without revealing displayed content in a readable form. In some implementations, a microlens array, grating, dimmer, switchable optical element, or other optical structure is used to control the outward-facing indication. In some implementations, this display light would have otherwise been absorbed (wasted), so this feature would consume no additional power or reduce display efficiency.

In some examples, the wearable device includes rear-view functionality. One or more rear-facing cameras may capture image data from a region behind the user, and the captured image data may be presented to the user using an internal display, peripheral display region, off-axis holographic display, temple-arm display, nose-piece display, or another display arrangement. Rear-view content may be presented continuously, in response to a user input, in response to gaze behavior, or in response to detection of an object approaching from behind. The rear-facing camera may be integrated into the wearable device or provided by an ancillary device that communicates with the wearable device through a wired or wireless connection.

In some examples, the wearable device operates within a broader artificial-reality, augmented-reality, virtual-reality, or mixed-reality system. The system may include a head-worn device, wrist-wearable device, handheld device, intermediary processing device, haptic feedback device, eye-tracking subsystem, controller, sensor module, display module, or other peripheral device. The visible-indicator, verification, field-of-view indication, illumination, internal-display indication, and rear-view features described herein may be implemented individually or in any suitable combination within such systems. Processors and memory associated with one or more devices may execute instructions to coordinate camera operation, visible-indicator emission, verification logic, display output, haptic output, communication, and sensor processing.

One example of a head-wearable device is described herein. This example head-wearable device includes one or more imaging devices, one or more illumination devices, and one or more displays. The head-wearable device further includes one or more programs stored in memory and configured to be executed by one or more processors. The one or more programs include instructions for, in accordance with a determination that an imaging device is active and an imaging device indicator is unobstructed, enabling capture of image data via the imaging device. The one or more programs may also include instructions for, in accordance with a determination that the imaging device is active and the imaging device indicator is obstructed, disabling capture of image data via the imaging device.

Another example of a head-wearable device is described herein. This example head-wearable device includes one or more imaging devices, one or more illumination devices, and one or more displays. Each illumination device is associated with a respective imaging device of the one or more imaging devices, disposed within a predetermined distance of the respective imaging device of the one or more imaging devices, illuminated to project an outward-facing light, and illuminated without interfering with image data capture of the respective imaging device of the one or more imaging devices. The head-wearable device further includes one or more programs stored in memory and configured to be executed by one or more processors. The one or more programs include instructions for, in accordance with a determination that an imaging device is active and an imaging device indicator is unobstructed, enabling capture of image data via the imaging device. The one or more programs also include instructions for, in accordance with a determination that the imaging device is active and the imaging device indicator is obstructed, disabling capture of image data via the imaging device.

Instructions that cause performance of the methods and operations described herein can be stored on a non-transitory computer-readable storage medium. The non-transitory computer-readable storage medium can be included on a single electronic device or spread across multiple electronic devices of a system (computing system). A non-exhaustive list of electronic devices that can either alone or in combination (e.g., a system) perform the methods and operations described herein include an extended-reality (XR) headset/glasses (e.g., a mixed-reality (MR) headset or a pair of augmented-reality (AR) glasses as two examples), a wrist-wearable device, an intermediary processing device, a smart textile-based garment, etc. For instance, the instructions can be stored on a pair of AR glasses or can be stored on a combination of a pair of AR glasses and an associated input device (e.g., a wrist-wearable device) such that instructions for causing detection of input operations can be performed at the input device and instructions for causing changes to a displayed user interface in response to those input operations can be performed at the pair of AR glasses. The devices and systems described herein can be configured to be used in conjunction with methods and operations for providing an extended reality experience. The methods and operations for providing an extended reality experience can be stored on the non-transitory computer-readable storage medium.

The devices and/or systems described herein can be configured to include instructions that cause the performance of methods and operations associated with the presentation and/or interaction with an extended-reality headset. These methods and operations can be stored on a non-transitory computer-readable storage medium of a device or a system. It is also noted that the devices and systems described herein can be part of a larger, overarching system that includes multiple devices. A non-exhaustive list of electronic devices that can, either alone or in combination (e.g., a system), include instructions that cause the performance of methods and operations associated with the presentation and/or interaction with an extended reality experience include an extended-reality headset (e.g., a mixed-reality (MR) headset or a pair of augmented-reality (AR) glasses), a wrist-wearable device, an intermediary processing device, a smart textile-based garment, etc. For example, when an extended reality headset is described, it is understood that the extended reality headset can be in communication with one or more other devices (e.g., a wrist-wearable device, a server, an intermediary processing device, and the like) which together can include instructions for performing methods and operations associated with the presentation and/or interaction with an extended-reality system (i.e., the extended reality headset may be part of a system that includes one or more additional devices). Multiple combinations with different related devices are also contemplated.

The described examples can provide outward signaling that is resistant to obstruction or tampering, verifiable during operation, and informative to nearby observers. By associating visible-indicator emission with camera optics, camera operation, or camera field of view, the wearable device can provide more reliable notice of image capture and can support automatic control of camera operation based on whether outward notice is being properly provided. These features may improve privacy-related signaling for observers near a camera-equipped wearable device while supporting compact integration into wearable-device and artificial-reality form factors.

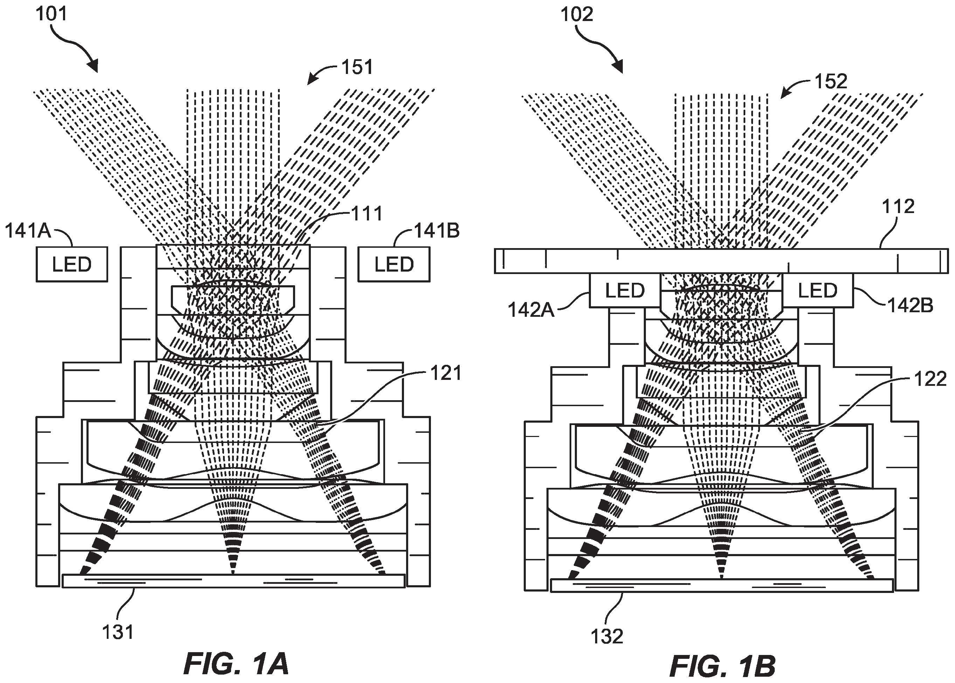

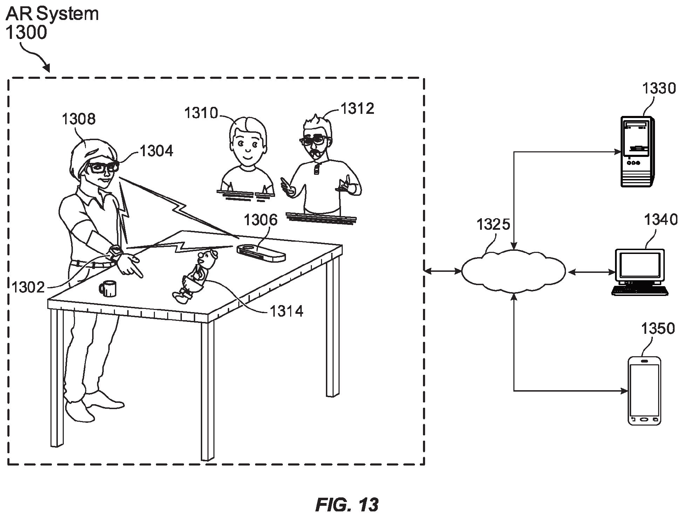

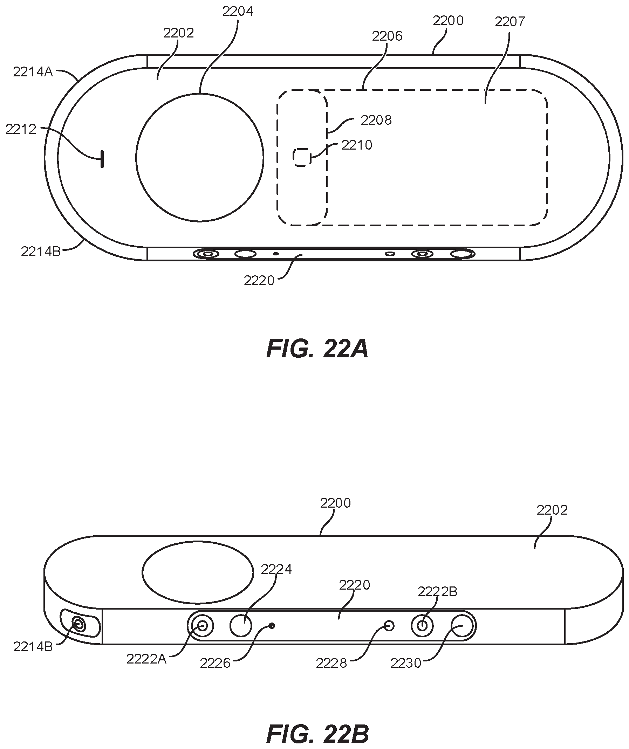

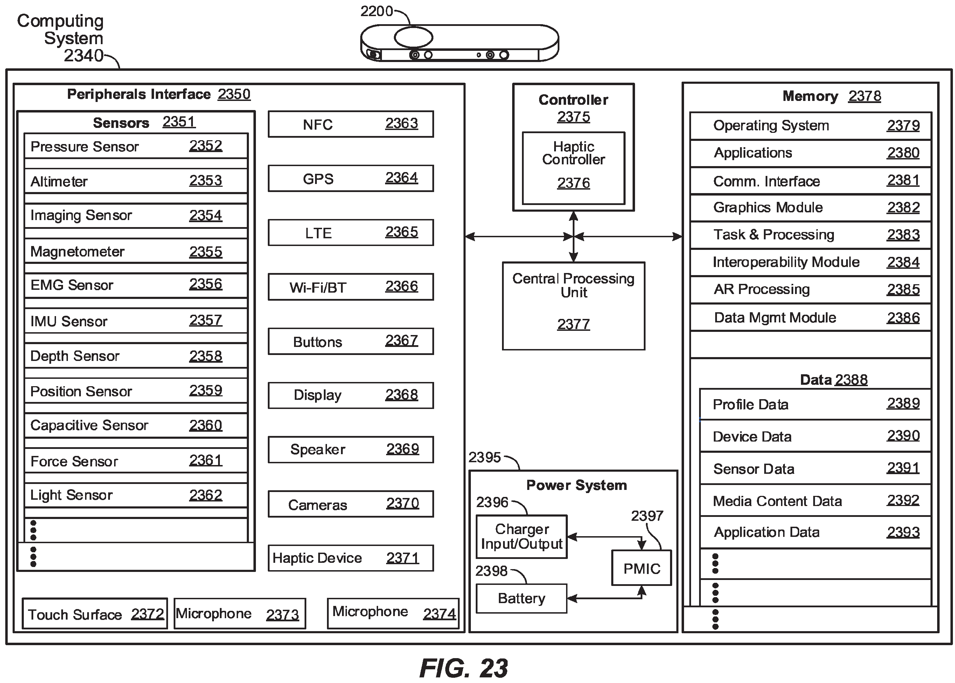

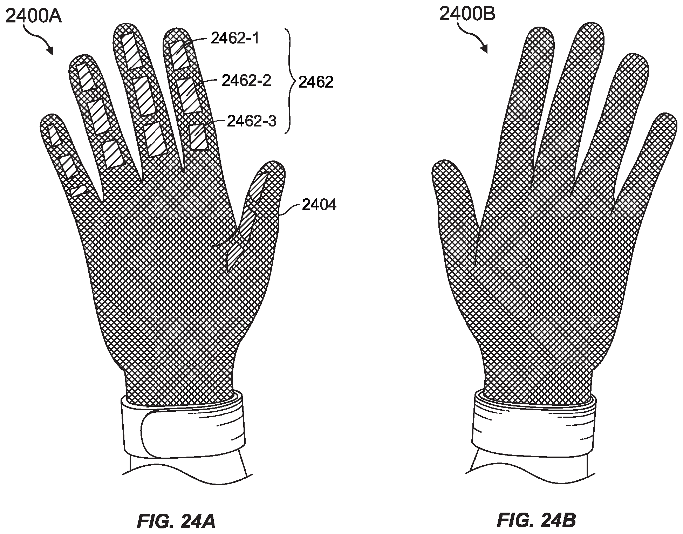

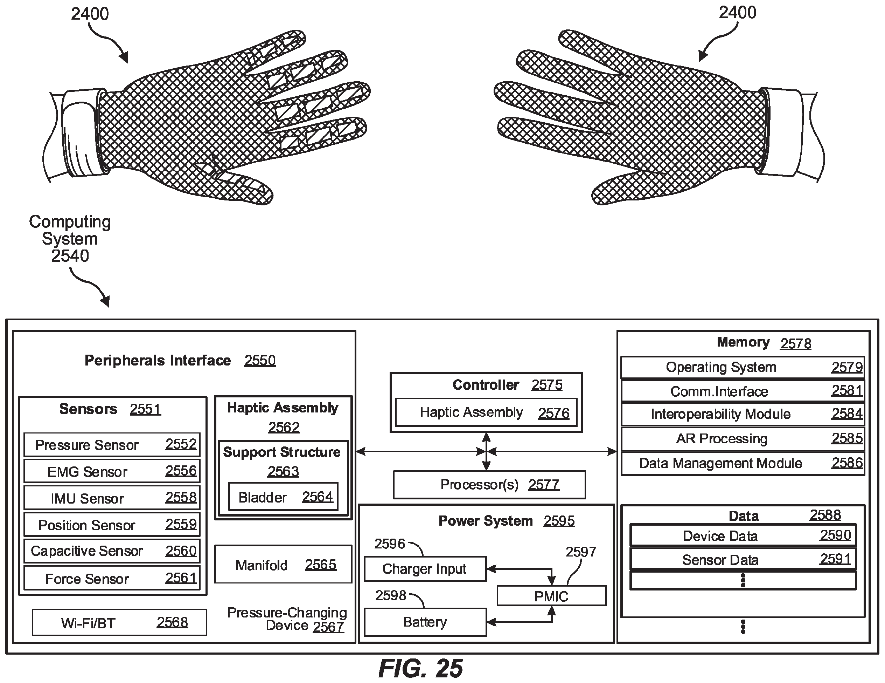

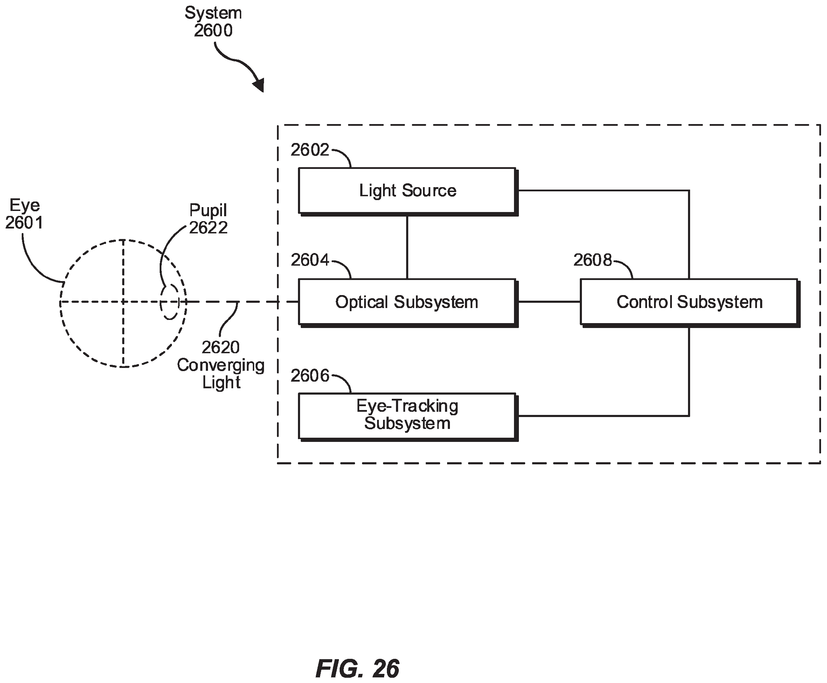

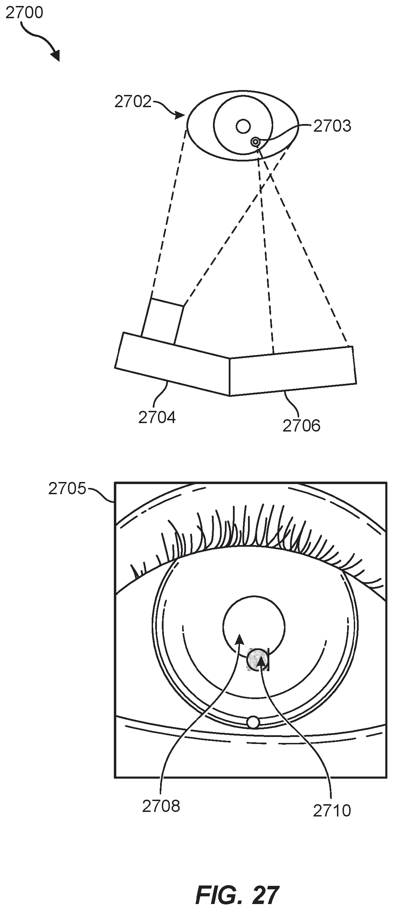

The following will provide, with reference to FIGS. 1-27, detailed descriptions of methods and related structures associated with wearable devices, artificial-reality systems, and associated components that communicate, process, or respond to operational states of the wearable device or system. The discussion associated with FIGS. 1-12 includes a description of example implementations of visible indicators that are configured to emit light in response to an operational state of a wearable device. The discussion associated with FIGS. 13-21 includes a description of artificial-reality and virtual-reality environments and system architectures in which the visible indicator techniques described herein may be implemented. The discussion associated with FIGS. 22 and 23 includes a description of an example intermediary processing device that may be used with a wearable device or an artificial-reality system. The discussion associated with FIGS. 24 and 25 includes a description of an example haptic feedback device that may be used with a wearable device or an artificial-reality system. The discussion associated with FIGS. 26 and 27 includes a description of an example eye-tracking subsystem that may be used with a wearable device or an artificial-reality system.

Features from any of the examples described herein may be used in combination with one another in accordance with the general principles described herein. These and other examples, features, and advantages will be more fully understood upon reading the following detailed description in conjunction with the accompanying drawings and claims.

FIGS. 1A and 1B illustrate example around-the-lens indicator LEDs, in accordance with some examples. Wearable devices, such as head-wearable devices, may use forward-facing LEDs to notify a user and/or bystanders when an imaging device (e.g., forward-facing camera) of a head-wearable device is active and/or capturing image data. Comparative head-wearable devices include LED indicators on opposite sides of a forward-facing element and can be easily blocked and/or disabled (e.g., covered with tape, a finger, etc.).

In accordance with some examples, LEDs can be disposed around the lens of an imaging device (e.g., a camera). Referring still to FIGS. 1A and 1B, exemplary cameras 101 and 102 include respective cover windows 111, 112, lenses 121, 122, and image sensors 131, 132. First visible indicators 141A and 142A and second visible indicators 141B and 142B are positioned proximate to cover windows 111, 112 and are configured to emit light 151 and 152, respectively, in response to an operational state of the cameras 101 and 102. In some examples, the first visible indicators 141A and 142A and the second visible indicators 141B and 142B include one or more light emitting diodes (LEDs), such as arrays of LEDs. In this manner, the emitted light 151 and 152 may provide a visible indication of operation of the cameras 101 and 102 to nearby observers.

As illustrated in FIG. 1A, first visible indicator 141A and second visible indicator 141B are positioned adjacent to cover window 111 of camera 101 and, more particularly, are disposed around a perimeter of cover window 111. In some examples, the first visible indicator 141A and the second visible indicator 141B emit light 151 as a light ring, with the emitted light directed toward observers to indicate when camera 101 may be active. In this manner, placement of the first visible indicator 141A and the second visible indicator 141B adjacent to cover window 111 may make emitted light 151 more difficult to block or disable, thereby improving reliability of the visible indication to observers relative to visible indicators positioned farther away from cover window 111.

As illustrated in FIG. 1B, first visible indicator 142A and second visible indicator 142B are disposed beneath cover window 112 of camera 102. In some examples, the first and second visible indicators 142A and 142B may emit light 152 as a light ring, with the emitted light directed toward observers to indicate when camera 102 may be active. In some examples, the first and second visible indicators 142A and 142B may emit light 152 through cover window 112 to provide outward visibility to observers. In this manner, placement of the first and second visible indicators 142A and 142B beneath cover window 112 may increase resistance to tampering because obstruction of the first and second visible indicators 142A and 142B may also interfere with operation of camera 102.

In some examples, placement of the first and second visible indicators 142A, 142B beneath cover window 112 may also introduce reflections, such as Fresnel reflections, that result in stray light from emitted light 152. To mitigate such effects, the first and second visible indicators 142A and 142B may be operated in coordination with image capture operations of camera 102, including timing of image sensor 132, such that the first and second visible indicators 142A, 142B may be activated before and/or after capture of image data, or between frames of video capture. Accordingly, placement of the first and second visible indicators 142A and 142B in FIG. 1B may provide a visible indication of camera operation at or near an image capture location of camera 102 while reducing interference with captured image data.

By using observing the engineered back-reflections or engineered diffusion of LED light back to the image sensor, the sensor 132 can verify that the indicator light is active and working properly. Alternatively, a light pipe, diffuser, or other optical element may convey the LED light to an ambient light sensor (ALS) or to the camera sensor through the lens barrel to allow the sensor to verify that the LED indicators are functioning properly and have not been damaged or tampered with. In some examples, the illuminators in FIG. 1A and 1B may be arranged in in a circle (ring light) or spiral and may be combined with diffusers and other optics to tailor the uniformity, color mixing, and directionality of the illumination. The illumination may vary in color through time and location along the ring (e.g., rotating color animation).

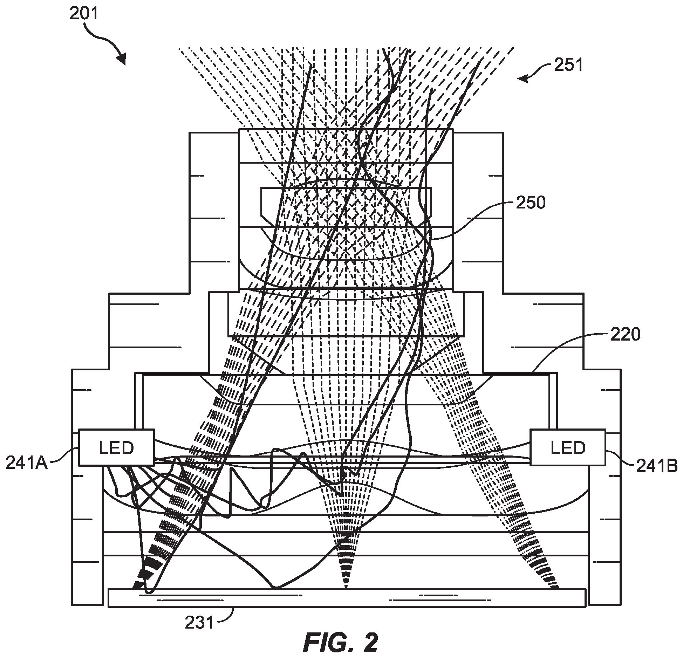

FIG. 2 illustrates example through-the-lens indicator LEDs, in accordance with some examples. In some examples, one or more LEDs are coupled through one or more portions of the lenses (e.g., gullwing lenses) that tend to distribute illumination all around. In some examples, through-the-lens indicator LEDs are used with imaging devices that include a global shutter (e.g., where illumination occurs between frames, during readout).

As shown in FIG. 2, a camera 201 including a first visible indicator 241A, a second visible indicator 241B, a camera sensor 231, one or more lenses forming a lens assembly 220, and an optical path 250 extending through lens assembly 220 toward the camera sensor 231. First and second visible indicators 241A and 241B are configured to emit light 251 through the lens assembly 220 in response to an operational state of the camera 201. Emitted light 251 may be directed along the optical path 250 of the camera 201 through lens assembly 220. First and second visible indicators 241A and 241B may be disposed adjacent to and optically coupled to lens assembly 220 such that emitted light 251 enters an interior region of lens assembly 220, as opposed to an exterior portion of the camera as illustrated in FIGS. 1A and 1B. In some examples, the first and second visible indicators 241A and 241B, including one or more LEDs, may be configured to floodlight the interior of lens assembly 220.

Emitted light 251 may be propagated and distributed through one or more portions of lens assembly 220 along an optical path 250, such that a portion of the emitted light exits lens assembly 220 for outward visibility to an observer, while another portion of the emitted light propagates toward image sensor 231 where it scatters in all directions, including outward toward the pupil of the lens. Consequently, emitted light may travel along the optical path 250 through a same aperture used for image capture of camera 201 and propagation of emitted light from the first and second visible indicators 241A, 241B.

In some examples, image sensor 231 is configured to detect emitted light along an optical path to verify an operational state of the first and second visible indicators 241A and 241B, and a resulting operational state of camera 201 may be determined therefrom. Imaging devices including through-the-lens indicator LEDs can confirm or determine whether the LEDs have been disabled or moved. The through-the-lens indicator LEDs cannot be blocked without blocking the imaging device.

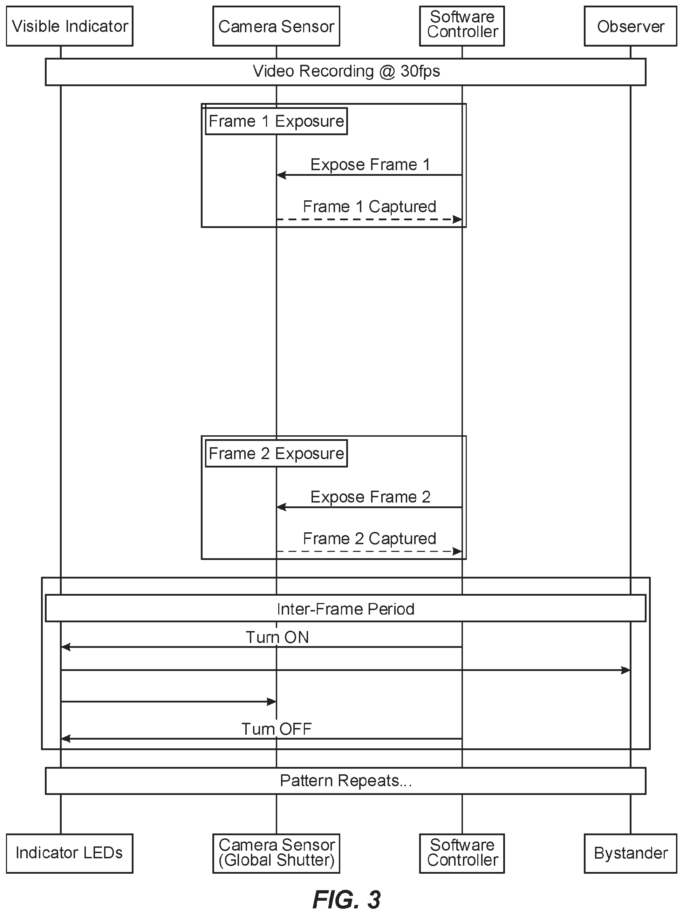

FIG. 3 illustrates an example timing diagram for image capture using a camera with one or more visible indicators configured to emit light through a lens of the camera. In some examples, the camera is included in a wearable device and is configured to capture image data of a physical environment. The visible indicators may be activated in response to an operational state of the camera, such as a still-image capture state, a burst-image capture state, or a video-capture state. In connection with still-image capture or short burst capture, common-aperture outward-facing illumination may occur before and after a frame exposure or a burst of exposures. The camera sensor may detect the illumination before and after the exposure or burst of exposures to verify that the visible indicators were active and operating as expected during the image-capture operation.

In some examples represented by FIG. 3, common-aperture outward-facing illumination may also be coordinated with video capture. For example, visible-indicator illumination may occur before and after a video capture interval, and a different outward-facing indicator may be used during the video capture interval. In other examples, common-aperture outward-facing illumination may occur during video capture by temporally dithering or modulating the illumination between image-capture exposures. The camera sensor may detect the illumination frame by frame, at selected intervals, or at a beginning or end of a video clip to verify operation of the visible indicators. A global-shutter sensor may facilitate this timing because exposure and readout can occur during distinct intervals, although a rolling-shutter sensor may also be used with appropriate exposure timing, frame-rate settings, and illumination timing. The illumination may occur between every exposure or less frequently, such as at a selected pulse rate, based on an intended appearance to bystanders and based on image-quality constraints. When the illumination occurs in between every frame exposure, the overall video framerate may exceed the flicker fusion rate (varies depending on ambient illumination, illuminator brightness, and illuminator duty cycle). In some circumstances, camera operation exceeds 90 frames per second to mitigate visible flicker.

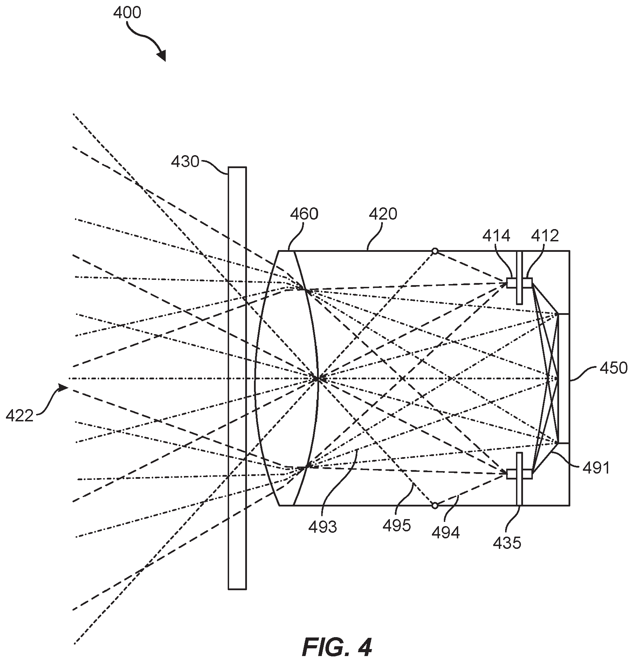

FIG. 4 illustrates an example system including light-emitting diode (LED) visible indicators illuminating through a lens of a camera to emit directionally distributed light. In the illustrated system 400, the camera lens 460 located within lens barrel 420 operates both as an imaging optic for the camera and as a projection optic for outward-facing indicator light. In this illustration, for ease of visibility of chief and marginal rays, the camera lens 460 is depicted as a singlet lens (one element). In practice, this field-varying illumination can be accomplished with high performance multi-element camera lenses. Rather than uniformly floodlighting the lens barrel 420, the visible indicators may be arranged to produce field-selective illumination 422 using the camera lens 460. For example, LEDs may be positioned around or near a baffle 435 located near an image-sensor plane or another optical plane associated with the camera. A first LED or set of LEDs 412 may direct light toward an image sensor 450 or toward one or more structures near the image sensor, and the resulting scattered light may propagate outward through the camera lens 460 and cover window 430. Light emitted from the first LED 412 may include output light 491 directed toward the image sensor 450 and sensor scattered light 493. A second LED or set of LEDs 414 may direct light toward the lens 460 from another side of the baffle 435. Light emitted from the second LED 414 may include output light 494 and scattered light 495. Because the baffle is located near a field stop or another optical plane associated with a field of view of the camera, the baffle may shape an angular distribution of light emitted through the lens.

In some examples, light emitted through a central region of the camera may correspond to an in-field-of-view indication, while light emitted from regions around or outside the baffle may correspond to an outside-field-of-view indication. The different indications may be distinguished by color, intensity, temporal modulation, spatial pattern, or another visible characteristic.

The LEDs may be discrete components mounted on a sensor printed circuit board, integrated into a custom LED array that is coplanar with or near the image sensor, integrated into the sensor array (fraction of pixels emit light), or otherwise positioned within or near the camera assembly. In some examples, the LEDs may include independently controllable multicolor LEDs, fixed-color LEDs arranged at different positions, or one or more emitters coupled to optical structures that spread, redirect, or otherwise tailor the emitted illumination.

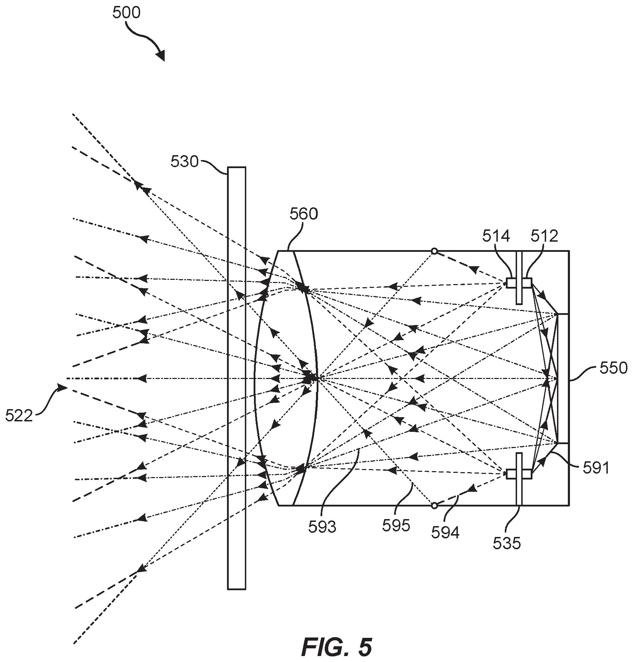

FIG. 5 illustrates example LED visible indicators illuminating through a lens of a camera to emit directionally distributed light corresponding to different fields of view. In the illustrated system 500, visible indicators 512, 514 separated by baffle 535 are controlled so that bystanders within a field of view of the camera perceive a first visible indication and bystanders outside the field of view perceive a second visible indication.

Light emitted from the first visible indicator 512 may include output light 591 directed toward an image sensor 550 and sensor scattered light 593. The second visible indicator 514 may direct light toward lens 560. Light emitted from the second visible indicator 514 may include output light 594 and subsequently scattered light 595.

The first visible indicator light and the second visible indicator light may differ in color, intensity, modulation, pulse timing, or another visible characteristic. For example, a first color (emitted by first visible indicator 512) may indicate that a bystander is within a capture zone of the camera, while a second color (emitted by second visible indicator 514) may indicate that the camera is active but that the bystander is outside the capture zone. The particular colors are implementation examples and may be selected according to design requirements.

In some examples represented by FIG. 5, the directional illumination pattern 522 emitted through the lens 560 and cover window 530 may include a transition region between an in-field-of-view indication and an outside-field-of-view indication. The transition region may include blended colors, intermediate intensities, mixed modulation patterns, or another gradual visual transition. Such a transition region may account for optical blur, defocus at a projected field boundary, lens distortion, alignment tolerances, movement of a bystander, or other factors that affect the angular relationship between the camera field of view and the projected indicator pattern. The angular resolution of the field-selective illumination may depend on a number of LEDs, spacing between the LEDs, a focal length of the lens, a position of the baffle, and any additional optical components used to shape or blend the emitted illumination.

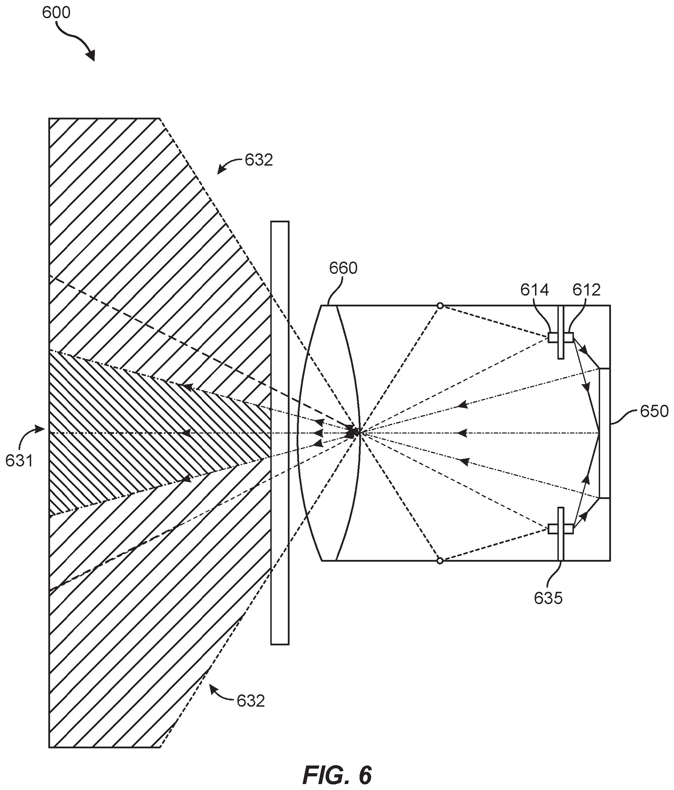

FIG. 6 illustrates example LED visible indicators illuminating through a lens of a camera in a manner corresponding to a field of view of the camera and one or more regions outside the field of view. Camera system 600 includes first and second visible indicators 612, 614 separated by baffle 635, an image sensor 650, a lens 660, and a cover window 630 overlying the lens 660.

In some examples, the light emitted through the camera lens 660 includes a first portion 631 associated with the camera field of view and a second portion 632 associated with regions outside the camera field of view. The first portion 631 may be visible to observers located within the field of view, while the second portion 632 may be visible to observers located outside the field of view. This arrangement may communicate not only that the camera is active, but also whether a particular observer is positioned within a region being captured or capable of being captured by the camera.

In some examples represented by FIG. 6, high-angle outward illumination may be produced by lens barrel side-wall reflections, by separate light sources integrated into the lens barrel, by light pipes integrated into the lens barrel, or by other optical structures configured to direct light into regions outside the field of view. Illumination corresponding to the field of view may be produced by light scattered from the image sensor 650 or from structures near the image sensor, by light passing through a central region associated with a baffle, by light emitted from the sensor plane, by light emitted from a transparent waveguide illuminator, or by other light paths through the camera lens. Once a desired illumination distribution is selected, the distribution may be produced using LEDs, lenses, diffusers, masks, light pipes, waveguides, reflective surfaces, and/or other optical components configured to tailor the angular profile of the emitted light.

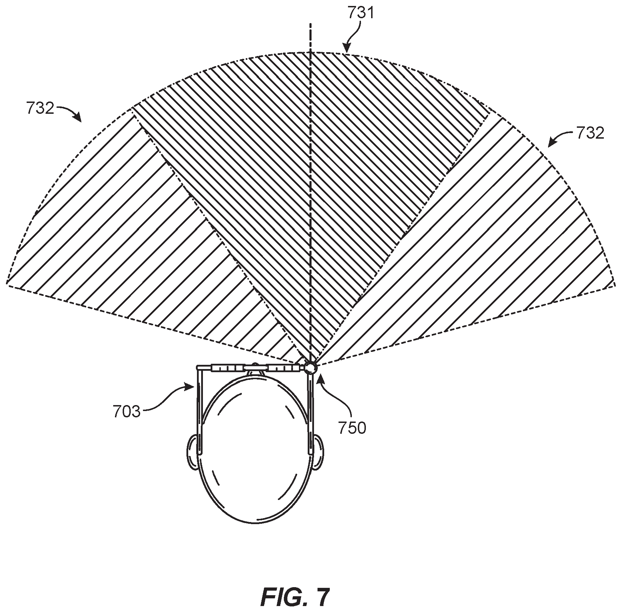

FIG. 7 illustrates an example observer visibility arrangement corresponding to a user's field of view and regions outside of the user's field of view. The environment of FIG. 7 includes a user donning a pair of glasses 703 including a camera 750 with field-selective common-pupil outward illumination. In some examples, an observer located within the camera field of view 731 sees a first indication, such as a first color, signaling that the observer is within a region being photographed or recorded. An observer located outside the camera field of view 732, but within a forward region from which the camera or wearable device is visible, may see a second indication, such as a second color, signaling that the camera is active but that the observer is not within the camera field of view. An observer located near a boundary of the field of view may see a mixed or intermediate indication corresponding to a transition region between the first indication and the second indication.

The arrangements shown in FIGS. 3-7 may provide outward-facing camera-state signaling that is tamper-resistant, verifiable, compact, and informative to bystanders. Because the indicator illumination may share the same optical aperture as the camera, blocking the indicator may also block the camera. Because the indicator illumination elements may share the same external cover window or cover lens as the camera, mechanical disruption of the cover window or cover lens to interfere with illumination elements may also destroy or disrupt the functionality of the camera. Because the camera sensor may detect the emitted indicator light during verification frames or verification intervals, the wearable device may confirm that the visible indicators are functioning and have not been disabled, moved, obstructed, or otherwise tampered with. Because the camera lens may operate as both an imaging optic and a projection optic, additional outward-facing apertures or windows may be reduced or omitted. Because the emitted light may be directionally distributed, bystanders may receive information indicating whether they are within or outside a capture zone of the camera.

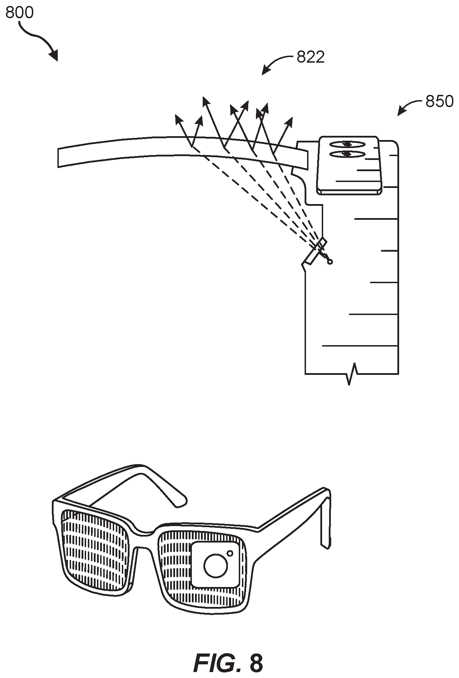

FIG. 8 illustrates a portion of a device 800 with camera 850 and having outward-facing static holograms (or "stencils"), in accordance with some examples. Stencils are static volume holograms played back with one or more of LEDs, lasers, and/or VCSELs. In some examples, inward-facing stencil images are directed forward and are intended to communicate the state of the imaging device (e.g., still photo capture, recording video, etc.) and/or other device (e.g., microphone is active, stream is live, etc.). In some examples, inward-facing stencils have approximately 1 m VID.

Outward-facing stencils can have a virtual image position near a plane of the wearable device (e.g., a head-wearable device, such as glasses) and are configured to project light 822 outward toward an observer. In some examples, the outward-facing stencils are illuminated from one or more portions of a head-wearable device (e.g., from a temple arm and/or from within the lens). In some examples, the outward-facing stencils are different over a FOV indicating to bystanders when they are within the FOV. For example, a large camera application stencil can be seen by a bystander when they are within the FOV of the imaging device. Alternatively, or in addition, in some examples, the outward-facing stencils include device-specific information (e.g., unique QR code) intended for pairing, social-media sharing information (e.g., profile or username information), etc.

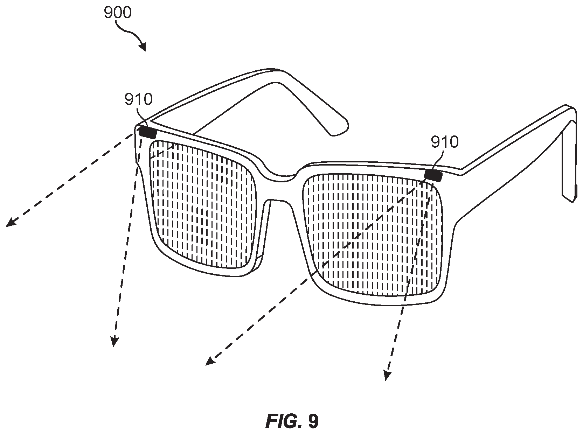

In some examples, as illustrated in FIG. 9, a system 900 may include a flashlight component 910. Contextually-aware glasses-mounted flashlights could perform as well or better than headlamps, adjusting brightness and direction based on distance to foreground objects, light level, etc. In one examples, these adjustments may be performed via optical beam forming. Common drawbacks of headlamps - such as shining into other people's eyes - could be avoided by including a camera in the loop. The systems described herein may use several ways to direct/steer the illumination. Other functions may include an auto-adjusting reading lamp, camera flash, and/or outward-facing indicator light.

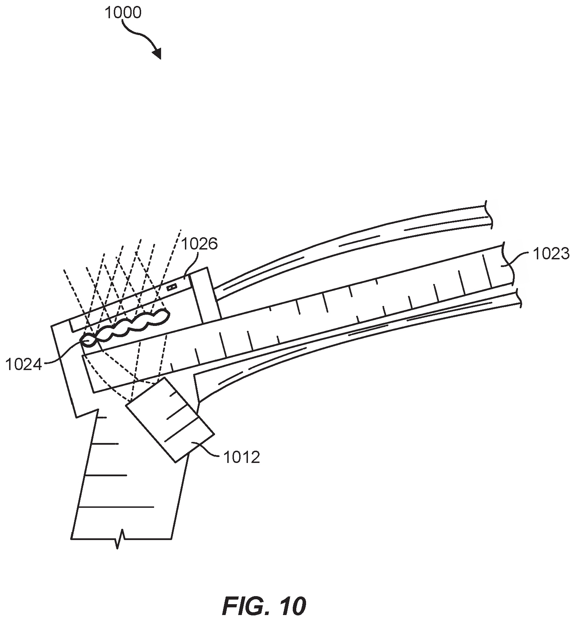

FIG. 10 illustrates a wearable device having an outward facing indicator that indicates when the device display is ON, in accordance with some examples. When bystanders interact with a user of a head-wearable device, it may not be apparent when they are looking at AR content. In some examples, a head-wearable device 1000 includes a light engine 1012 located on the eye side where geometric reflecting waveguide, volume Bragg grating waveguide, polarization hologram waveguide, or a surface relief grating (SRG) waveguide 1023 partially in-couples a fraction of projector light with the remainder passing through a waveguide or reflected back toward the light engine. Such head-wearable devices may use a microlens array 1024 or engineered diffuser placed on the world side of the waveguide such that content presented via a display is anonymized (scrambled) and redirected into a cone that includes bystanders. In some examples, a switchable dimmer 1026 may be used to allow the user to block this forward indication.

In some examples, the systems described herein may include smart sunglasses. In one examples, smart sunglasses may include one or more dimming panels with either low diffraction or diffraction spikes randomized into a low-intensity halo, a wide-angle HDR camera and/or wide-angle PSD - IMU (e.g., for reacting to head rotation between camera frames), and/or pupil tracking to enable blocking in the correct direction. For example, smart sunglasses may include global dimming panels and/or pixelated dimming panels. In one example, a pixelated dimming panel may dim only a portion of the viewing area, such as the current direction of the sun, while leaving the remainder of the area undimmed.

In some examples, the systems described herein may include animated LEDs. By way of example, a head-wearable device can include a plurality of outward-facing LEDs disposed on different portions of the frame, temple arms, or other portions of the body of the head-wearable device. The LEDs can be used to convey information to the user and/or present (outward-facing and/or inward-facing) animations. In some examples, the animations are selectable or configurable by a user to allow customization of the head-wearable device and/or definition of the type of information to display.

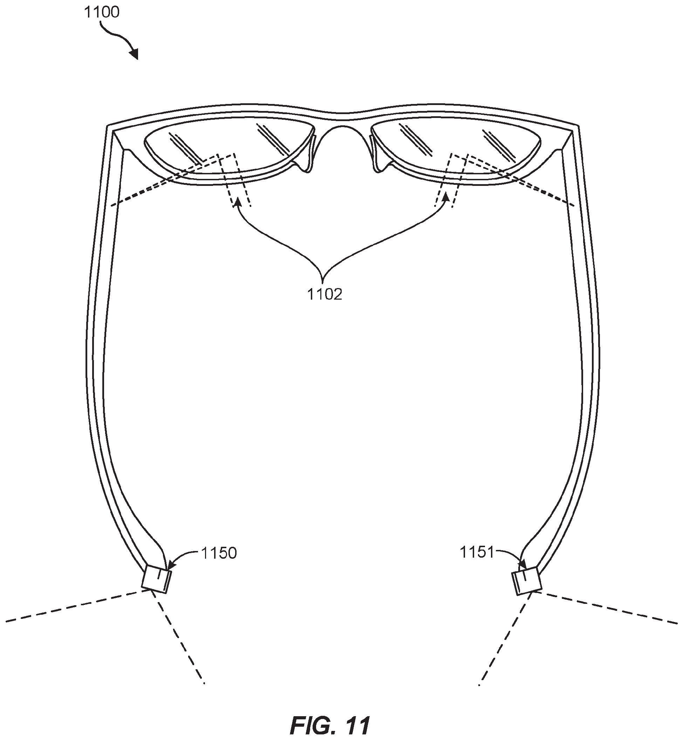

In some examples, the systems described herein may include a rear-view device. For example, as illustrated in FIG. 11, a system 1100 may use an off-axis holographic display 1102 imaging a display in the temple arm or nose piece of smart glasses and rear-facing cameras. One or more rear-facing cameras 1150, 1151 may be located in the wearable device itself or in ancillary devices connected via wired and/or wireless connections. In some examples, the rear-view additive display may be on all the time, activated by eye gaze, or only turned on when certain objects are approaching (e.g., a vehicle or a person).

In some examples, a pair of smart glasses may have at least one external camera with a FOV that directly feeds an internal display that increases the effective FOV of the user. In one example, this may include a single camera with a FOV that matches the single display FOV. In some examples, the combination of the camera and display may provide additional FOV content to the user. In one example, a single camera with a wider FOV than the display may adjust what is displayed based on attributes of the image. Additionally, or alternatively, a single wide FOV camera may capture a rear view that is subsequently split between two displays on the periphery of glasses, acting as rear-view mirrors.

In some examples, a rear-view camera or the associated display may be activated by motion, radar or another active attribute. For example, a display may appear when the device detects that a car is approaching the user. Additionally, or alternatively, the camera and/or display may be activated manually. In some examples, the systems described herein may include a user means of selectively adjusting the FOV that is displayed.

In some examples, substantially rear facing cameras may be built into wearable glasses, for example, addended to the arms of the glasses' frames. Additionally, or alternatively, a wearable device may receive data from add-on cameras that interface wirelessly. In one example, a mechanical/electrical interface on the frame may connect add on-cameras such that they are mechanically and/or electrically connected to the glasses or other device, where electrical connections allow for power to be transferred in either direction. In one example, electrical connections may be for digital or analog signal transfer in either direction.

In some examples, the add on camera(s) may be interfaced in the form of a lanyard attachment to the glasses frame. In some examples, the lanyard may contain electronics to manage the camera and/or display data. In one example, the lanyard may contain a supplemental battery that powers at minimum the cameras and/or may supplement the glasses' battery.

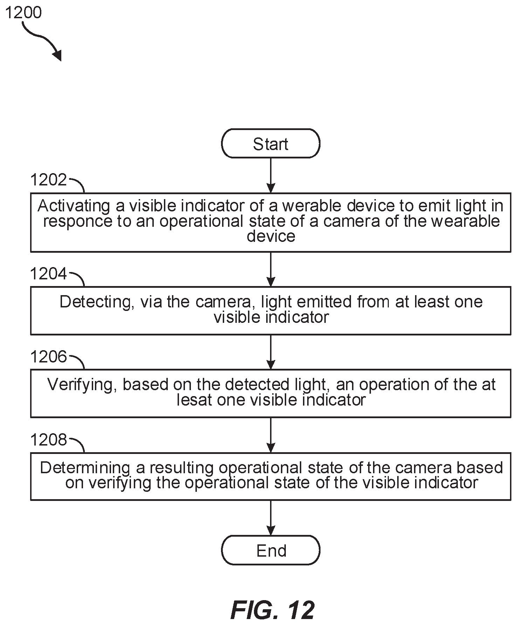

In accordance with certain examples, and with reference to FIG. 12, a method 1200 may include activating a visible indicator of a wearable device to emit light in response to an operational state of a camera of the wearable device (block 1202), detecting, via the camera, light emitted from at least one visible indicator (block 1204), verifying, based on the detected light, an operation of the at least one visible indicator (block 1206), and determining an operational state of the camera based on the detected light from at least one visible indicator (block 1208).

In example examples, a method performed at a head-wearable device occurs at a head-wearable device with one or more imaging devices, one or more illumination devices, and one or more displays. Each illumination device is associated with a respective imaging device of the one or more imaging devices, disposed within a predetermined distance of the respective imaging device of the one or more imaging devices, configured to project an outward-facing light, and illuminated without interfering with image data capture of the respective imaging device of the one or more imaging devices.

In some examples, a method includes in accordance with a determination that an imaging device is active and an imaging device indicator is unobstructed, enabling capture of image data via the imaging device. In some examples, the method includes in accordance with a determination that the imaging device is active and the imaging device indicator is obstructed, disabling capture of image data via the imaging device.

In some examples, the illumination device is a light ring surrounding an outer perimeter of the respective imaging device of the one or more imaging devices, and the illumination device is adjacent to a cover window of the respective imaging device of the one or more imaging devices. For example, as shown in and described in reference to FIG. 1A, around-the-lens indicator LEDs can be disposed around a cover window of an imaging device.

In some examples, the illumination device is a light ring surrounding an outer perimeter of the respective imaging device of the one or more imaging devices, and the illumination device is underneath a cover window of the respective imaging device of the one or more imaging devices. For example, as shown in and described in reference to FIG. 1B, around-the-lens indicator LEDs can be disposed beneath a cover window of an imaging device.

In some examples, the illumination device surrounds an outer perimeter of the respective imaging device of the one or more imaging devices, and the illumination device projects a light through a lens of the respective imaging device of the one or more imaging devices. For example, as shown in and described in reference to FIG. 2, through-the-lens indicator LEDs can floodlight the inside of a lens barrel of an imaging device.

In some examples, the illumination device is disposed adjacent to the respective imaging device of the one or more imaging devices, and the illumination device projects a light within and/or outside a field-of view of the respective imaging device. For example, an external field-of-view (FOV) indicator can be illuminated based on a field-of-view of an imaging device.

In some examples, the illumination device is an outward-facing stencil disposed adjacent to the respective imaging device of the one or more imaging devices, and the illumination device projects a stencil on a display surface or a glass surface of the head-wearable device. For example, as shown in and described in reference to FIG. 8, different outward-facing stencils can be presented to (or visible by) a bystander based on the bystander's position with respect to an FOV an imaging device.

In some examples, the illumination device is a contextually-aware glasses-mounted flashlight, such as shown and described in reference to FIG. 9.

In some examples, the head-wearable device includes a microlens array or engineered diffuser disposed on the world side of a waveguide of the head-wearable device such that content presented via a display is anonymized. Examples of the microlens array are shown in and described in reference to FIG. 10.

As used herein, the term "wearable device" may refer to any device configured to be worn by a user and including at least one camera and at least one visible indicator associated with operation of the camera. Examples of wearable devices include, without limitation, smart glasses, head-wearable devices, eyewear devices, wrist-wearable devices, glove-based devices, and other body-worn electronic devices including imaging capability. In some examples, a wearable device includes at least one processor, at least one memory, and one or more optical or illumination components associated with the camera and the visible indicator.

As used herein, the term "visible indicator" may refer to any device, structure, or arrangement configured to emit visible light that is perceivable by an observer and that corresponds to an operational state of a camera. Examples of visible indicators include, without limitation, light emitting diodes (LEDs), waveguide-based illumination structures, and other light-emitting elements arranged adjacent a cover window, beneath a cover window, or along an optical path of the camera. In some examples, a visible indicator is configured to emit light that is also detectable by the camera for verification of indicator operation.

As used herein, the term "operational state" may refer to any state associated with operation of a component, such as a camera. Examples of operational states include, without limitation, inactive states, ready states, active states, image capture states, burst image capture states, video capture states, verified states, and unverified states. In some examples, an operational state of the camera is determined based at least in part on a verified or detected operational state of the visible indicator.

As used herein, the term "optical path" may refer to a path along which light propagates within, toward, or through a camera system or other optical system. In some examples, the optical path extends through a cover window and a lens assembly toward an image sensor. In some examples, light emitted by a visible indicator travels along, overlaps with, or is injected into the optical path such that the camera may detect the emitted light and verify operation of the visible indicator. In other examples, light emitted by the visible indicator propagates along a path external to or adjacent to the optical path for outward visibility to observers without being detected by the camera.

As used herein, the term "directionally distributed" may refer to light being emitted or otherwise provided with an angular distribution such that different portions of the light are directed to different regions or different observers. In some examples, directionally distributed light includes a first portion corresponding to a field of view of a camera and a second portion corresponding to at least one region outside the field of view. In some examples, the different portions of the light differ in color, intensity, modulation, or a combination thereof.

As used herein, the term "global shutter" may refer to a shutter arrangement in which image information corresponding to a plurality of sensing locations of an image sensor is captured during a common capture interval. In some examples, a camera including a global shutter captures substantially all pixels of a frame at substantially the same time. In some examples, use of a global shutter facilitates detection of light emitted by a visible indicator between successive captured frames.

As used herein, the term "rolling shutter" may refer to a shutter arrangement in which image information corresponding to different sensing locations of an image sensor is captured at different respective times. In some examples, a rolling shutter reads out or exposes different rows or regions of the image sensor sequentially. In some examples, light emitted by a visible indicator is modulated relative to frame timing of a rolling-shutter camera to facilitate verification of the visible indicator while reducing interference with captured image data.

As used herein, the term "baffle" may refer to a structure configured to separate, block, guide, or otherwise control propagation of light between different regions of an optical system. Examples of baffles include, without limitation, partitions, walls, barriers, shields, and other light-management structures positioned relative to one or more light emitters and a camera. In some examples, a baffle is located substantially parallel to an image sensor and separates light corresponding to a field of view from light corresponding to at least one region outside the field of view.

As used herein, the term "image capture event" may refer to any occurrence in which a camera captures image data. Examples of image capture events include, without limitation, capture of a single still image, capture of an individual image in a burst of image capture events, and capture of an image frame used in connection with verification of visible-indicator operation. In some examples, light emitted by a visible indicator is provided before and after an image capture event or during a readout period associated with image capture.

As described herein, a "processor" (e.g., a central processing unit (CPU) or microcontroller unit (MCU)), is an electronic component that is responsible for executing instructions and controlling the operation of an electronic device (e.g., a wrist-wearable device, a head-wearable device, a handheld intermediary processing device (HIPD), a smart textile-based garment, or other computer system).

Various types of processors may be used interchangeably or as specifically required by examples described herein. For example, a processor may be (i) a general processor designed to perform a wide range of tasks, such as running software applications, managing operating systems, and performing arithmetic and logical operations; (ii) a microcontroller designed for specific tasks such as controlling electronic devices, sensors, and motors; (iii) a graphics processing unit (GPU) designed to accelerate the creation and rendering of images, videos, and animations (e.g., VR animations, such as three-dimensional modeling); (iv) a field-programmable gate array (FPGA) that can be programmed and reconfigured after manufacturing and/or customized to perform specific tasks, such as signal processing, cryptography, and machine learning; or (v) a digital signal processor (DSP) designed to perform mathematical operations on signals such as audio, video, and radio waves. One of skill in the art will understand that one or more processors of one or more electronic devices may be used in various examples described herein.

As used herein, "controllers" are electronic components that manage and coordinate the operation of other components within an electronic device (e.g., controlling inputs, processing data, and/or generating outputs). Example controllers include (i) microcontrollers, including small, low-power controllers that are commonly used in embedded systems and Internet of Things (IoT) devices; (ii) programmable logic controllers (PLCs) that may be configured to be used in industrial automation systems to control and monitor manufacturing processes; (iii) system-on-a-chip (SoC) controllers that integrate multiple components such as processors, memory, I/O interfaces, and other peripherals into a single chip; and/or (iv) DSPs.

As described herein, a "graphics module" is a component or software module that is designed to handle graphical operations and/or processes and can include a hardware module and/or a software module.

As described herein, "memory" refers to electronic components in a computer or electronic device that store data and instructions for the processor to access and manipulate. The devices and systems described herein can include volatile and non-volatile memory. Examples of memory can include (i) random access memory (RAM), such as DRAM, SRAM, DDR RAM or other random access solid state memory devices, configured to store data and instructions temporarily; (ii) read-only memory (ROM) configured to store data and instructions permanently (e.g., one or more portions of system firmware and/or boot loaders); (iii) flash memory, magnetic disk storage devices, optical disk storage devices, other non-volatile solid state storage devices, which can be configured to store data in electronic devices (e.g., universal serial bus (USB) drives, memory cards, and/or solid-state drives (SSDs)); and (iv) cache memory configured to temporarily store frequently accessed data and instructions. Memory, as described herein, can include structured data (e.g., SQL databases, MongoDB databases, GraphQL data, or JSON data). Other examples of memory can include (i) profile data, including user account data, user settings, and/or other user data stored by the user; (ii) sensor data detected and/or otherwise obtained by one or more sensors; (iii) media content data including stored image data, audio data, documents, and the like; (iv) application data, which can include data collected and/or otherwise obtained and stored during use of an application; and/or (v) any other types of data described herein.

As used herein, a "power system" of an electronic device is configured to convert incoming electrical power into a form that can be used to operate the device. A power system can include various components, including (i) a power source, which can be an alternating current (AC) adapter or a direct current (DC) adapter power supply; (ii) a charger input that can be configured to use a wired and/or wireless connection (which may be part of a peripheral interface, such as a USB, micro-USB interface, near-field magnetic coupling, magnetic inductive and magnetic resonance charging, and/or radio frequency (RF) charging); (iii) a power-management integrated circuit, configured to distribute power to various components of the device and ensure that the device operates within safe limits (e.g., regulating voltage, controlling current flow, and/or managing heat dissipation); and/or (iv) a battery configured to store power to provide usable power to components of one or more electronic devices.

As described herein, "peripheral interfaces" are electronic components (e.g., of electronic devices) that allow electronic devices to communicate with other devices or peripherals and can provide a means for input and output of data and signals. Examples of peripheral interfaces can include (i) USB and/or micro-USB interfaces configured for connecting devices to an electronic device; (ii) Bluetooth interfaces configured to allow devices to communicate with each other, including Bluetooth low energy (BLE); (iii) near-field communication (NFC) interfaces configured to be short-range wireless interfaces for operations such as access control; (iv) pogo pins, which may be small, spring-loaded pins configured to provide a charging interface; (v) wireless charging interfaces; (vi) global-positioning system (GPS) interfaces; (vii) Wi-Fi interfaces for providing a connection between a device and a wireless network; and (viii) sensor interfaces.

As described herein, "sensors" are electronic components (e.g., in and/or otherwise in electronic communication with electronic devices, such as wearable devices) configured to detect physical and environmental changes and generate electrical signals. Examples of sensors can include (i) imaging sensors for collecting imaging data (e.g., including one or more cameras disposed on a respective electronic device, such as a simultaneous localization and mapping (SLAM) camera); (ii) biopotential-signal sensors (used interchangeably with neuromuscular-signal sensors); (iii) IMUs for detecting, for example, angular rate, force, magnetic field, and/or changes in acceleration; (iv) heart rate sensors for measuring a user's heart rate; (v) peripheral oxygen saturation (SpO2) sensors for measuring blood oxygen saturation and/or other biometric data of a user; (vi) capacitive sensors for detecting changes in potential at a portion of a user's body (e.g., a sensor-skin interface) and/or the proximity of other devices or objects; (vii) sensors for detecting some inputs (e.g., capacitive and force sensors); and (viii) light sensors (e.g., ToF sensors, infrared light sensors, or visible light sensors), and/or sensors for sensing data from the user or the user's environment. As described herein biopotential-signal-sensing components are devices used to measure electrical activity within the body (e.g., biopotential-signal sensors). Some types of biopotential-signal sensors include (i) electroencephalography (EEG) sensors configured to measure electrical activity in the brain to diagnose neurological disorders; (ii) electrocardiography (ECG or EKG) sensors configured to measure electrical activity of the heart to diagnose heart problems; (iii) EMG sensors configured to measure the electrical activity of muscles and diagnose neuromuscular disorders; (iv) electrooculography (EOG) sensors configured to measure the electrical activity of eye muscles to detect eye movement and diagnose eye disorders.

As described herein, an application stored in memory of an electronic device (e.g., software) includes instructions stored in the memory. Examples of such applications include (i) games; (ii) word processors; (iii) messaging applications; (iv) media-streaming applications; (v) financial applications; (vi) calendars; (vii) clocks; (viii) web browsers; (ix) social media applications; (x) camera applications; (xi) web-based applications; (xii) health applications; (xiii) AR and MR applications; and/or (xiv) any other applications that can be stored in memory. The applications can operate in conjunction with data and/or one or more components of a device or communicatively coupled devices to perform one or more operations and/or functions.

As described herein, communication interface modules can include hardware and/or software capable of data communications using any of a variety of custom or standard wireless protocols (e.g., IEEE 802.15.4, Wi-Fi, ZigBee, 6LoWPAN, Thread, Z-Wave, Bluetooth Smart, ISA100.11a, WirelessHART, or MiWi), custom or standard wired protocols (e.g., Ethernet or HomePlug), and/or any other suitable communication protocol. A communication interface is a mechanism that enables different systems or devices to exchange information and data with each other, including hardware, software, or a combination of both hardware and software. For example, a communication interface can refer to a physical connector and/or port on a device that enables communication with other devices (e.g., USB, Ethernet, HDMI, or Bluetooth). A communication interface can refer to a software layer that enables different software programs to communicate with each other (e.g., APIs and protocols such as HTTP and TCP/IP).

As described herein, a "graphics module" is a component or software module that is designed to handle graphical operations and/or processes and can include a hardware module and/or a software module.

As described herein, "non-transitory computer-readable storage media" are physical devices or storage medium that can be used to store electronic data in a non-transitory form (e.g., such that the data is stored permanently until it is intentionally deleted and/or modified).

The systems and method disclosed herein may provide improved safety, privacy, security, and/or social acceptability when capturing data using wearable devices, such a head-wearable device. In some embodiments, the systems and methods disclosed herein provide improvements for capturing image data using an imaging device. Non-limiting examples of the systems and methods disclosed herein include around-the-lens indicator light-emitting diodes (LEDs); through-the-lens indicator LEDs; external field-of-view (FOV) indicator (e.g., LEDs, mask, and/or optics); outward-facing stencils (e.g., static volume holograms played back with one or more LEDs, lasers, and/or Vertical Cavity Surface Emitting Lasers (VCSELs)); smart flashlight; outward indication that display is ON; smart sunglasses; and animated LEDs.

In some embodiments, head-wearable device can include structured light or other depth sensor. If the indicator illumination is common path with depth sensors, this can guarantee that the illumination is on and not blocked. Additionally, the depth sensor can detect whether it is being covered.

In some embodiments, head-wearable device can include leaky fiber as an alternative to LEDs. A single fiber woven throughout the frames would be difficult to block.

In some embodiments, head-wearable device can include LED and privacy film for angle-selective indication (e.g., indicate to outside observers whether they are within a FOV of an imaging device).

In some embodiments, head-wearable device can include stencils or other difficult-to-spoof light patterns to set up pairing or indicate which devices are "trusted."

In some embodiments, head-wearable device can include a stereo imaging device pair (e.g., stereo camera pair), which allow for depth data detection. The depth data can be used for distance, slope, and/or other measurements that can be used for controlling illumination of the outward indicators.

Embodiments of the instant disclosure relate to wearable devices having a camera configured to capture image data of a physical environment and at least one visible indicator configured to emit light in response to an operational state of the camera. In some embodiments, the visible indicator includes a light ring adjacent to, or disposed beneath, a cover window of the camera. In some embodiments, the visible indicator emits light along an optical path of the camera through a lens assembly, and the camera detects the emitted light to verify operation of the visible indicator. A resulting operational state of the camera may be determined based on the detected light. Indicator emission may occur before or after image capture events, during readout periods between successive frames, or in a modulated manner during video capture. In some embodiments, emitted light is directionally distributed so that a first portion corresponds to a field of view of the camera and a second portion corresponds to a region outside the field of view.

### Example Embodiments

Example 1: A wearable device includes a camera configured to capture image data of a physical environment, and a visible indicator configured to emit light in response to an operational state of the camera.

Example 2: The wearable device of Example 1, where the visible indicator includes a light ring adjacent to a cover window or cover lens of the camera.

Example 3: The wearable device of any of Examples 1 and 2, where the visible indicator includes a light ring disposed beneath a cover window or cover lens of the camera.

Example 4: The wearable device of any of Examples 1-3, where the visible indicator is configured to emit the light along an optical path of the camera through a lens assembly in response to the operational state of the camera, the camera is configured to detect the light emitted by the visible indicator along the optical path to verify operation of the visible indicator, and an operational state of the camera is determined based on the detected light.

Example 5: The wearable device of Example 4, where the visible indicator is configured to emit the light along the optical path of the camera through the lens assembly before and after an image capture event.

Example 6: The wearable device of any of Examples 4 and 5, where the visible indicator is configured to emit the light along the optical path of the camera through the lens assembly during a readout period between successive frames of image capture.

Example 7: The wearable device of any of Examples 1-6, further including a second visible indicator different from the visible indicator, where the visible indicator is configured to emit the light along an optical path of the camera through a lens assembly before and after video capture by the camera in response to the operational state of the camera, where the second visible indicator is configured to emit second light during the video capture, where the camera is configured to detect the light emitted by the visible indicator along the optical path to verify operation of at least one of the visible indicator or the second visible indicator, and where an operational state of the camera is determined based on detected light from at least one of the visible indicator or the second visible indicator.

Example 8: The wearable device of any of Examples 1-7, where the visible indicator is configured to emit the light along an optical path of the camera through a lens assembly during video capture by the camera in a modulated manner between successive frames of the video capture in response to the operational state of the camera, the camera is configured to detect the light emitted by the visible indicator along the optical path to verify operation of the visible indicator, and an operational state of the camera is determined based on the detected light.

Example 9: The wearable device of Example 8, where the visible indicator is configured to emit the light at an emission frequency less than a frame rate of the video capture.

Example 10: The wearable device of any of Examples 8 and 9, where the camera includes a global shutter or a rolling shutter.

Example 11: The wearable device of any of Examples 1-10, where the visible indicator is configured to emit the light along an optical path of the camera through a lens assembly, and the light is directionally distributed such that a first portion of the light corresponds to a field of view of the camera and is visible to observers within the field of view, and a second portion of the light corresponds to at least one region outside the field of view and is visible to observers outside the field of view.

Example 12: The wearable device of Example 11, where the first portion of the light and the second portion of the light differ in at least one of color, intensity, or modulation.

Example 13: The wearable device of any of Examples 11 and 12, where the visible indicator includes a plurality of light emitters disposed over a baffle that is parallel to an image sensor of the camera, the baffle is configured to separate light corresponding to the field of view from light corresponding to the at least one region outside the field of view, a first set of light emitters of the plurality of light emitters is configured to direct light toward the image sensor such that the light directed toward the image sensor is scattered through the lens assembly, and a second set of light emitters of the plurality of light emitters is configured to direct light toward the lens assembly from a side of the baffle opposite the image sensor.

Example 14: The wearable device of any of Examples 11-13, where the visible indicator includes one or more optical components configured to shape an angular distribution of the light.

Example 15: The wearable device of any of Examples 11-14, where the visible indicator includes a single light emitter coupled to an illumination spreading structure configured to produce directionally distributed light.

Example 16: A system includes at least one physical processor and physical memory including computer-executable instructions that, when executed by the at least one physical processor, cause the at least one physical processor to: activate a visible indicator to (i) emit light in response to an operational state of a camera, (ii) detect, via the camera, the light emitted by the visible indicator, (iii) verify, based on the detected light, operation of the visible indicator, and (iv) determine an operational state of the camera based on the detected light.

Example 17: A method includes activating a visible indicator of a wearable device to emit light in response to an operational state of a camera of the wearable device, detecting, via the camera, the light emitted by the visible indicator, verifying, based on the detected light, an operation of the visible indicator, and determining an operational state of the camera based on the detected light.

Example 18: The method of Example 17, further including emitting the light from the visible indicator along an optical path of the camera through a lens assembly in response to the operational state of the camera.

Example 19: The method of any of Examples 17 and 18, further including emitting the light from the visible indicator along an optical path of the camera through a lens assembly during video capture by the camera in a modulated manner between successive frames of the video capture in response to the operational state of the camera.

Example 20: The method of any of Examples 17-19, further including emitting the light from the visible indicator along an optical path of the camera through a lens assembly in a directionally distributed manner such that a first portion of the light corresponds to a field of view of the camera and is visible to observers within the field of view, and a second portion of the light corresponds to at least one region outside the field of view and is visible to observers outside the field of view.

Embodiments of the present disclosure may include or be implemented in conjunction with various types of Artificial-Reality (AR) systems. AR may be any superimposed functionality and/or sensory-detectable content presented by an artificial-reality system within a user's physical surroundings. In other words, AR is a form of reality that has been adjusted in some manner before presentation to a user. AR can include and/or represent virtual reality (VR), augmented reality, mixed AR (MAR), or some combination and/or variation of these types of realities. Similarly, AR environments may include VR environments (including non-immersive, semi-immersive, and fully immersive VR environments), augmented-reality environments (including marker-based augmented-reality environments, markerless augmented-reality environments, location-based augmented-reality environments, and projection-based augmented-reality environments), hybrid-reality environments, and/or any other type or form of mixed- or alternative-reality environments.

AR content may include completely computer-generated content or computer-generated content combined with captured (e.g., real-world) content. Such AR content may include video, audio, haptic feedback, or some combination thereof, any of which may be presented in a single channel or in multiple channels (such as stereo video that produces a three-dimensional (3D) effect to the viewer). Additionally, in some embodiments, AR may also be associated with applications, products, accessories, services, or some combination thereof, that are used to, for example, create content in an artificial reality and/or are otherwise used in (e.g., to perform activities in) an artificial reality.

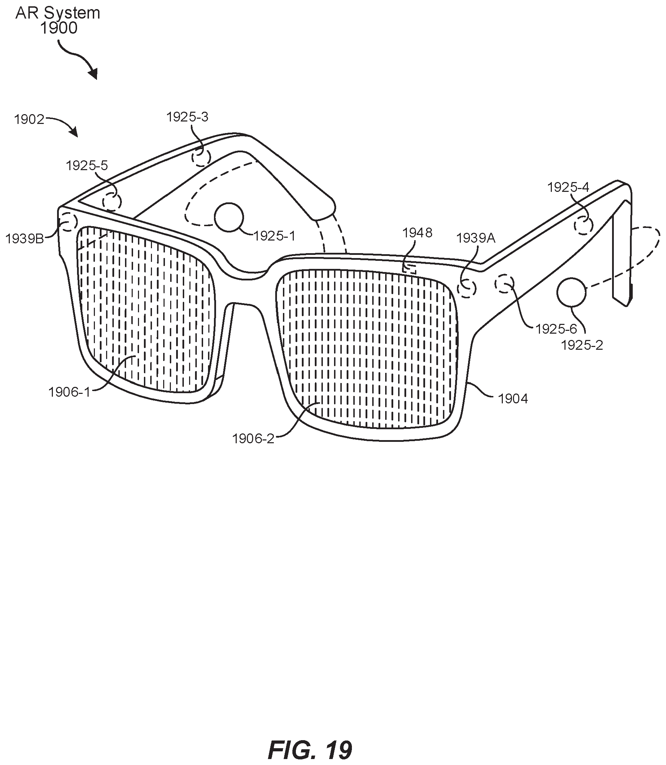

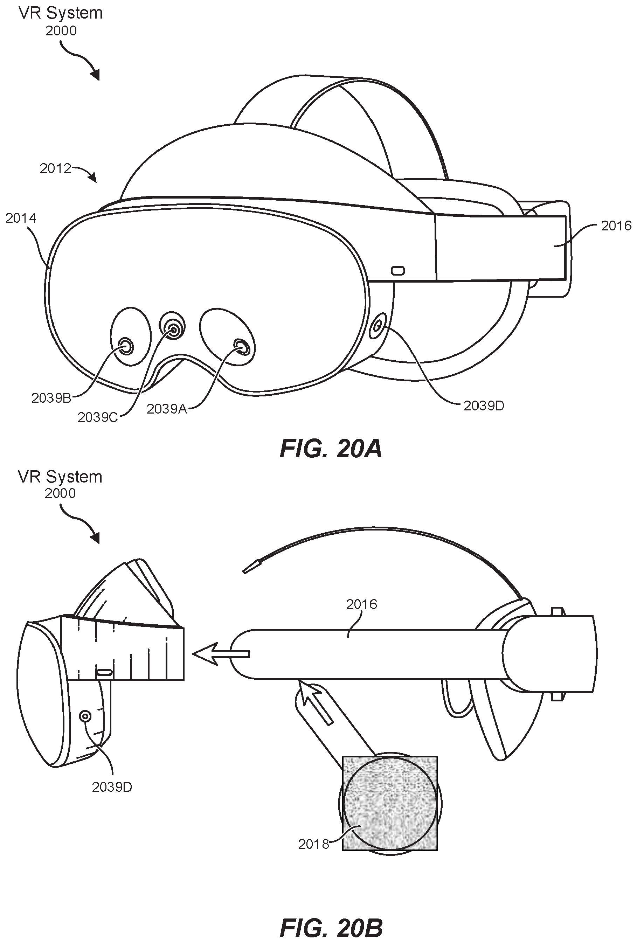

AR systems may be implemented in a variety of different form factors and configurations. Some AR systems may be designed to work without near-eye displays (NEDs). Other AR systems may include a NED that also provides visibility into the real world (such as, e.g., augmented-reality system 1900 in FIG. 19) or that visually immerses a user in an artificial reality (such as, e.g., virtual-reality system 2000 in FIGS. 20A and 20B). While some AR devices may be self-contained systems, other AR devices may communicate and/or coordinate with external devices to provide an AR experience to a user. Examples of such external devices include handheld controllers, mobile devices, desktop computers, devices worn by a user, devices worn by one or more other users, and/or any other suitable external system.

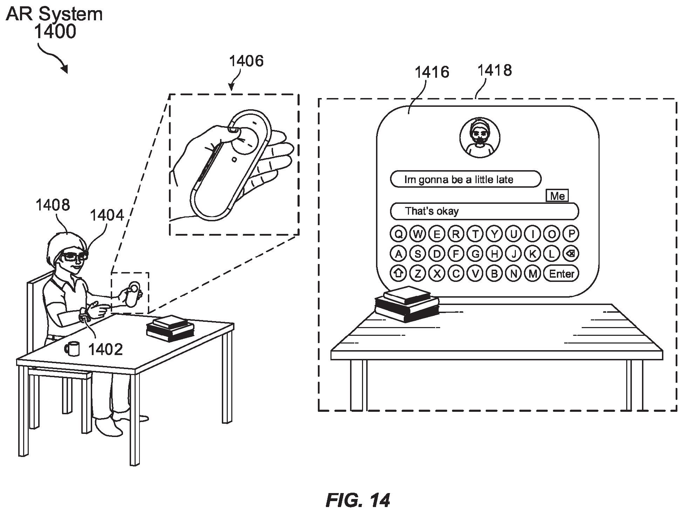

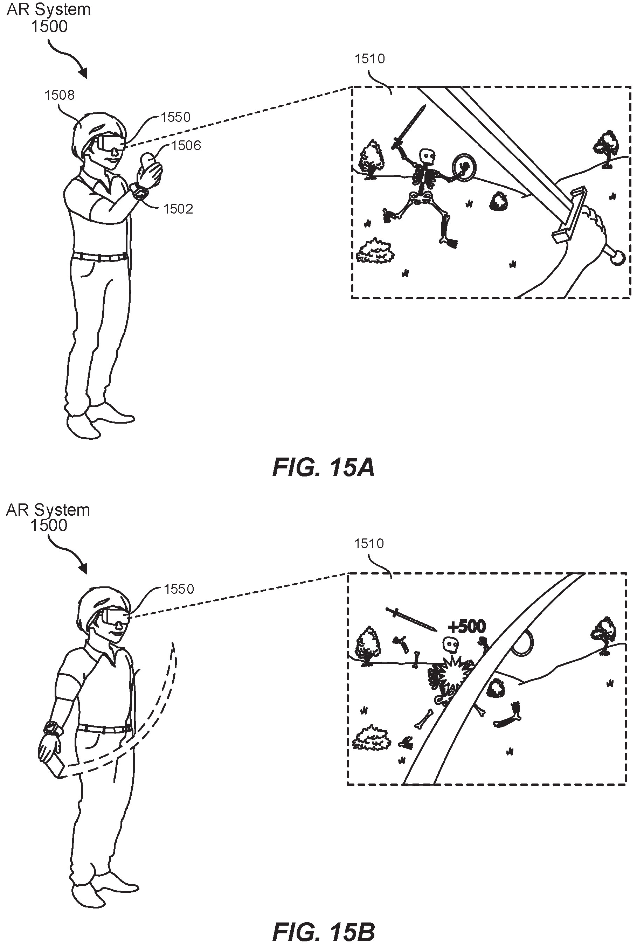

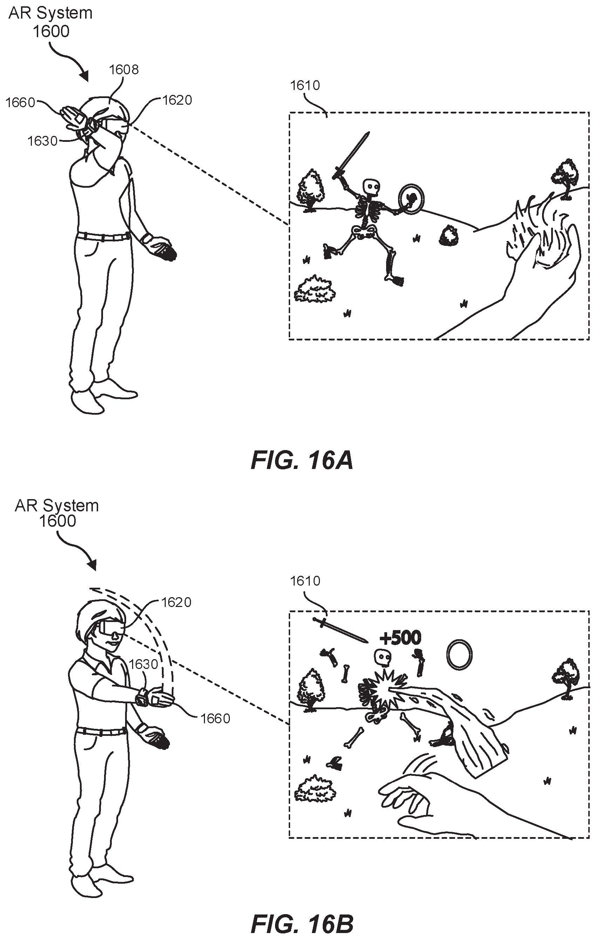

FIGS. 13-16B illustrate example artificial-reality (AR) systems in accordance with some embodiments. FIG. 13 shows a first AR system 1300 and first example user interactions using a wrist-wearable device 1302, a head-wearable device (e.g., AR glasses 1900), and/or a handheld intermediary processing device (HIPD) 1306. FIG. 14 shows a second AR system 1400 and second example user interactions using a wrist-wearable device 1402, AR glasses 1404, and/or an HIPD 1406. FIGS. 15A and 15B show a third AR system 1500 and third example user 1508 interactions using a wrist-wearable device 1502, a head-wearable device (e.g., VR headset 1550), and/or an HIPD 1506. FIGS. 16A and 16B show a fourth AR system 1600 and fourth example user 1608 interactions using a wrist-wearable device 1630, VR headset 1620, and/or a haptic device 1660 (e.g., wearable gloves).

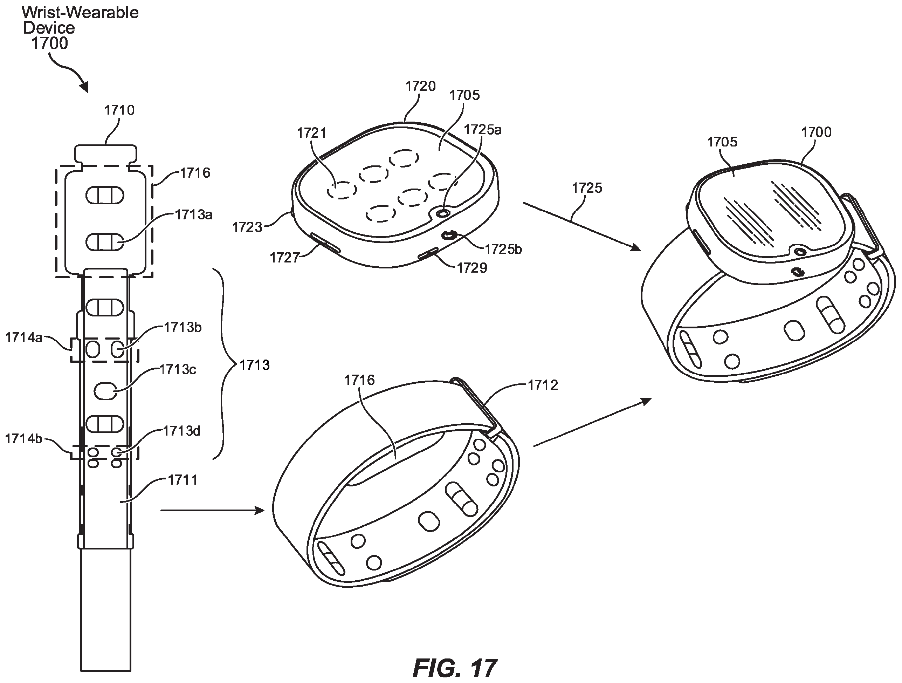

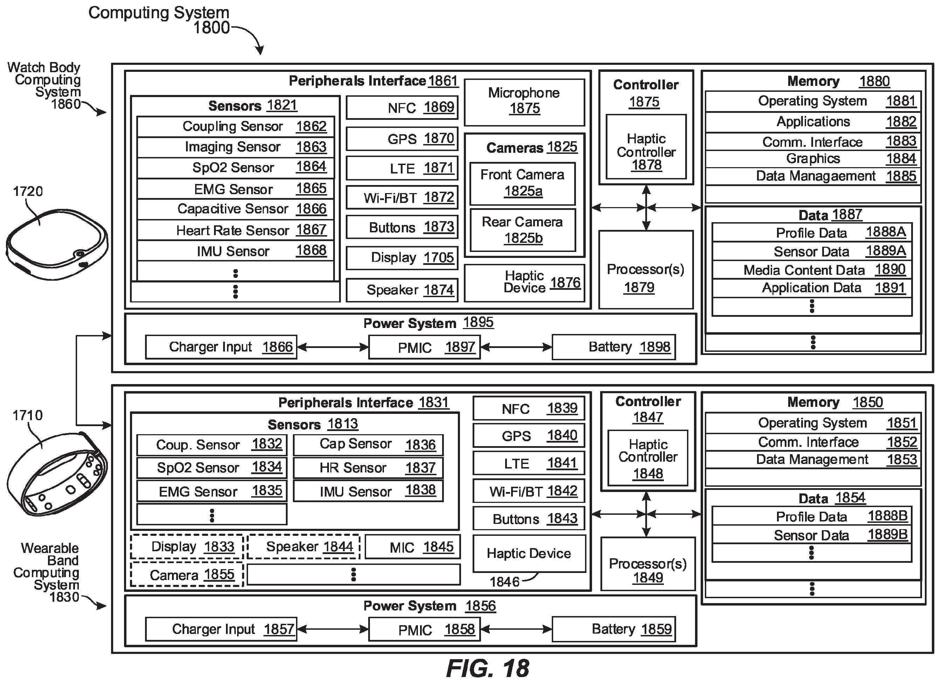

A wrist-wearable device 1700, which can be used for wrist-wearable device 1302, 1402, 1502, 1630, and one or more of its components, are described below in reference to FIGS. 17 and 18; head-wearable devices 1900 and 2000, which can respectively be used for AR glasses 1304, 1404 or VR headset 1550, 1620, and their one or more components are described below in reference to FIGS. 19-21.

Referring to FIG. 13, wrist-wearable device 1302, AR glasses 1304, and/or HIPD 1306 can communicatively couple via a network 1325 (e.g., cellular, near field, Wi-Fi, personal area network, wireless LAN, etc.). Additionally, wrist-wearable device 1302, AR glasses 1304, and/or HIPD 1306 can also communicatively couple with one or more servers 1330, computers 1340 (e.g., laptops, computers, etc.), mobile devices 1350 (e.g., smartphones, tablets, etc.), and/or other electronic devices via network 1325 (e.g., cellular, near field, Wi-Fi, personal area network, wireless LAN, etc.).

In FIG. 13, a user 1308 is shown wearing wrist-wearable device 1302 and AR glasses 1304 and having HIPD 1306 on their desk. The wrist-wearable device 1302, AR glasses 1304, and HIPD 1306 facilitate user interaction with an AR environment. In particular, as shown by first AR system 1300, wrist-wearable device 1302, AR glasses 1304, and/or HIPD 1306 cause presentation of one or more avatars 1310, digital representations of contacts 1312, and virtual objects 1314. As discussed below, user 1308 can interact with one or more avatars 1310, digital representations of contacts 1312, and virtual objects 1314 via wrist-wearable device 1302, AR glasses 1304, and/or HIPD 1306.

User 1308 can use any of wrist-wearable device 1302, AR glasses 1304, and/or HIPD 1306 to provide user inputs. For example, user 1308 can perform one or more hand gestures that are detected by wrist-wearable device 1302 (e.g., using one or more EMG sensors and/or IMUs, described below in reference to FIGS. 17 and 18) and/or AR glasses 1304 (e.g., using one or more image sensor or camera, described below in reference to FIGS. 19-21) to provide a user input. Alternatively, or additionally, user 1308 can provide a user input via one or more touch surfaces of wrist-wearable device 1302, AR glasses 1304, HIPD 1306, and/or voice commands captured by a microphone of wrist-wearable device 1302, AR glasses 1304, and/or HIPD 1306. In some embodiments, wrist-wearable device 1302, AR glasses 1304, and/or HIPD 1306 include a digital assistant to help user 1308 in providing a user input (e.g., completing a sequence of operations, suggesting different operations or commands, providing reminders, confirming a command, etc.). In some embodiments, user 1308 can provide a user input via one or more facial gestures and/or facial expressions. For example, cameras of wrist-wearable device 1302, AR glasses 1304, and/or HIPD 1306 can track eyes of user 1308 for navigating a user interface.

Wrist-wearable device 1302, AR glasses 1304, and/or HIPD 1306 can operate alone or in conjunction to allow user 1308 to interact with the AR environment. In some embodiments, HIPD 1306 is configured to operate as a central hub or control center for the wrist-wearable device 1302, AR glasses 1304, and/or another communicatively coupled device. For example, user 1308 can provide an input to interact with the AR environment at any of wrist-wearable device 1302, AR glasses 1304, and/or HIPD 1306, and HIPD 1306 can identify one or more back-end and front-end tasks to cause the performance of the requested interaction and distribute instructions to cause the performance of the one or more back-end and front-end tasks at wrist-wearable device 1302, AR glasses 1304, and/or HIPD 1306. In some embodiments, a back-end task is a background processing task that is not perceptible by the user (e.g., rendering content, decompression, compression, etc.), and a front-end task is a user-facing task that is perceptible to the user (e.g., presenting information to the user, providing feedback to the user, etc.). As described below in reference to FIG. 13, HIPD 1306 can perform the back-end tasks and provide wrist-wearable device 1302 and/or AR glasses 1304 operational data corresponding to the performed back-end tasks such that wrist-wearable device 1302 and/or AR glasses 1304 can perform the front-end tasks. In this way, HIPD 1306, which has more computational resources and greater thermal headroom than wrist-wearable device 1302 and/or AR glasses 1304, performs computationally intensive tasks and reduces the computer resource utilization and/or power usage of wrist-wearable device 1302 and/or AR glasses 1304.

In the example shown by first AR system 1300, HIPD 1306 identifies one or more back-end tasks and front-end tasks associated with a user request to initiate an AR video call with one or more other users (represented by avatar 1310 and the digital representation of contact 1312) and distributes instructions to cause the performance of the one or more back-end tasks and front-end tasks. In particular, HIPD 1306 performs back-end tasks for processing and/or rendering image data (and other data) associated with the AR video call and provides operational data associated with the performed back-end tasks to AR glasses 1304 such that the AR glasses 1304 perform front-end tasks for presenting the AR video call (e.g., presenting avatar 1310 and digital representation of contact 1312).

In some embodiments, HIPD 1306 can operate as a focal or anchor point for causing the presentation of information. This allows user 1308 to be generally aware of where information is presented. For example, as shown in first AR system 1300, avatar 1310 and the digital representation of contact 1312 are presented above HIPD 1306. In particular, HIPD 1306 and AR glasses 1304 operate in conjunction to determine a location for presenting avatar 1310 and the digital representation of contact 1312. In some embodiments, information can be presented a predetermined distance from HIPD 1306 (e.g., within 5 meters). For example, as shown in first AR system 1300, virtual object 1314 is presented on the desk some distance from HIPD 1306. Similar to the above example, HIPD 1306 and AR glasses 1304 can operate in conjunction to determine a location for presenting virtual object 1314. Alternatively, in some embodiments, presentation of information is not bound by HIPD 1306. More specifically, avatar 1310, digital representation of contact 1312, and virtual object 1314 do not have to be presented within a predetermined distance of HIPD 1306.

User inputs provided at wrist-wearable device 1302, AR glasses 1304, and/or HIPD 1306 are coordinated such that the user can use any device to initiate, continue, and/or complete an operation. For example, user 1308 can provide a user input to AR glasses 1304 to cause AR glasses 1304 to present virtual object 1314 and, while virtual object 1314 is presented by AR glasses 1304, user 1308 can provide one or more hand gestures via wrist-wearable device 1302 to interact and/or manipulate virtual object 1314.

FIG. 14 shows a user 1408 wearing a wrist-wearable device 1402 and AR glasses 1404, and holding an HIPD 1406. In second AR system 1400, the wrist-wearable device 1402, AR glasses 1404, and/or HIPD 1406 are used to receive and/or provide one or more messages to a contact of user 1408. In particular, wrist-wearable device 1402, AR glasses 1404, and/or HIPD 1406 detect and coordinate one or more user inputs to initiate a messaging application and prepare a response to a received message via the messaging application.

In some embodiments, user 1408 initiates, via a user input, an application on wrist-wearable device 1402, AR glasses 1404, and/or HIPD 1406 that causes the application to initiate on at least one device. For example, in second AR system 1400, user 1408 performs a hand gesture associated with a command for initiating a messaging application (represented by messaging user interface 1416), wrist-wearable device 1402 detects the hand gesture and, based on a determination that user 1408 is wearing AR glasses 1404, causes AR glasses 1404 to present a messaging user interface 1416 of the messaging application. AR glasses 1404 can present messaging user interface 1416 to user 1408 via its display (e.g., as shown by a field of view 1418 of user 1408). In some embodiments, the application is initiated and executed on the device (e.g., wrist-wearable device 1402, AR glasses 1404, and/or HIPD 1406) that detects the user input to initiate the application, and the device provides another device operational data to cause the presentation of the messaging application. For example, wrist-wearable device 1402 can detect the user input to initiate a messaging application, initiate and run the messaging application, and provide operational data to AR glasses 1404 and/or HIPD 1406 to cause presentation of the messaging application. Alternatively, the application can be initiated and executed at a device other than the device that detected the user input. For example, wrist-wearable device 1402 can detect the hand gesture associated with initiating the messaging application and cause HIPD 1406 to run the messaging application and coordinate the presentation of the messaging application.

Further, user 1408 can provide a user input provided at wrist-wearable device 1402, AR glasses 1404, and/or HIPD 1406 to continue and/or complete an operation initiated at another device. For example, after initiating the messaging application via wrist-wearable device 1402 and while AR glasses 1404 present messaging user interface 1416, user 1408 can provide an input at HIPD 1406 to prepare a response (e.g., shown by the swipe gesture performed on HIPD 1406). Gestures performed by user 1408 on HIPD 1406 can be provided and/or displayed on another device. For example, a swipe gestured performed on HIPD 1406 is displayed on a virtual keyboard of messaging user interface 1416 displayed by AR glasses 1404.

In some embodiments, wrist-wearable device 1402, AR glasses 1404, HIPD 1406, and/or any other communicatively coupled device can present one or more notifications to user 1408. The notification can be an indication of a new message, an incoming call, an application update, a status update, etc. User 1408 can select the notification via wrist-wearable device 1402, AR glasses 1404, and/or HIPD 1406 and can cause presentation of an application or operation associated with the notification on at least one device. For example, user 1408 can receive a notification that a message was received at wrist-wearable device 1402, AR glasses 1404, HIPD 1406, and/or any other communicatively coupled device and can then provide a user input at wrist-wearable device 1402, AR glasses 1404, and/or HIPD 1406 to review the notification, and the device detecting the user input can cause an application associated with the notification to be initiated and/or presented at wrist-wearable device 1402, AR glasses 1404, and/or HIPD 1406.

While the above example describes coordinated inputs used to interact with a messaging application, user inputs can be coordinated to interact with any number of applications including, but not limited to, gaming applications, social media applications, camera applications, web-based applications, financial applications, etc. For example, AR glasses 1404 can present to user 1408 game application data, and HIPD 1406 can be used as a controller to provide inputs to the game. Similarly, user 1408 can use wrist-wearable device 1402 to initiate a camera of AR glasses 1404, and user 1408 can use wrist-wearable device 1402, AR glasses 1404, and/or HIPD 1406 to manipulate the image capture (e.g., zoom in or out, apply filters, etc.) and capture image data.

Users may interact with the devices disclosed herein in a variety of ways. For example, as shown in FIGS. 15A and 15B, a user 1508 may interact with an AR system 1500 by donning a VR headset 1550 while holding HIPD 1506 and wearing wrist-wearable device 1502. In this example, AR system 1500 may enable a user to interact with a game 1510 by swiping their arm. One or more of VR headset 1550, HIPD 1506, and wrist-wearable device 1502 may detect this gesture and, in response, may display a sword strike in game 1510. Similarly, in FIGS. 16A and 16B, a user 1608 may interact with an AR system 1600 by donning a VR headset 1620 while wearing haptic device 1660 and wrist-wearable device 1630. In this example, AR system 1600 may enable a user to interact with a game 1610 by swiping their arm. One or more of VR headset 1620, haptic device 1660, and wrist-wearable device 1630 may detect this gesture and, in response, may display a spell being cast in game 1610.

Having discussed example AR systems, devices for interacting with such AR systems and other computing systems more generally will now be discussed in greater detail. Some explanations of devices and components that can be included in some or all of the example devices discussed below are explained herein for ease of reference. Certain types of the components described below may be more suitable for a particular set of devices, and less suitable for a different set of devices. But subsequent reference to the components explained here should be considered to be encompassed by the descriptions provided.

In some embodiments discussed below, example devices and systems, including electronic devices and systems, will be addressed. Such example devices and systems are not intended to be limiting, and one of skill in the art will understand that alternative devices and systems to the example devices and systems described herein may be used to perform the operations and construct the systems and devices that are described herein.

An electronic device may be a device that uses electrical energy to perform a specific function. An electronic device can be any physical object that contains electronic components such as transistors, resistors, capacitors, diodes, and integrated circuits. Examples of electronic devices include smartphones, laptops, digital cameras, televisions, gaming consoles, and music players, as well as the example electronic devices discussed herein. As described herein, an intermediary electronic device may be a device that sits between two other electronic devices and/or a subset of components of one or more electronic devices and facilitates communication, data processing, and/or data transfer between the respective electronic devices and/or electronic components.

An integrated circuit may be an electronic device made up of multiple interconnected electronic components such as transistors, resistors, and capacitors. These components may be etched onto a small piece of semiconductor material, such as silicon. Integrated circuits may include analog integrated circuits, digital integrated circuits, mixed signal integrated circuits, and/or any other suitable type or form of integrated circuit. Examples of integrated circuits include application-specific integrated circuits (ASICs), processing units, central processing units (CPUs), co-processors, and accelerators.

Analog integrated circuits, such as sensors, power management circuits, and operational amplifiers, may process continuous signals and perform analog functions such as amplification, active filtering, demodulation, and mixing. Examples of analog integrated circuits include linear integrated circuits and radio frequency circuits.

Digital integrated circuits, which may be referred to as logic integrated circuits, may include microprocessors, microcontrollers, memory chips, interfaces, power management circuits, programmable devices, and/or any other suitable type or form of integrated circuit. In some embodiments, examples of integrated circuits include central processing units (CPUs),

Processing units, such as CPUs, may be electronic components that are responsible for executing instructions and controlling the operation of an electronic device (e.g., a computer). There are various types of processors that may be used interchangeably, or may be specifically required, by embodiments described herein. For example, a processor may be: (i) a general processor designed to perform a wide range of tasks, such as running software applications, managing operating systems, and performing arithmetic and logical operations; (ii) a microcontroller designed for specific tasks such as controlling electronic devices, sensors, and motors; (iii) an accelerator, such as a graphics processing unit (GPU), designed to accelerate the creation and rendering of images, videos, and animations (e.g., virtual-reality animations, such as three-dimensional modeling); (iv) a field-programmable gate array (FPGA) that can be programmed and reconfigured after manufacturing and/or can be customized to perform specific tasks, such as signal processing, cryptography, and machine learning; and/or (v) a digital signal processor (DSP) designed to perform mathematical operations on signals such as audio, video, and radio waves. One or more processors of one or more electronic devices may be used in various embodiments described herein.

Memory generally refers to electronic components in a computer or electronic device that store data and instructions for the processor to access and manipulate. Examples of memory can include: (i) random access memory (RAM) configured to store data and instructions temporarily; (ii) read-only memory (ROM) configured to store data and instructions permanently (e.g., one or more portions of system firmware, and/or boot loaders) and/or semi-permanently; (iii) flash memory, which can be configured to store data in electronic devices (e.g., USB drives, memory cards, and/or solid-state drives (SSDs)); and/or (iv) cache memory configured to temporarily store frequently accessed data and instructions. Memory, as described herein, can store structured data (e.g., SQL databases, MongoDB databases, GraphQL data, JSON data, etc.). Other examples of data stored in memory can include (i) profile data, including user account data, user settings, and/or other user data stored by the user, (ii) sensor data detected and/or otherwise obtained by one or more sensors, (iii) media content data including stored image data, audio data, documents, and the like, (iv) application data, which can include data collected and/or otherwise obtained and stored during use of an application, and/or any other types of data described herein.

Controllers may be electronic components that manage and coordinate the operation of other components within an electronic device (e.g., controlling inputs, processing data, and/or generating outputs). Examples of controllers can include: (i) microcontrollers, including small, low-power controllers that are commonly used in embedded systems and Internet of Things (IoT) devices; (ii) programmable logic controllers (PLCs) that may be configured to be used in industrial automation systems to control and monitor manufacturing processes; (iii) system-on-a-chip (SoC) controllers that integrate multiple components such as processors, memory, I/O interfaces, and other peripherals into a single chip; and/or (iv) DSPs.

A power system of an electronic device may be configured to convert incoming electrical power into a form that can be used to operate the device. A power system can include various components, such as (i) a power source, which can be an alternating current (AC) adapter or a direct current (DC) adapter power supply, (ii) a charger input, which can be configured to use a wired and/or wireless connection (which may be part of a peripheral interface, such as a USB, micro-USB interface, near-field magnetic coupling, magnetic inductive and magnetic resonance charging, and/or radio frequency (RF) charging), (iii) a power-management integrated circuit, configured to distribute power to various components of the device and to ensure that the device operates within safe limits (e.g., regulating voltage, controlling current flow, and/or managing heat dissipation), and/or (iv) a battery configured to store power to provide usable power to components of one or more electronic devices.

Peripheral interfaces may be electronic components (e.g., of electronic devices) that allow electronic devices to communicate with other devices or peripherals and can provide the ability to input and output data and signals. Examples of peripheral interfaces can include (i) universal serial bus (USB) and/or micro-USB interfaces configured for connecting devices to an electronic device, (ii) Bluetooth interfaces configured to allow devices to communicate with each other, including Bluetooth low energy (BLE), (iii) near field communication (NFC) interfaces configured to be short-range wireless interfaces for operations such as access control, (iv) POGO pins, which may be small, spring-loaded pins configured to provide a charging interface, (v) wireless charging interfaces, (vi) GPS interfaces, (vii) Wi-Fi interfaces for providing a connection between a device and a wireless network, and/or (viii) sensor interfaces.

Sensors may be electronic components (e.g., in and/or otherwise in electronic communication with electronic devices, such as wearable devices) configured to detect physical and environmental changes and generate electrical signals. Examples of sensors can include (i) imaging sensors for collecting imaging data (e.g., including one or more cameras disposed on a respective electronic device), (ii) biopotential-signal sensors, (iii) inertial measurement units (e.g., IMUs) for detecting, for example, angular rate, force, magnetic field, and/or changes in acceleration, (iv) heart rate sensors for measuring a user's heart rate, (v) SpO2 sensors for measuring blood oxygen saturation and/or other biometric data of a user, (vi) capacitive sensors for detecting changes in potential at a portion of a user's body (e.g., a sensor-skin interface), and/or (vii) light sensors (e.g., time-of-flight sensors, infrared light sensors, visible light sensors, etc.).

Biopotential-signal-sensing components may be devices used to measure electrical activity within the body (e.g., biopotential-signal sensors). Some types of biopotential-signal sensors include (i) electroencephalography (EEG) sensors configured to measure electrical activity in the brain to diagnose neurological disorders, (ii) electrocardiography (ECG or EKG) sensors configured to measure electrical activity of the heart to diagnose heart problems, (iii) electromyography (EMG) sensors configured to measure the electrical activity of muscles and to diagnose neuromuscular disorders, and (iv) electrooculography (EOG) sensors configure to measure the electrical activity of eye muscles to detect eye movement and diagnose eye disorders.

An application stored in memory of an electronic device (e.g., software) may include instructions stored in the memory. Examples of such applications include (i) games, (ii) word processors, (iii) messaging applications, (iv) media-streaming applications, (v) financial applications, (vi) calendars. (vii) clocks, and (viii) communication interface modules for enabling wired and/or wireless connections between different respective electronic devices (e.g., IEEE 1902.15.4, Wi-Fi, ZigBee, 6LoWPAN, Thread, Z-Wave, Bluetooth Smart, ISA100.11a, WirelessHART, or MiWi), custom or standard wired protocols (e.g., Ethernet or HomePlug), and/or any other suitable communication protocols).

A communication interface may be a mechanism that enables different systems or devices to exchange information and data with each other, including hardware, software, or a combination of both hardware and software. For example, a communication interface can refer to a physical connector and/or port on a device that enables communication with other devices (e.g., USB, Ethernet, HDMI, Bluetooth). In some embodiments, a communication interface can refer to a software layer that enables different software programs to communicate with each other (e.g., application programming interfaces (APIs), protocols like HTTP and TCP/IP, etc.).

A graphics module may be a component or software module that is designed to handle graphical operations and/or processes and can include a hardware module and/or a software module.

Non-transitory computer-readable storage media may be physical devices or storage media that can be used to store electronic data in a non-transitory form (e.g., such that the data is stored permanently until it is intentionally deleted or modified).

FIGS. 17 and 18 illustrate an example wrist-wearable device 1700 and an example computer system 1800, in accordance with some embodiments. Wrist-wearable device 1700 is an instance of wearable device 1302 described in FIG. 13 herein, such that the wearable device 1302 should be understood to have the features of the wrist-wearable device 1700 and vice versa. FIG. 18 illustrates components of the wrist-wearable device 1700, which can be used individually or in combination, including combinations that include other electronic devices and/or electronic components.

FIG. 17 shows a wearable band 1710 and a watch body 1720 (or capsule) being coupled, as discussed below, to form wrist-wearable device 1700. Wrist-wearable device 1700 can perform various functions and/or operations associated with navigating through user interfaces and selectively opening applications as well as the functions and/or operations described above with reference to FIGS. 13-16B.

As will be described in more detail below, operations executed by wrist-wearable device 1700 can include (i) presenting content to a user (e.g., displaying visual content via a display 1705), (ii) detecting (e.g., sensing) user input (e.g., sensing a touch on peripheral button 1723 and/or at a touch screen of the display 1705, a hand gesture detected by sensors (e.g., biopotential sensors)), (iii) sensing biometric data (e.g., neuromuscular signals, heart rate, temperature, sleep, etc.) via one or more sensors 1713, messaging (e.g., text, speech, video, etc.); image capture via one or more imaging devices or cameras 1725, wireless communications (e.g., cellular, near field, Wi-Fi, personal area network, etc.), location determination, financial transactions, providing haptic feedback, providing alarms, providing notifications, providing biometric authentication, providing health monitoring, providing sleep monitoring, etc.

The above-example functions can be executed independently in watch body 1720, independently in wearable band 1710, and/or via an electronic communication between watch body 1720 and wearable band 1710. In some embodiments, functions can be executed on wrist-wearable device 1700 while an AR environment is being presented (e.g., via one of AR systems 1300 to 1600). The wearable devices described herein can also be used with other types of AR environments.

Wearable band 1710 can be configured to be worn by a user such that an inner surface of a wearable structure 1711 of wearable band 1710 is in contact with the user's skin. In this example, when worn by a user, sensors 1713 may contact the user's skin. In some examples, one or more of sensors 1713 can sense biometric data such as a user's heart rate, a saturated oxygen level, temperature, sweat level, neuromuscular signals, or a combination thereof. One or more of sensors 1713 can also sense data about a user's environment including a user's motion, altitude, location, orientation, gait, acceleration, position, or a combination thereof. In some embodiments, one or more of sensors 1713 can be configured to track a position and/or motion of wearable band 1710. One or more of sensors 1713 can include any of the sensors defined above and/or discussed below with respect to FIG. 17.

One or more of sensors 1713 can be distributed on an inside and/or an outside surface of wearable band 1710. In some embodiments, one or more of sensors 1713 are uniformly spaced along wearable band 1710. Alternatively, in some embodiments, one or more of sensors 1713 are positioned at distinct points along wearable band 1710. As shown in FIG. 17, one or more of sensors 1713 can be the same or distinct. For example, in some embodiments, one or more of sensors 1713 can be shaped as a pill (e.g., sensor 1713a), an oval, a circle a square, an oblong (e.g., sensor 1713c) and/or any other shape that maintains contact with the user's skin (e.g., such that neuromuscular signal and/or other biometric data can be accurately measured at the user's skin). In some embodiments, one or more sensors of 1713 are aligned to form pairs of sensors (e.g., for sensing neuromuscular signals based on differential sensing within each respective sensor). For example, sensor 1713b may be aligned with an adjacent sensor to form sensor pair 1714a and sensor 1713d may be aligned with an adjacent sensor to form sensor pair 1714b. In some embodiments, wearable band 1710 does not have a sensor pair. Alternatively, in some embodiments, wearable band 1710 has a predetermined number of sensor pairs (one pair of sensors, three pairs of sensors, four pairs of sensors, six pairs of sensors, sixteen pairs of sensors, etc.).

Wearable band 1710 can include any suitable number of sensors 1713. In some embodiments, the number and arrangement of sensors 1713 depends on the particular application for which wearable band 1710 is used. For instance, wearable band 1710 can be configured as an armband, wristband, or chest-band that include a plurality of sensors 1713 with different number of sensors 1713, a variety of types of individual sensors with the plurality of sensors 1713, and different arrangements for each use case, such as medical use cases as compared to gaming or general day-to-day use cases.

In accordance with some embodiments, wearable band 1710 further includes an electrical ground electrode and a shielding electrode. The electrical ground and shielding electrodes, like the sensors 1713, can be distributed on the inside surface of the wearable band 1710 such that they contact a portion of the user's skin. For example, the electrical ground and shielding electrodes can be at an inside surface of a coupling mechanism 1716 or an inside surface of a wearable structure 1711. The electrical ground and shielding electrodes can be formed and/or use the same components as sensors 1713. In some embodiments, wearable band 1710 includes more than one electrical ground electrode and more than one shielding electrode.

Sensors 1713 can be formed as part of wearable structure 1711 of wearable band 1710. In some embodiments, sensors 1713 are flush or substantially flush with wearable structure 1711 such that they do not extend beyond the surface of wearable structure 1711. While flush with wearable structure 1711, sensors 1713 are still configured to contact the user's skin (e.g., via a skin-contacting surface). Alternatively, in some embodiments, sensors 1713 extend beyond wearable structure 1711 a predetermined distance (e.g., 0.1 - 2 mm) to make contact and depress into the user's skin. In some embodiments, sensors 1713 are coupled to an actuator (not shown) configured to adjust an extension height (e.g., a distance from the surface of wearable structure 1711) of sensors 1713 such that sensors 1713 make contact and depress into the user's skin. In some embodiments, the actuators adjust the extension height between 0.01 mm - 1.2 mm. This may allow the user to customize the positioning of sensors 1713 to improve the overall comfort of the wearable band 1710 when worn while still allowing sensors 1713 to contact the user's skin. In some embodiments, sensors 1713 are indistinguishable from wearable structure 1711 when worn by the user.

Wearable structure 1711 can be formed of an elastic material, elastomers, etc., configured to be stretched and fitted to be worn by the user. In some embodiments, wearable structure 1711 is a textile or woven fabric. As described above, sensors 1713 can be formed as part of a wearable structure 1711. For example, sensors 1713 can be molded into the wearable structure 1711, be integrated into a woven fabric (e.g., sensors 1713 can be sewn into the fabric and mimic the pliability of fabric and can and/or be constructed from a series woven strands of fabric).

Wearable structure 1711 can include flexible electronic connectors that interconnect sensors 1713, the electronic circuitry, and/or other electronic components (described below in reference to FIG. 18) that are enclosed in wearable band 1710. In some embodiments, the flexible electronic connectors are configured to interconnect sensors 1713, the electronic circuitry, and/or other electronic components of wearable band 1710 with respective sensors and/or other electronic components of another electronic device (e.g., watch body 1720). The flexible electronic connectors are configured to move with wearable structure 1711 such that the user adjustment to wearable structure 1711 (e.g., resizing, pulling, folding, etc.) does not stress or strain the electrical coupling of components of wearable band 1710.

As described above, wearable band 1710 is configured to be worn by a user. In particular, wearable band 1710 can be shaped or otherwise manipulated to be worn by a user. For example, wearable band 1710 can be shaped to have a substantially circular shape such that it can be configured to be worn on the user's lower arm or wrist. Alternatively, wearable band 1710 can be shaped to be worn on another body part of the user, such as the user's upper arm (e.g., around a bicep), forearm, chest, legs, etc. Wearable band 1710 can include a retaining mechanism 1712 (e.g., a buckle, a hook and loop fastener, etc.) for securing wearable band 1710 to the user's wrist or other body part. While wearable band 1710 is worn by the user, sensors 1713 sense data (referred to as sensor data) from the user's skin. In some examples, sensors 1713 of wearable band 1710 obtain (e.g., sense and record) neuromuscular signals.

The sensed data (e.g., sensed neuromuscular signals) can be used to detect and/or determine the user's intention to perform certain motor actions. In some examples, sensors 1713 may sense and record neuromuscular signals from the user as the user performs muscular activations (e.g., movements, gestures, etc.). The detected and/or determined motor actions (e.g., phalange (or digit) movements, wrist movements, hand movements, and/or other muscle intentions) can be used to determine control commands or control information (instructions to perform certain commands after the data is sensed) for causing a computing device to perform one or more input commands. For example, the sensed neuromuscular signals can be used to control certain user interfaces displayed on display 1705 of wrist-wearable device 1700 and/or can be transmitted to a device responsible for rendering an artificial-reality environment (e.g., a head-mounted display) to perform an action in an associated artificial-reality environment, such as to control the motion of a virtual device displayed to the user. The muscular activations performed by the user can include static gestures, such as placing the user's hand palm down on a table, dynamic gestures, such as grasping a physical or virtual object, and covert gestures that are imperceptible to another person, such as slightly tensing a joint by co-contracting opposing muscles or using sub-muscular activations. The muscular activations performed by the user can include symbolic gestures (e.g., gestures mapped to other gestures, interactions, or commands, for example, based on a gesture vocabulary that specifies the mapping of gestures to commands).

The sensor data sensed by sensors 1713 can be used to provide a user with an enhanced interaction with a physical object (e.g., devices communicatively coupled with wearable band 1710) and/or a virtual object in an artificial-reality application generated by an artificial-reality system (e.g., user interface objects presented on the display 1705, or another computing device (e.g., a smartphone)).

In some embodiments, wearable band 1710 includes one or more haptic devices 1846 (e.g., a vibratory haptic actuator) that are configured to provide haptic feedback (e.g., a cutaneous and/or kinesthetic sensation, etc.) to the user's skin. Sensors 1713 and/or haptic devices 1846 (shown in FIG. 18) can be configured to operate in conjunction with multiple applications including, without limitation, health monitoring, social media, games, and artificial reality (e.g., the applications associated with artificial reality).

Wearable band 1710 can also include coupling mechanism 1716 for detachably coupling a capsule (e.g., a computing unit) or watch body 1720 (via a coupling surface of the watch body 1720) to wearable band 1710. For example, a cradle or a shape of coupling mechanism 1716 can correspond to shape of watch body 1720 of wrist-wearable device 1700. In particular, coupling mechanism 1716 can be configured to receive a coupling surface proximate to the bottom side of watch body 1720 (e.g., a side opposite to a front side of watch body 1720 where display 1705 is located), such that a user can push watch body 1720 downward into coupling mechanism 1716 to attach watch body 1720 to coupling mechanism 1716. In some embodiments, coupling mechanism 1716 can be configured to receive a top side of the watch body 1720 (e.g., a side proximate to the front side of watch body 1720 where display 1705 is located) that is pushed upward into the cradle, as opposed to being pushed downward into coupling mechanism 1716. In some embodiments, coupling mechanism 1716 is an integrated component of wearable band 1710 such that wearable band 1710 and coupling mechanism 1716 are a single unitary structure. In some embodiments, coupling mechanism 1716 is a type of frame or shell that allows watch body 1720 coupling surface to be retained within or on wearable band 1710 coupling mechanism 1716 (e.g., a cradle, a tracker band, a support base, a clasp, etc.).

Coupling mechanism 1716 can allow for watch body 1720 to be detachably coupled to the wearable band 1710 through a friction fit, magnetic coupling, a rotation-based connector, a shear-pin coupler, a retention spring, one or more magnets, a clip, a pin shaft, a hook and loop fastener, or a combination thereof. A user can perform any type of motion to couple the watch body 1720 to wearable band 1710 and to decouple the watch body 1720 from the wearable band 1710. For example, a user can twist, slide, turn, push, pull, or rotate watch body 1720 relative to wearable band 1710, or a combination thereof, to attach watch body 1720 to wearable band 1710 and to detach watch body 1720 from wearable band 1710. Alternatively, as discussed below, in some embodiments, the watch body 1720 can be decoupled from the wearable band 1710 by actuation of a release mechanism 1729.

Wearable band 1710 can be coupled with watch body 1720 to increase the functionality of wearable band 1710 (e.g., converting wearable band 1710 into wrist-wearable device 1700, adding an additional computing unit and/or battery to increase computational resources and/or a battery life of wearable band 1710, adding additional sensors to improve sensed data, etc.). As described above, wearable band 1710 and coupling mechanism 1716 are configured to operate independently (e.g., execute functions independently) from watch body 1720. For example, coupling mechanism 1716 can include one or more sensors 1713 that contact a user's skin when wearable band 1710 is worn by the user, with or without watch body 1720 and can provide sensor data for determining control commands.

A user can detach watch body 1720 from wearable band 1710 to reduce the encumbrance of wrist-wearable device 1700 to the user. For embodiments in which watch body 1720 is removable, watch body 1720 can be referred to as a removable structure, such that in these embodiments wrist-wearable device 1700 includes a wearable portion (e.g., wearable band 1710) and a removable structure (e.g., watch body 1720).

Turning to watch body 1720, in some examples watch body 1720 can have a substantially rectangular or circular shape. Watch body 1720 is configured to be worn by the user on their wrist or on another body part. More specifically, watch body 1720 is sized to be easily carried by the user, attached on a portion of the user's clothing, and/or coupled to wearable band 1710 (forming the wrist-wearable device 1700). As described above, watch body 1720 can have a shape corresponding to coupling mechanism 1716 of wearable band 1710. In some embodiments, watch body 1720 includes a single release mechanism 1729 or multiple release mechanisms (e.g., two release mechanisms 1729 positioned on opposing sides of watch body 1720, such as spring-loaded buttons) for decoupling watch body 1720 from wearable band 1710. Release mechanism 1729 can include, without limitation, a button, a knob, a plunger, a handle, a lever, a fastener, a clasp, a dial, a latch, or a combination thereof.

A user can actuate release mechanism 1729 by pushing, turning, lifting, depressing, shifting, or performing other actions on release mechanism 1729. Actuation of release mechanism 1729 can release (e.g., decouple) watch body 1720 from coupling mechanism 1716 of wearable band 1710, allowing the user to use watch body 1720 independently from wearable band 1710 and vice versa. For example, decoupling watch body 1720 from wearable band 1710 can allow a user to capture images using rear-facing camera 1725b. Although release mechanism 1729 is shown positioned at a corner of watch body 1720, release mechanism 1729 can be positioned anywhere on watch body 1720 that is convenient for the user to actuate. In addition, in some embodiments, wearable band 1710 can also include a respective release mechanism for decoupling watch body 1720 from coupling mechanism 1716. In some embodiments, release mechanism 1729 is optional and watch body 1720 can be decoupled from coupling mechanism 1716 as described above (e.g., via twisting, rotating, etc.).

Watch body 1720 can include one or more peripheral buttons 1723 and 1727 for performing various operations at watch body 1720. For example, peripheral buttons 1723 and 1727 can be used to turn on or wake (e.g., transition from a sleep state to an active state) display 1705, unlock watch body 1720, increase or decrease a volume, increase or decrease a brightness, interact with one or more applications, interact with one or more user interfaces, etc. Additionally or alternatively, in some embodiments, display 1705 operates as a touch screen and allows the user to provide one or more inputs for interacting with watch body 1720.

In some embodiments, watch body 1720 includes one or more sensors 1721. Sensors 1721 of watch body 1720 can be the same or distinct from sensors 1713 of wearable band 1710. Sensors 1721 of watch body 1720 can be distributed on an inside and/or an outside surface of watch body 1720. In some embodiments, sensors 1721 are configured to contact a user's skin when watch body 1720 is worn by the user. For example, sensors 1721 can be placed on the bottom side of watch body 1720 and coupling mechanism 1716 can be a cradle with an opening that allows the bottom side of watch body 1720 to directly contact the user's skin. Alternatively, in some embodiments, watch body 1720 does not include sensors that are configured to contact the user's skin (e.g., including sensors internal and/or external to the watch body 1720 that are configured to sense data of watch body 1720 and the surrounding environment). In some embodiments, sensors 1721 are configured to track a position and/or motion of watch body 1720.

Watch body 1720 and wearable band 1710 can share data using a wired communication method (e.g., a Universal Asynchronous Receiver/Transmitter (UART), a USB transceiver, etc.) and/or a wireless communication method (e.g., near field communication, Bluetooth, etc.). For example, watch body 1720 and wearable band 1710 can share data sensed by sensors 1713 and 1721, as well as application and device specific information (e.g., active and/or available applications, output devices (e.g., displays, speakers, etc.), input devices (e.g., touch screens, microphones, imaging sensors, etc.).

In some embodiments, watch body 1720 can include, without limitation, a front-facing camera 1725a and/or a rear-facing camera 1725b, sensors 1721 (e.g., a biometric sensor, an IMU, a heart rate sensor, a saturated oxygen sensor, a neuromuscular signal sensor, an altimeter sensor, a temperature sensor, a bioimpedance sensor, a pedometer sensor, an optical sensor (e.g., imaging sensor 1863), a touch sensor, a sweat sensor, etc.). In some embodiments, watch body 1720 can include one or more haptic devices 1876 (e.g., a vibratory haptic actuator) that is configured to provide haptic feedback (e.g., a cutaneous and/or kinesthetic sensation, etc.) to the user. Sensors 1821 and/or haptic device 1876 can also be configured to operate in conjunction with multiple applications including, without limitation, health monitoring applications, social media applications, game applications, and artificial reality applications (e.g., the applications associated with artificial reality).

As described above, watch body 1720 and wearable band 1710, when coupled, can form wrist-wearable device 1700. When coupled, watch body 1720 and wearable band 1710 may operate as a single device to execute functions (operations, detections, communications, etc.) described herein. In some embodiments, each device may be provided with particular instructions for performing the one or more operations of wrist-wearable device 1700. For example, in accordance with a determination that watch body 1720 does not include neuromuscular signal sensors, wearable band 1710 can include alternative instructions for performing associated instructions (e.g., providing sensed neuromuscular signal data to watch body 1720 via a different electronic device). Operations of wrist-wearable device 1700 can be performed by watch body 1720 alone or in conjunction with wearable band 1710 (e.g., via respective processors and/or hardware components) and vice versa. In some embodiments, operations of wrist-wearable device 1700, watch body 1720, and/or wearable band 1710 can be performed in conjunction with one or more processors and/or hardware components.

As described below with reference to the block diagram of FIG. 18, wearable band 1710 and/or watch body 1720 can each include independent resources required to independently execute functions. For example, wearable band 1710 and/or watch body 1720 can each include a power source (e.g., a battery), a memory, data storage, a processor (e.g., a central processing unit (CPU)), communications, a light source, and/or input/output devices.

FIG. 18 shows block diagrams of a computing system 1830 corresponding to wearable band 1710 and a computing system 1860 corresponding to watch body 1720 according to some embodiments. Computing system 1800 of wrist-wearable device 1700 may include a combination of components of wearable band computing system 1830 and watch body computing system 1860, in accordance with some embodiments.

Watch body 1720 and/or wearable band 1710 can include one or more components shown in watch body computing system 1860. In some embodiments, a single integrated circuit may include all or a substantial portion of the components of watch body computing system 1860 included in a single integrated circuit. Alternatively, in some embodiments, components of the watch body computing system 1860 may be included in a plurality of integrated circuits that are communicatively coupled. In some embodiments, watch body computing system 1860 may be configured to couple (e.g., via a wired or wireless connection) with wearable band computing system 1830, which may allow the computing systems to share components, distribute tasks, and/or perform other operations described herein (individually or as a single device).

Watch body computing system 1860 can include one or more processors 1879, a controller 1877, a peripherals interface 1861, a power system 1895, and memory (e.g., a memory 1880).

Power system 1895 can include a charger input 1896, a power-management integrated circuit (PMIC) 1897, and a battery 1898. In some embodiments, a watch body 1720 and a wearable band 1710 can have respective batteries (e.g., battery 1898 and 1859) and can share power with each other. Watch body 1720 and wearable band 1710 can receive a charge using a variety of techniques. In some embodiments, watch body 1720 and wearable band 1710 can use a wired charging assembly (e.g., power cords) to receive the charge. Alternatively, or in addition, watch body 1720 and/or wearable band 1710 can be configured for wireless charging. For example, a portable charging device can be designed to mate with a portion of watch body 1720 and/or wearable band 1710 and wirelessly deliver usable power to battery 1898 of watch body 1720 and/or battery 1859 of wearable band 1710. Watch body 1720 and wearable band 1710 can have independent power systems (e.g., power system 1895 and 1856, respectively) to enable each to operate independently. Watch body 1720 and wearable band 1710 can also share power (e.g., one can charge the other) via respective PMICs (e.g., PMICs 1897 and 1858) and charger inputs (e.g., 1857 and 1896) that can share power over power and ground conductors and/or over wireless charging antennas.

In some embodiments, peripherals interface 1861 can include one or more sensors 1821. Sensors 1821 can include one or more coupling sensors 1862 for detecting when watch body 1720 is coupled with another electronic device (e.g., a wearable band 1710). Sensors 1821 can include one or more imaging sensors 1863 (e.g., one or more of cameras 1825, and/or separate imaging sensors 1863 (e.g., thermal-imaging sensors)). In some embodiments, sensors 1821 can include one or more SpO2 sensors 1864. In some embodiments, sensors 1821 can include one or more biopotential-signal sensors (e.g., EMG sensors 1865, which may be disposed on an interior, user-facing portion of watch body 1720 and/or wearable band 1710). In some embodiments, sensors 1821 may include one or more capacitive sensors 1866. In some embodiments, sensors 1821 may include one or more heart rate sensors 1867. In some embodiments, sensors 1821 may include one or more IMU sensors 1868. In some embodiments, one or more IMU sensors 1868 can be configured to detect movement of a user's hand or other location where watch body 1720 is placed or held.

In some embodiments, one or more of sensors 1821 may provide an example human-machine interface. For example, a set of neuromuscular sensors, such as EMG sensors 1865, may be arranged circumferentially around wearable band 1710 with an interior surface of EMG sensors 1865 being configured to contact a user's skin. Any suitable number of neuromuscular sensors may be used (e.g., between 2 and 20 sensors). The number and arrangement of neuromuscular sensors may depend on the particular application for which the wearable device is used. For example, wearable band 1710 can be used to generate control information for controlling an augmented reality system, a robot, controlling a vehicle, scrolling through text, controlling a virtual avatar, or any other suitable control task.

In some embodiments, neuromuscular sensors may be coupled together using flexible electronics incorporated into the wireless device, and the output of one or more of the sensing components can be optionally processed using hardware signal processing circuitry (e.g., to perform amplification, filtering, and/or rectification). In other embodiments, at least some signal processing of the output of the sensing components can be performed in software such as processors 1879. Thus, signal processing of signals sampled by the sensors can be performed in hardware, software, or by any suitable combination of hardware and software, as aspects of the technology described herein are not limited in this respect.

Neuromuscular signals may be processed in a variety of ways. For example, the output of EMG sensors 1865 may be provided to an analog front end, which may be configured to perform analog processing (e.g., amplification, noise reduction, filtering, etc.) on the recorded signals. The processed analog signals may then be provided to an analog-to-digital converter, which may convert the analog signals to digital signals that can be processed by one or more computer processors. Furthermore, although this example is as discussed in the context of interfaces with EMG sensors, the embodiments described herein can also be implemented in wearable interfaces with other types of sensors including, but not limited to, mechanomyography (MMG) sensors, sonomyography (SMG) sensors, and electrical impedance tomography (EIT) sensors.

In some embodiments, peripherals interface 1861 includes a near-field communication (NFC) component 1869, a global-position system (GPS) component 1870, a long-term evolution (LTE) component 1871, and/or a Wi-Fi and/or Bluetooth communication component 1872. In some embodiments, peripherals interface 1861 includes one or more buttons 1873 (e.g., peripheral buttons 1723 and 1727 in FIG. 17), which, when selected by a user, cause operation to be performed at watch body 1720. In some embodiments, the peripherals interface 1861 includes one or more indicators, such as a light emitting diode (LED), to provide a user with visual indicators (e.g., message received, low battery, active microphone and/or camera, etc.).

Watch body 1720 can include at least one display 1705 for displaying visual representations of information or data to a user, including user-interface elements and/or three-dimensional virtual objects. The display can also include a touch screen for inputting user inputs, such as touch gestures, swipe gestures, and the like. Watch body 1720 can include at least one speaker 1874 and at least one microphone 1875 for providing audio signals to the user and receiving audio input from the user. The user can provide user inputs through microphone 1875 and can also receive audio output from speaker 1874 as part of a haptic event provided by haptic controller 1878. Watch body 1720 can include at least one camera 1825, including a front camera 1825a and a rear camera 1825b. Cameras 1825 can include ultra-wide-angle cameras, wide angle cameras, fish-eye cameras, spherical cameras, telephoto cameras, depth-sensing cameras, or other types of cameras.

Watch body computing system 1860 can include one or more haptic controllers 1878 and associated componentry (e.g., haptic devices 1876) for providing haptic events at watch body 1720 (e.g., a vibrating sensation or audio output in response to an event at the watch body 1720). Haptic controllers 1878 can communicate with one or more haptic devices 1876, such as electroacoustic devices, including a speaker of the one or more speakers 1874 and/or other audio components and/or electromechanical devices that convert energy into linear motion such as a motor, solenoid, electroactive polymer, piezoelectric actuator, electrostatic actuator, or other tactile output generating components (e.g., a component that converts electrical signals into tactile outputs on the device). Haptic controller 1878 can provide haptic events to that are capable of being sensed by a user of watch body 1720. In some embodiments, one or more haptic controllers 1878 can receive input signals from an application of applications 1882.

In some embodiments, wearable band computing system 1830 and/or watch body computing system 1860 can include memory 1880, which can be controlled by one or more memory controllers of controllers 1877. In some embodiments, software components stored in memory 1880 include one or more applications 1882 configured to perform operations at the watch body 1720. In some embodiments, one or more applications 1882 may include games, word processors, messaging applications, calling applications, web browsers, social media applications, media streaming applications, financial applications, calendars, clocks, etc. In some embodiments, software components stored in memory 1880 include one or more communication interface modules 1883 as defined above. In some embodiments, software components stored in memory 1880 include one or more graphics modules 1884 for rendering, encoding, and/or decoding audio and/or visual data and one or more data management modules 1885 for collecting, organizing, and/or providing access to data 1887 stored in memory 1880. In some embodiments, one or more of applications 1882 and/or one or more modules can work in conjunction with one another to perform various tasks at the watch body 1720.

In some embodiments, software components stored in memory 1880 can include one or more operating systems 1881 (e.g., a Linux-based operating system, an Android operating system, etc.). Memory 1880 can also include data 1887. Data 1887 can include profile data 1888A, sensor data 1889A, media content data 1890, and application data 1891.

It should be appreciated that watch body computing system 1860 is an example of a computing system within watch body 1720, and that watch body 1720 can have more or fewer components than shown in watch body computing system 1860, can combine two or more components, and/or can have a different configuration and/or arrangement of the components. The various components shown in watch body computing system 1860 are implemented in hardware, software, firmware, or a combination thereof, including one or more signal processing and/or application-specific integrated circuits.

Turning to the wearable band computing system 1830, one or more components that can be included in wearable band 1710 are shown. Wearable band computing system 1830 can include more or fewer components than shown in watch body computing system 1860, can combine two or more components, and/or can have a different configuration and/or arrangement of some or all of the components. In some embodiments, all, or a substantial portion of the components of wearable band computing system 1830 are included in a single integrated circuit. Alternatively, in some embodiments, components of wearable band computing system 1830 are included in a plurality of integrated circuits that are communicatively coupled. As described above, in some embodiments, wearable band computing system 1830 is configured to couple (e.g., via a wired or wireless connection) with watch body computing system 1860, which allows the computing systems to share components, distribute tasks, and/or perform other operations described herein (individually or as a single device).

Wearable band computing system 1830, similar to watch body computing system 1860, can include one or more processors 1849, one or more controllers 1847 (including one or more haptics controllers 1848), a peripherals interface 1831 that can includes one or more sensors 1813 and other peripheral devices, a power source (e.g., a power system 1856), and memory (e.g., a memory 1850) that includes an operating system (e.g., an operating system 1851), data (e.g., data 1854 including profile data 1888B, sensor data 1889B, etc.), and one or more modules (e.g., a communications interface module 1852, a data management module 1853, etc.).

One or more of sensors 1813 can be analogous to sensors 1821 of watch body computing system 1860. For example, sensors 1813 can include one or more coupling sensors 1832, one or more SpO2 sensors 1834, one or more EMG sensors 1835, one or more capacitive sensors 1836, one or more heart rate sensors 1837, and one or more IMU sensors 1838.

Peripherals interface 1831 can also include other components analogous to those included in peripherals interface 1861 of watch body computing system 1860, including an NFC component 1839, a GPS component 1840, an LTE component 1841, a Wi-Fi and/or Bluetooth communication component 1842, and/or one or more haptic devices 1846 as described above in reference to peripherals interface 1861. In some embodiments, peripherals interface 1831 includes one or more buttons 1843, a display 1833, a speaker 1844, a microphone 1845, and a camera 1855. In some embodiments, peripherals interface 1831 includes one or more indicators, such as an LED.

It should be appreciated that wearable band computing system 1830 is an example of a computing system within wearable band 1710, and that wearable band 1710 can have more or fewer components than shown in wearable band computing system 1830, combine two or more components, and/or have a different configuration and/or arrangement of the components. The various components shown in wearable band computing system 1830 can be implemented in one or more of a combination of hardware, software, or firmware, including one or more signal processing and/or application-specific integrated circuits.

Wrist-wearable device 1700 with respect to FIG. 17 is an example of wearable band 1710 and watch body 1720 coupled together, so wrist-wearable device 1700 will be understood to include the components shown and described for wearable band computing system 1830 and watch body computing system 1860. In some embodiments, wrist-wearable device 1700 has a split architecture (e.g., a split mechanical architecture, a split electrical architecture, etc.) between watch body 1720 and wearable band 1710. In other words, all of the components shown in wearable band computing system 1830 and watch body computing system 1860 can be housed or otherwise disposed in a combined wrist-wearable device 1700 or within individual components of watch body 1720, wearable band 1710, and/or portions thereof (e.g., a coupling mechanism 1716 of wearable band 1710).

The techniques described above can be used with any device for sensing neuromuscular signals but could also be used with other types of wearable devices for sensing neuromuscular signals (such as body-wearable or head-wearable devices that might have neuromuscular sensors closer to the brain or spinal column).

In some embodiments, wrist-wearable device 1700 can be used in conjunction with a head-wearable device (e.g., AR glasses 1900 and VR system 2010) and/or an HIPD described herein, and wrist-wearable device 1700 can also be configured to be used to allow a user to control any aspect of the artificial reality (e.g., by using EMG-based gestures to control user interface objects in the artificial reality and/or by allowing a user to interact with the touchscreen on the wrist-wearable device to also control aspects of the artificial reality). Having thus described example wrist-wearable devices, attention will now be turned to example head-wearable devices, such AR glasses 1900 and VR headset 2010.

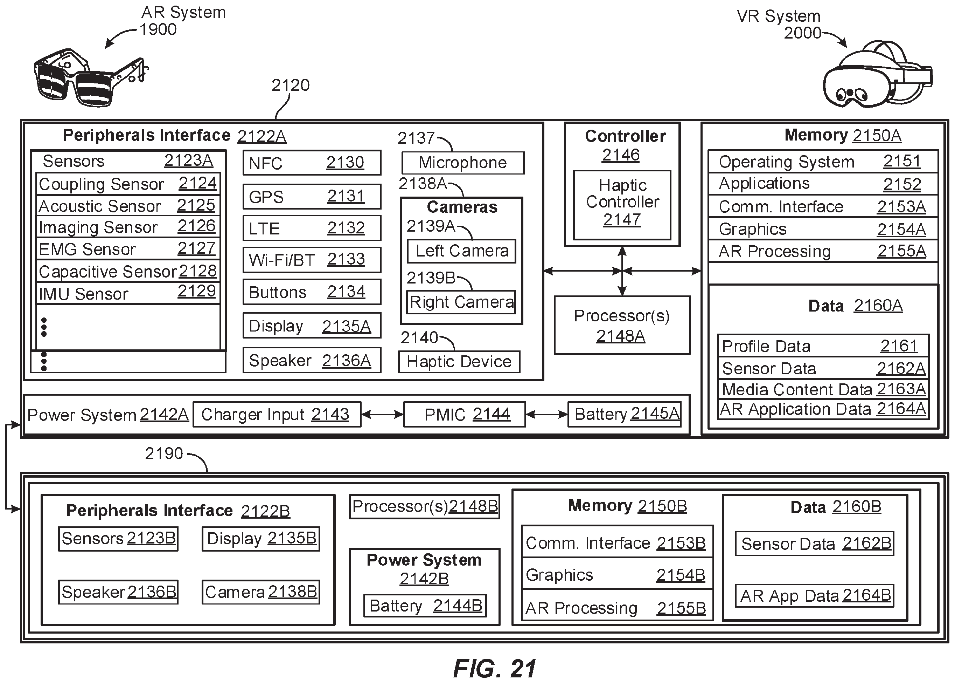

FIGS. 19 to 21 show example artificial-reality systems, which can be used as or in connection with wrist-wearable device 1700. In some embodiments, AR system 1900 includes an eyewear device 1902, as shown in FIG. 19. In some embodiments, VR system 2010 includes a head-mounted display (HMD) 2012, as shown in FIGS. 20A and 20B. In some embodiments, AR system 1900 and VR system 2010 can include one or more analogous components (e.g., components for presenting interactive artificial-reality environments, such as processors, memory, and/or presentation devices, including one or more displays and/or one or more waveguides), some of which are described in more detail with respect to FIG. 21. As described herein, a head-wearable device can include components of eyewear device 1902 and/or head-mounted display 2012. Some embodiments of head-wearable devices do not include any displays, including any of the displays described with respect to AR system 1900 and/or VR system 2010. While the example artificial-reality systems are respectively described herein as AR system 1900 and VR system 2010, either or both of the example AR systems described herein can be configured to present fully-immersive virtual-reality scenes presented in substantially all of a user's field of view or subtler augmented-reality scenes that are presented within a portion, less than all, of the user's field of view.

FIG. 19 show an example visual depiction of AR system 1900, including an eyewear device 1902 (which may also be described herein as augmented-reality glasses, and/or smart glasses). AR system 1900 can include additional electronic components that are not shown in FIG. 19, such as a wearable accessory device and/or an intermediary processing device, in electronic communication or otherwise configured to be used in conjunction with the eyewear device 1902. In some embodiments, the wearable accessory device and/or the intermediary processing device may be configured to couple with eyewear device 1902 via a coupling mechanism in electronic communication with a coupling sensor 2124 (FIG. 21), where coupling sensor 2124 can detect when an electronic device becomes physically or electronically coupled with eyewear device 1902. In some embodiments, eyewear device 1902 can be configured to couple to a housing 2190 (FIG. 21), which may include one or more additional coupling mechanisms configured to couple with additional accessory devices. The components shown in FIG. 19 can be implemented in hardware, software, firmware, or a combination thereof, including one or more signal-processing components and/or application-specific integrated circuits (ASICs).

Eyewear device 1902 includes mechanical glasses components, including a frame 1904 configured to hold one or more lenses (e.g., one or both lenses 1906-1 and 1906-2). One of ordinary skill in the art will appreciate that eyewear device 1902 can include additional mechanical components, such as hinges configured to allow portions of frame 1904 of eyewear device 1902 to be folded and unfolded, a bridge configured to span the gap between lenses 1906-1 and 1906-2 and rest on the user's nose, nose pads configured to rest on the bridge of the nose and provide support for eyewear device 1902, earpieces configured to rest on the user's ears and provide additional support for eyewear device 1902, temple arms configured to extend from the hinges to the earpieces of eyewear device 1902, and the like. One of ordinary skill in the art will further appreciate that some examples of AR system 1900 can include none of the mechanical components described herein. For example, smart contact lenses configured to present artificial reality to users may not include any components of eyewear device 1902.

Eyewear device 1902 includes electronic components, many of which will be described in more detail below with respect to FIG. 10. Some example electronic components are illustrated in FIG. 19, including acoustic sensors 1925-1, 1925-2, 1925-3, 1925-4, 1925-5, and 1925-6, which can be distributed along a substantial portion of the frame 1904 of eyewear device 1902. Eyewear device 1902 also includes a left camera 1939A and a right camera 1939B, which are located on different sides of the frame 1904. Eyewear device 1902 also includes a processor 1948 (or any other suitable type or form of integrated circuit) that is embedded into a portion of the frame 1904.

FIGS. 20A and 20B show a VR system 2010 that includes a head-mounted display (HMD) 2012 (e.g., also referred to herein as an artificial-reality headset, a head-wearable device, a VR headset, etc.), in accordance with some embodiments. As noted, some artificial-reality systems (e.g., AR system 1900) may, instead of blending an artificial reality with actual reality, substantially replace one or more of a user's visual and/or other sensory perceptions of the real world with a virtual experience (e.g., AR systems 1500 and 1600).

HMD 2012 includes a front body 2014 and a frame 2016 (e.g., a strap or band) shaped to fit around a user's head. In some embodiments, front body 2014 and/or frame 2016 include one or more electronic elements for facilitating presentation of and/or interactions with an AR and/or VR system (e.g., displays, IMUs, tracking emitter or detectors). In some embodiments, HMD 2012 includes output audio transducers (e.g., an audio transducer 2018), as shown in FIG. 20B. In some embodiments, one or more components, such as the output audio transducer(s) 2018 and frame 2016, can be configured to attach and detach (e.g., are detachably attachable) to HMD 2012 (e.g., a portion or all of frame 2016, and/or audio transducer 2018), as shown in FIG. 20B. In some embodiments, coupling a detachable component to HMD 2012 causes the detachable component to come into electronic communication with HMD 2012.

FIGS. 20A and 20B also show that VR system 2010 includes one or more cameras, such as left camera 2039A and right camera 2039B, which can be analogous to left and right cameras 1939A and 1939B on frame 1904 of eyewear device 1902. In some embodiments, VR system 2010 includes one or more additional cameras (e.g., cameras 2039C and 2039D), which can be configured to augment image data obtained by left and right cameras 2039A and 2039B by providing more information. For example, camera 2039C can be used to supply color information that is not discerned by cameras 2039A and 2039B. In some embodiments, one or more of cameras 2039A to 2039D can include an optional IR cut filter configured to remove IR light from being received at the respective camera sensors.

FIG. 21 illustrates a computing system 2120 and an optional housing 2190, each of which show components that can be included in AR system 1900 and/or VR system 2010. In some embodiments, more or fewer components can be included in optional housing 2190 depending on practical restraints of the respective AR system being described.

In some embodiments, computing system 2120 can include one or more peripherals interfaces 2122A and/or optional housing 2190 can include one or more peripherals interfaces 2122B. Each of computing system 2120 and optional housing 2190 can also include one or more power systems 2142A and 2142B, one or more controllers 2146 (including one or more haptic controllers 2147), one or more processors 2148A and 2148B (as defined above, including any of the examples provided), and memory 2150A and 2150B, which can all be in electronic communication with each other. For example, the one or more processors 2148A and 2148B can be configured to execute instructions stored in memory 2150A and 2150B, which can cause a controller of one or more of controllers 2146 to cause operations to be performed at one or more peripheral devices connected to peripherals interface 2122A and/or 2122B. In some embodiments, each operation described can be powered by electrical power provided by power system 2142A and/or 2142B.

In some embodiments, peripherals interface 2122A can include one or more devices configured to be part of computing system 2120, some of which have been defined above and/or described with respect to the wrist-wearable devices shown in FIGS. 17 and 18. For example, peripherals interface 2122A can include one or more sensors 2123A. Some example sensors 2123A include one or more coupling sensors 2124, one or more acoustic sensors 2125, one or more imaging sensors 2126, one or more EMG sensors 2127, one or more capacitive sensors 2128, one or more IMU sensors 2129, and/or any other types of sensors explained above or described with respect to any other embodiments discussed herein.

In some embodiments, peripherals interfaces 2122A and 2122B can include one or more additional peripheral devices, including one or more NFC devices 2130, one or more GPS devices 2131, one or more LTE devices 2132, one or more Wi-Fi and/or Bluetooth devices 2133, one or more buttons 2134 (e.g., including buttons that are slidable or otherwise adjustable), one or more displays 2135A and 2135B, one or more speakers 2136A and 2136B, one or more microphones 2137, one or more cameras 2138A and 2138B (e.g., including the left camera 2139A and/or a right camera 2139B), one or more haptic devices 2140, and/or any other types of peripheral devices defined above or described with respect to any other embodiments discussed herein.

AR systems can include a variety of types of visual feedback mechanisms (e.g., presentation devices). For example, display devices in AR system 1900 and/or VR system 2010 can include one or more liquid-crystal displays (LCDs), light emitting diode (LED) displays, organic LED (OLED) displays, and/or any other suitable types of display screens. Artificial-reality systems can include a single display screen (e.g., configured to be seen by both eyes), and/or can provide separate display screens for each eye, which can allow for additional flexibility for varifocal adjustments and/or for correcting a refractive error associated with a user's vision. Some embodiments of AR systems also include optical subsystems having one or more lenses (e.g., conventional concave or convex lenses, Fresnel lenses, or adjustable liquid lenses) through which a user can view a display screen.

For example, respective displays 2135A and 2135B can be coupled to each of the lenses 1906-1 and 1906-2 of AR system 1900. Displays 2135A and 2135B may be coupled to each of lenses 1906-1 and 1906-2, which can act together or independently to present an image or series of images to a user. In some embodiments, AR system 1900 includes a single display 2135A or 2135B (e.g., a near-eye display) or more than two displays 2135A and 2135B. In some embodiments, a first set of one or more displays 2135A and 2135B can be used to present an augmented-reality environment, and a second set of one or more display devices 2135A and 2135B can be used to present a virtual-reality environment. In some embodiments, one or more waveguides are used in conjunction with presenting artificial-reality content to the user of AR system 1900 (e.g., as a means of delivering light from one or more displays 2135A and 2135B to the user's eyes). In some embodiments, one or more waveguides are fully or partially integrated into the eyewear device 1902. Additionally, or alternatively to display screens, some artificial-reality systems include one or more projection systems. For example, display devices in AR system 1900 and/or VR system 2010 can include micro-LED projectors that project light (e.g., using a waveguide) into display devices, such as clear combiner lenses that allow ambient light to pass through. The display devices can refract the projected light toward a user's pupil and can enable a user to simultaneously view both artificial-reality content and the real world. Artificial-reality systems can also be configured with any other suitable type or form of image projection system. In some embodiments, one or more waveguides are provided additionally or alternatively to the one or more display(s) 2135A and 2135B.

Computing system 2120 and/or optional housing 2190 of AR system 1900 or VR system 2010 can include some or all of the components of a power system 2142A and 2142B. Power systems 2142A and 2142B can include one or more charger inputs 2143, one or more PMICs 2144, and/or one or more batteries 2145A and 2145B.

Memory 2150A and 2150B may include instructions and data, some or all of which may be stored as non-transitory computer-readable storage media within the memories 2150A and 2150B. For example, memory 2150A and 2150B can include one or more operating systems 2151, one or more applications 2152, one or more communication interface applications 2153A and 2153B, one or more graphics applications 2154A and 2154B, one or more AR processing applications 2155A and 2155B, and/or any other types of data defined above or described with respect to any other embodiments discussed herein.

Memory 2150A and 2150B also include data 2160A and 2160B, which can be used in conjunction with one or more of the applications discussed above. Data 2160A and 2160B can include profile data 2161, sensor data 2162A and 2162B, media content data 2163A, AR application data 2164A and 2164B, and/or any other types of data defined above or described with respect to any other embodiments discussed herein.

In some embodiments, controller 2146 of eyewear device 1902 may process information generated by sensors 2123A and/or 2123B on eyewear device 1902 and/or another electronic device within AR system 1900. For example, controller 2146 can process information from acoustic sensors 1925-1 and 1925-2. For each detected sound, controller 2146 can perform a direction of arrival (DOA) estimation to estimate a direction from which the detected sound arrived at eyewear device 1902 of AR system 1900. As one or more of acoustic sensors 2125 (e.g., the acoustic sensors 1925-1, 1925-2) detects sounds, controller 2146 can populate an audio data set with the information (e.g., represented in FIG. 10 as sensor data 2162A and 2162B).

In some embodiments, a physical electronic connector can convey information between eyewear device 1902 and another electronic device and/or between one or more processors 1948, 2148A, 2148B of AR system 1900 or VR system 2010 and controller 2146. The information can be in the form of optical data, electrical data, wireless data, or any other transmittable data form. Moving the processing of information generated by eyewear device 1902 to an intermediary processing device can reduce weight and heat in the eyewear device, making it more comfortable and safer for a user. In some embodiments, an optional wearable accessory device (e.g., an electronic neckband) is coupled to eyewear device 1902 via one or more connectors. The connectors can be wired or wireless connectors and can include electrical and/or non-electrical (e.g., structural) components. In some embodiments, eyewear device 1902 and the wearable accessory device can operate independently without any wired or wireless connection between them.

In some situations, pairing external devices, such as an intermediary processing device (e.g., HIPD 1306, 1406, 1506) with eyewear device 1902 (e.g., as part of AR system 1900) enables eyewear device 1902 to achieve a similar form factor of a pair of glasses while still providing sufficient battery and computation power for expanded capabilities. Some, or all, of the battery power, computational resources, and/or additional features of AR system 1900 can be provided by a paired device or shared between a paired device and eyewear device 1902, thus reducing the weight, heat profile, and form factor of eyewear device 1902 overall while allowing eyewear device 1902 to retain its desired functionality. For example, the wearable accessory device can allow components that would otherwise be included on eyewear device 1902 to be included in the wearable accessory device and/or intermediary processing device, thereby shifting a weight load from the user's head and neck to one or more other portions of the user's body. In some embodiments, the intermediary processing device has a larger surface area over which to diffuse and disperse heat to the ambient environment. Thus, the intermediary processing device can allow for greater battery and computation capacity than might otherwise have been possible on eyewear device 1902 standing alone. Because weight carried in the wearable accessory device can be less invasive to a user than weight carried in the eyewear device 1902, a user may tolerate wearing a lighter eyewear device and carrying or wearing the paired device for greater lengths of time than the user would tolerate wearing a heavier eyewear device standing alone, thereby enabling an artificial-reality environment to be incorporated more fully into a user's day-to-day activities.

AR systems can include various types of computer vision components and subsystems. For example, AR system 1900 and/or VR system 2010 can include one or more optical sensors such as two-dimensional (2D) or three-dimensional (3D) cameras, time-of-flight depth sensors, structured light transmitters and detectors, single-beam or sweeping laser rangefinders, 3D LiDAR sensors, and/or any other suitable type or form of optical sensor. An AR system can process data from one or more of these sensors to identify a location of a user and/or aspects of the use's real-world physical surroundings, including the locations of real-world objects within the real-world physical surroundings. In some embodiments, the methods described herein are used to map the real world, to provide a user with context about real-world surroundings, and/or to generate digital twins (e.g., interactable virtual objects), among a variety of other functions. For example, FIGS. 20A and 20B show VR system 2010 having cameras 2039A to 2039D, which can be used to provide depth information for creating a voxel field and a two-dimensional mesh to provide object information to the user to avoid collisions.

In some embodiments, AR system 1900 and/or VR system 2010 can include haptic (tactile) feedback systems, which may be incorporated into headwear, gloves, body suits, handheld controllers, environmental devices (e.g., chairs or floormats), and/or any other type of device or system, such as the wearable devices discussed herein. The haptic feedback systems may provide various types of cutaneous feedback, including vibration, force, traction, shear, texture, and/or temperature. The haptic feedback systems may also provide various types of kinesthetic feedback, such as motion and compliance. The haptic feedback may be implemented using motors, piezoelectric actuators, fluidic systems, and/or a variety of other types of feedback mechanisms. The haptic feedback systems may be implemented independently of other artificial-reality devices, within other artificial-reality devices, and/or in conjunction with other artificial-reality devices.

In some embodiments of an artificial reality system, such as AR system 1900 and/or VR system 2010, ambient light (e.g., a live feed of the surrounding environment that a user would normally see) can be passed through a display element of a respective head-wearable device presenting aspects of the AR system. In some embodiments, ambient light can be passed through a portion that is less than all of an AR environment presented within a user's field of view (e.g., a portion of the AR environment co-located with a physical object in the user's real-world environment that is within a designated boundary (e.g., a guardian boundary) configured to be used by the user while they are interacting with the AR environment). For example, a visual user interface element (e.g., a notification user interface element) can be presented at the head-wearable device, and an amount of ambient light (e.g., 15-50% of the ambient light) can be passed through the user interface element such that the user can distinguish at least a portion of the physical environment over which the user interface element is being displayed.

FIGS. 22A and 22B illustrate an example handheld intermediary processing device (HIPD) 2200 in accordance with some embodiments. HIPD 2200 is an instance of the intermediary device described herein, such that HIPD 2200 should be understood to have the features described with respect to any intermediary device defined above or otherwise described herein and vice versa. FIG. 22A shows a top view and FIG. 22B shows a side view of the HIPD 2200. HIPD 2200 is configured to communicatively couple with one or more wearable devices (or other electronic devices) associated with a user. For example, HIPD 2200 is configured to communicatively couple with a user's wrist-wearable device 1302, 1402 (or components thereof, such as watch body 1720 and wearable band 1710), AR glasses 1900, and/or VR headset 1550 and 2000. HIPD 2200 can be configured to be held by a user (e.g., as a handheld controller), carried on the user's person (e.g., in their pocket, in their bag, etc.), placed in proximity of the user (e.g., placed on their desk while seated at their desk, on a charging dock, etc.), and/or placed at or within a predetermined distance from a wearable device or other electronic device (e.g., where, in some embodiments, the predetermined distance is the maximum distance (e.g., 10 meters) at which HIPD 2200 can successfully be communicatively coupled with an electronic device, such as a wearable device).

HIPD 2200 can perform various functions independently and/or in conjunction with one or more wearable devices (e.g., wrist-wearable device 1302, AR glasses 1900, VR system 2010, etc.). HIPD 2200 can be configured to increase and/or improve the functionality of communicatively coupled devices, such as the wearable devices. HIPD 2200 can be configured to perform one or more functions or operations associated with interacting with user interfaces and applications of communicatively coupled devices, interacting with an AR environment, interacting with VR environment, and/or operating as a human-machine interface controller, as well as functions and/or operations described above with reference to FIGS. 13-15B. Additionally, as will be described in more detail below, functionality and/or operations of HIPD 2200 can include, without limitation, task offloading and/or handoffs; thermals offloading and/or handoffs; six degrees of freedom (6DoF) raycasting and/or gaming (e.g., using imaging devices or cameras 2214A, 2214B, which can be used for simultaneous localization and mapping (SLAM) and/or with other image processing techniques), portable charging, messaging, image capturing via one or more imaging devices or cameras 2222A and 2222B, sensing user input (e.g., sensing a touch on a touch input surface 2202), wireless communications and/or interlining (e.g., cellular, near field, Wi-Fi, personal area network, etc.), location determination, financial transactions, providing haptic feedback, alarms, notifications, biometric authentication, health monitoring, sleep monitoring, etc. The above-described example functions can be executed independently in HIPD 2200 and/or in communication between HIPD 2200 and another wearable device described herein. In some embodiments, functions can be executed on HIPD 2200 in conjunction with an AR environment. As the skilled artisan will appreciate upon reading the descriptions provided herein that HIPD 2200 can be used with any type of suitable AR environment.

While HIPD 2200 is communicatively coupled with a wearable device and/or other electronic device, HIPD 2200 is configured to perform one or more operations initiated at the wearable device and/or the other electronic device. In particular, one or more operations of the wearable device and/or the other electronic device can be offloaded to HIPD 2200 to be performed. HIPD 2200 performs the one or more operations of the wearable device and/or the other electronic device and provides data corresponding to the completed operations to the wearable device and/or the other electronic device. For example, a user can initiate a video stream using AR glasses 1900 and back-end tasks associated with performing the video stream (e.g., video rendering) can be offloaded to HIPD 2200, which HIPD 2200 performs and provides corresponding data to AR glasses 1900 to perform remaining front-end tasks associated with the video stream (e.g., presenting the rendered video data via a display of AR glasses 1900). In this way, HIPD 2200, which has more computational resources and greater thermal headroom than a wearable device, can perform computationally intensive tasks for the wearable device, thereby improving performance of an operation performed by the wearable device.

HIPD 2200 includes a multi-touch input surface 2202 on a first side (e.g., a front surface) that is configured to detect one or more user inputs. In particular, multi-touch input surface 2202 can detect single tap inputs, multi-tap inputs, swipe gestures and/or inputs, force-based and/or pressure-based touch inputs, held taps, and the like. Multi-touch input surface 2202 is configured to detect capacitive touch inputs and/or force (and/or pressure) touch inputs. Multi-touch input surface 2202 includes a first touch-input surface 2204 defined by a surface depression and a second touch-input surface 2206 defined by a substantially planar portion. First touch-input surface 2204 can be disposed adjacent to second touch-input surface 2206. In some embodiments, first touch-input surface 2204 and second touch-input surface 2206 can be different dimensions and/or shapes. For example, first touch-input surface 2204 can be substantially circular and second touch-input surface 2206 can be substantially rectangular. In some embodiments, the surface depression of multi-touch input surface 2202 is configured to guide user handling of HIPD 2200. In particular, the surface depression can be configured such that the user holds HIPD 2200 upright when held in a single hand (e.g., such that the imaging devices or cameras 2214A and 2214B are pointed toward a ceiling or the sky). Additionally, the surface depression is configured such that the user's thumb rests within first touch-input surface 2204.

In some embodiments, the different touch-input surfaces include a plurality of touch-input zones. For example, second touch-input surface 2206 includes at least a second touch-input zone 2208 within a first touch-input zone 2207 and a third touch-input zone 2210 within second touch-input zone 2208. In some embodiments, one or more of touch-input zones 2208 and 2210 are optional and/or user defined (e.g., a user can specific a touch-input zone based on their preferences). In some embodiments, each touch-input surface 2204 and 2206 and/or touch-input zone 2208 and 2210 are associated with a predetermined set of commands. For example, a user input detected within first touch-input zone 2208 may cause HIPD 2200 to perform a first command and a user input detected within second touch-input surface 2206 may cause HIPD 2200 to perform a second command, distinct from the first. In some embodiments, different touch-input surfaces and/or touch-input zones are configured to detect one or more types of user inputs. The different touch-input surfaces and/or touch-input zones can be configured to detect the same or distinct types of user inputs. For example, first touch-input zone 2208 can be configured to detect force touch inputs (e.g., a magnitude at which the user presses down) and capacitive touch inputs, and second touch-input zone 2210 can be configured to detect capacitive touch inputs.

As shown in FIG. 23, HIPD 2200 includes one or more sensors 2351 for sensing data used in the performance of one or more operations and/or functions. For example, HIPD 2200 can include an IMU sensor that is used in conjunction with cameras 2214A, 2214B (FIGS. 22A-22B) for 3-dimensional object manipulation (e.g., enlarging, moving, destroying, etc., an object) in an AR or VR environment. Non-limiting examples of sensors 2351 included in HIPD 2200 include a light sensor, a magnetometer, a depth sensor, a pressure sensor, and a force sensor.

HIPD 2200 can include one or more light indicators 2212 to provide one or more notifications to the user. In some embodiments, light indicators 2212 are LEDs or other types of illumination devices. Light indicators 2212 can operate as a privacy light to notify the user and/or others near the user that an imaging device and/or microphone are active. In some embodiments, a light indicator is positioned adjacent to one or more touch-input surfaces. For example, a light indicator can be positioned around first touch-input surface 2204. Light indicators 2212 can be illuminated in different colors and/or patterns to provide the user with one or more notifications and/or information about the device. For example, a light indicator positioned around first touch-input surface 2204 may flash when the user receives a notification (e.g., a message), change red when HIPD 2200 is out of power, operate as a progress bar (e.g., a light ring that is closed when a task is completed (e.g., 0% to 100%)), operate as a volume indicator, etc.

In some embodiments, HIPD 2200 includes one or more additional sensors on another surface. For example, as shown FIG. 22A, HIPD 2200 includes a set of one or more sensors (e.g., sensor set 2220) on an edge of HIPD 2200. Sensor set 2220, when positioned on an edge of the of HIPD 2200, can be pe positioned at a predetermined tilt angle (e.g., 26 degrees), which allows sensor set 2220 to be angled toward the user when placed on a desk or other flat surface. Alternatively, in some embodiments, sensor set 2220 is positioned on a surface opposite the multi-touch input surface 2202 (e.g., a back surface). The one or more sensors of sensor set 2220 are discussed in further detail below.

The side view of the of HIPD 2200 in FIG. 22B shows sensor set 2220 and camera 2214B. Sensor set 2220 can include one or more cameras 2222A and 2222B, a depth projector 2224, an ambient light sensor 2228, and a depth receiver 2230. In some embodiments, sensor set 2220 includes a light indicator 2226. Light indicator 2226 can operate as a privacy indicator to let the user and/or those around them know that a camera and/or microphone is active. Sensor set 2220 is configured to capture a user's facial expression such that the user can puppet a custom avatar (e.g., showing emotions, such as smiles, laughter, etc., on the avatar or a digital representation of the user). Sensor set 2220 can be configured as a side stereo RGB system, a rear indirect Time-of-Flight (iToF) system, or a rear stereo RGB system. As the skilled artisan will appreciate upon reading the descriptions provided herein, HIPD 2200 described herein can use different sensor set 2220 configurations and/or sensor set 2220 placement.

Turning to FIG. 23, in some embodiments, a computing system 2340 of HIPD 2200 can include one or more haptic devices 2371 (e.g., a vibratory haptic actuator) that are configured to provide haptic feedback (e.g., kinesthetic sensation). Sensors 2351 and/or the haptic devices 2371 can be configured to operate in conjunction with multiple applications and/or communicatively coupled devices including, without limitation, a wearable devices, health monitoring applications, social media applications, game applications, and artificial reality applications (e.g., the applications associated with artificial reality).

In some embodiments, HIPD 2200 is configured to operate without a display. However, optionally, computing system 2340 of the HIPD 2200 can include a display 2368. HIPD 2200 can also include one or more optional peripheral buttons 2367. For example, peripheral buttons 2367 can be used to turn on or turn off HIPD 2200. Further, HIPD 2200 housing can be formed of polymers and/or elastomers. In other words, HIPD 2200 may be designed such that it would not easily slide off a surface. In some embodiments, HIPD 2200 includes one or magnets to couple HIPD 2200 to another surface. This allows the user to mount HIPD 2200 to different surfaces and provide the user with greater flexibility in use of HIPD 2200.

As described above, HIPD 2200 can distribute and/or provide instructions for performing the one or more tasks at HIPD 2200 and/or a communicatively coupled device. For example, HIPD 2200 can identify one or more back-end tasks to be performed by HIPD 2200 and one or more front-end tasks to be performed by a communicatively coupled device. While HIPD 2200 is configured to offload and/or handoff tasks of a communicatively coupled device, HIPD 2200 can perform both back-end and front-end tasks (e.g., via one or more processors, such as CPU 2377). HIPD 2200 can, without limitation, can be used to perform augmented calling (e.g., receiving and/or sending 3D or 2.5D live volumetric calls, live digital human representation calls, and/or avatar calls), discreet messaging, 6DoF portrait/landscape gaming, AR/VR object manipulation, AR/VR content display (e.g., presenting content via a virtual display), and/or other AR/VR interactions. HIPD 2200 can perform the above operations alone or in conjunction with a wearable device (or other communicatively coupled electronic device).

FIG. 23 shows a block diagram of a computing system 2340 of HIPD 2200 in accordance with some embodiments. HIPD 2200, described in detail above, can include one or more components shown in HIPD computing system 2340. HIPD 2200 will be understood to include the components shown and described below for HIPD computing system 2340. In some embodiments, all, or a substantial portion of the components of HIPD computing system 2340 are included in a single integrated circuit. Alternatively, in some embodiments, components of HIPD computing system 2340 are included in a plurality of integrated circuits that are communicatively coupled.

HIPD computing system 2340 can include a processor (e.g., a CPU 2377, a GPU, and/or a CPU with integrated graphics), a controller 2375, a peripherals interface 2350 that includes one or more sensors 2351 and other peripheral devices, a power source (e.g., a power system 2395), and memory (e.g., a memory 2378) that includes an operating system (e.g., an operating system 2379), data (e.g., data 2388), one or more applications (e.g., applications 2380), and one or more modules (e.g., a communications interface module 2381, a graphics module 2382, a task and processing management module 2383, an interoperability module 2384, an AR processing module 2385, a data management module 2386, etc.). HIPD computing system 2340 further includes a power system 2395 that includes a charger input and output 2396, a PMIC 2397, and a battery 2398, all of which are defined above.

In some embodiments, peripherals interface 2350 can include one or more sensors 2351. Sensors 2351 can include analogous sensors to those described above in reference to FIG. 17. For example, sensors 2351 can include imaging sensors 2354, (optional) EMG sensors 2356, IMU sensors 2358, and capacitive sensors 2360. In some embodiments, sensors 2351 can include one or more pressure sensors 2352 for sensing pressure data, an altimeter 2353 for sensing an altitude of the HIPD 2200, a magnetometer 2355 for sensing a magnetic field, a depth sensor 2357 (or a time-of flight sensor) for determining a difference between the camera and the subject of an image, a position sensor 2359 (e.g., a flexible position sensor) for sensing a relative displacement or position change of a portion of the HIPD 2200, a force sensor 2361 for sensing a force applied to a portion of the HIPD 2200, and a light sensor 2362 (e.g., an ambient light sensor) for detecting an amount of lighting. Sensors 2351 can include one or more sensors not shown in FIG. 23.

Analogous to the peripherals described above in reference to FIG. 17, peripherals interface 2350 can also include an NFC component 2363, a GPS component 2364, an LTE component 2365, a Wi-Fi and/or Bluetooth communication component 2366, a speaker 2369, a haptic device 2371, and a microphone 2373. As noted above, HIPD 2200 can optionally include a display 2368 and/or one or more peripheral buttons 2367. Peripherals interface 2350 can further include one or more cameras 2370, touch surfaces 2372, and/or one or more light emitters 2374. Multi-touch input surface 2202 described above in reference to FIGS. 22A and 22B is an example of touch surface 2372. Light emitters 2374 can be one or more LEDs, lasers, etc. and can be used to project or present information to a user. For example, light emitters 2374 can include light indicators 2212 and 2226 described above in reference to FIGS. 22A and 22B. Cameras 2370 (e.g., cameras 2214A, 2214B, 2222A, and 2222B described above in reference to FIGS. 22A and 22B) can include one or more wide angle cameras, fish-eye cameras, spherical cameras, compound eye cameras (e.g., stereo and multi cameras), depth cameras, RGB cameras, ToF cameras, RGB-D cameras (depth and ToF cameras), and/or other suitable cameras. Cameras 2370 can be used for SLAM, 6DoF ray casting, gaming, object manipulation and/or other rendering, facial recognition and facial expression recognition, etc.

Similar to watch body computing system 1860 and watch band computing system 1830 described above in reference to FIG. 18, HIPD computing system 2340 can include one or more haptic controllers 2376 and associated componentry (e.g., haptic devices 2371) for providing haptic events at HIPD 2200.

Memory 2378 can include high-speed random-access memory and/or non-volatile memory, such as one or more magnetic disk storage devices, flash memory devices, or other non-volatile solid-state memory devices. Access to memory 2378 by other components of HIPD 2200, such as the one or more processors and peripherals interface 2350, can be controlled by a memory controller of controllers 2375.

In some embodiments, software components stored in memory 2378 include one or more operating systems 2379, one or more applications 2380, one or more communication interface modules 2381, one or more graphics modules 2382, and/or one or more data management modules 2386, which are analogous to the software components described above in reference to FIG. 17.

In some embodiments, software components stored in memory 2378 include a task and processing management module 2383 for identifying one or more front-end and back-end tasks associated with an operation performed by the user, performing one or more front-end and/or back-end tasks, and/or providing instructions to one or more communicatively coupled devices that cause performance of the one or more front-end and/or back-end tasks. In some embodiments, task and processing management module 2383 uses data 2388 (e.g., device data 2390) to distribute the one or more front-end and/or back-end tasks based on communicatively coupled devices' computing resources, available power, thermal headroom, ongoing operations, and/or other factors. For example, task and processing management module 2383 can cause the performance of one or more back-end tasks (of an operation performed at communicatively coupled AR system 1900 ) at HIPD 2200 in accordance with a determination that the operation is utilizing a predetermined amount (e.g., at least 70%) of computing resources available at AR system 1900 .

In some embodiments, software components stored in memory 2378 include an interoperability module 2384 for exchanging and utilizing information received and/or provided to distinct communicatively coupled devices. Interoperability module 2384 allows for different systems, devices, and/or applications to connect and communicate in a coordinated way without user input. In some embodiments, software components stored in memory 2378 include an AR processing module 2385 that is configured to process signals based at least on sensor data for use in an AR and/or VR environment. For example, AR processing module 2385 can be used for 3D object manipulation, gesture recognition, facial and facial expression recognition, etc.

Memory 2378 can also include data 2388. In some embodiments, data 2388 can include profile data 2389, device data 2390 (including device data of one or more devices communicatively coupled with HIPD 2200, such as device type, hardware, software, configurations, etc.), sensor data 2391, media content data 2392, and application data 2393.

It should be appreciated that HIPD computing system 2340 is an example of a computing system within HIPD 2200, and that HIPD 2200 can have more or fewer components than shown in HIPD computing system 2340, combine two or more components, and/or have a different configuration and/or arrangement of the components. The various components shown HIPD computing system 2340 are implemented in hardware, software, firmware, or a combination thereof, including one or more signal processing and/or application-specific integrated circuits.

The techniques described above in FIGS. 22A, 22B, and 23 can be used with any device used as a human-machine interface controller. In some embodiments, an HIPD 2200 can be used in conjunction with one or more wearable device such as a head-wearable device (e.g., AR system 1900 and VR system 2010) and/or a wrist-wearable device 1700 (or components thereof).

In some embodiments, the artificial reality devices and/or accessory devices disclosed herein may include haptic interfaces with transducers that provide haptic feedback and/or that collect haptic information about a user's interaction with an environment. The artificial-reality systems disclosed herein may include various types of haptic interfaces that detect or convey various types of haptic information, including tactile feedback (e.g., feedback that a user detects via nerves in the skin, which may also be referred to as cutaneous feedback) and/or kinesthetic feedback (e.g., feedback that a user detects via receptors located in muscles, joints, and/or tendons). In some examples, cutaneous feedback may include vibration, force, traction, texture, and/or temperature. Similarly, kinesthetic feedback, may include motion and compliance. Cutaneous and/or kinesthetic feedback may be provided using motors, piezoelectric actuators, fluidic systems, and/or a variety of other types of feedback mechanisms. Furthermore, haptic feedback systems may be implemented independent of other artificial-reality devices, within other artificial-reality devices, and/or in conjunction with other artificial-reality devices.

By providing haptic sensations, audible content, and/or visual content, artificial-reality systems may create an entire virtual experience or enhance a user's real-world experience in a variety of contexts and environments. For instance, artificial-reality systems may assist or extend a user's perception, memory, or cognition within a particular environment. Some systems may enhance a user's interactions with other people in the real world or may enable more immersive interactions with other people in a virtual world. Artificial-reality systems may also be used for educational purposes (e.g., for teaching or training in schools, hospitals, government organizations, military organizations, business enterprises, etc.), entertainment purposes (e.g., for playing video games, listening to music, watching video content, etc.), and/or for accessibility purposes (e.g., as hearing aids, visual aids, etc.). The haptics assemblies disclosed herein may enable or enhance a user's artificial-reality experience in one or more of these contexts and environments and/or in other contexts and environments.

FIGS. 24A and 24B show example haptic feedback systems (e.g., hand-wearable devices) for providing feedback to a user regarding the user's interactions with a computing system (e.g., an artificial-reality environment presented by the AR system 1900 or the VR system 2010). In some embodiments, a computing system (e.g., the AR systems 1500 and/or 1600) may also provide feedback to one or more users based on an action that was performed within the computing system and/or an interaction provided by the AR system (e.g., which may be based on instructions that are executed in conjunction with performing operations of an application of the computing system). Such feedback may include visual and/or audio feedback and may also include haptic feedback provided by a haptic assembly, such as one or more haptic assemblies 2462 of haptic device 2400 (e.g., haptic assemblies 2462-1, 2462-2, 2462-3, etc.). For example, the haptic feedback may prevent (or, at a minimum, hinder/resist movement of) one or more fingers of a user from bending past a certain point to simulate the sensation of touching a solid coffee mug. In actuating such haptic effects, haptic device 2400 can change (either directly or indirectly) a pressurized state of one or more of haptic assemblies 2462.

Vibrotactile system 2400 may optionally include other subsystems and components, such as touch-sensitive pads, pressure sensors, motion sensors, position sensors, lighting elements, and/or user interface elements (e.g., an on/off button, a vibration control element, etc.). During use, haptic assemblies 2462 may be configured to be activated for a variety of different reasons, such as in response to the user's interaction with user interface elements, a signal from the motion or position sensors, a signal from the touch-sensitive pads, a signal from the pressure sensors, a signal from the other device or system, etc.

In FIGS. 24A and 24B, each of haptic assemblies 2462 may include a mechanism that, at a minimum, provides resistance when the respective haptic assembly 2462 is transitioned from a first pressurized state (e.g., atmospheric pressure or deflated) to a second pressurized state (e.g., inflated to a threshold pressure). Structures of haptic assemblies 2462 can be integrated into various devices configured to be in contact or proximity to a user's skin, including, but not limited to devices such as glove worn devices, body worn clothing device, headset devices.

As noted above, haptic assemblies 2462 described herein can be configured to transition between a first pressurized state and a second pressurized state to provide haptic feedback to the user. Due to the ever-changing nature of artificial-reality, haptic assemblies 2462 may be required to transition between the two states hundreds, or perhaps thousands of times, during a single use. Thus, haptic assemblies 2462 described herein are durable and designed to quickly transition from state to state. To provide some context, in the first pressurized state, haptic assemblies 2462 do not impede free movement of a portion of the user's body. For example, one or more haptic assemblies 2462 incorporated into a glove are made from flexible materials that do not impede free movement of the user's hand and fingers (e.g., an electrostatic-zipping actuator). Haptic assemblies 2462 may be configured to conform to a shape of the portion of the user's body when in the first pressurized state. However, once in the second pressurized state, haptic assemblies 2462 can be configured to restrict and/or impede free movement of the portion of the user's body (e.g., appendages of the user's hand). For example, the respective haptic assembly 2462 (or multiple respective haptic assemblies) can restrict movement of a user's finger (e.g., prevent the finger from curling or extending) when haptic assembly 2462 is in the second pressurized state. Moreover, once in the second pressurized state, haptic assemblies 2462 may take different shapes, with some haptic assemblies 2462 configured to take a planar, rigid shape (e.g., flat and rigid), while some other haptic assemblies 2462 are configured to curve or bend, at least partially.

As a non-limiting example, haptic device 2400 includes a plurality of haptic devices (e.g., a pair of haptic gloves, a haptics component of a wrist-wearable device (e.g., any of the wrist-wearable devices described with respect to FIGS. 13-17), etc.), each of which can include a garment component (e.g., a garment 2404) and one or more haptic assemblies coupled (e.g., physically coupled) to the garment component. For example, each of the haptic assemblies 2462-1, 2462-2, 2462-3, . . . 2462-N are physically coupled to the garment 2404 and are configured to contact respective phalanges of a user's thumb and fingers. As explained above, haptic assemblies 2462 are configured to provide haptic simulations to a user of device 2400. Garment 2404 of each device 2400 can be one of various articles of clothing (e.g., gloves, socks, shirts, pants, etc.). Thus, a user may wear multiple haptic devices 2400 that are each configured to provide haptic stimulations to respective parts of the body where haptic devices 2400 are being worn.

FIG. 25 shows block diagrams of a computing system 2540 of haptic device 2400, in accordance with some embodiments. Computing system 2540 can include one or more peripherals interfaces 2550, one or more power systems 2595, one or more controllers 2575 (including one or more haptic controllers 2576), one or more processors 2577 (as defined above, including any of the examples provided), and memory 2578, which can all be in electronic communication with each other. For example, one or more processors 2577 can be configured to execute instructions stored in the memory 2578, which can cause a controller of the one or more controllers 2575 to cause operations to be performed at one or more peripheral devices of peripherals interface 2550. In some embodiments, each operation described can occur based on electrical power provided by the power system 2595. The power system 2595 can include a charger input 2596, a PMIC 2597, and a battery 2598.

In some embodiments, peripherals interface 2550 can include one or more devices configured to be part of computing system 2540, many of which have been defined above and/or described with respect to wrist-wearable devices shown in FIGS. 17 and 18. For example, peripherals interface 2550 can include one or more sensors 2551. Some example sensors include: one or more pressure sensors 2552, one or more EMG sensors 2556, one or more IMU sensors 2558, one or more position sensors 2559, one or more capacitive sensors 2560, one or more force sensors 2561; and/or any other types of sensors defined above or described with respect to any other embodiments discussed herein.

In some embodiments, the peripherals interface can include one or more additional peripheral devices, including one or more Wi-Fi and/or Bluetooth devices 2568; one or more haptic assemblies 2562; one or more support structures 2563 (which can include one or more bladders 2564; one or more manifolds 2565; one or more pressure-changing devices 2567; and/or any other types of peripheral devices defined above or described with respect to any other embodiments discussed herein.

In some embodiments, each haptic assembly 2562 includes a support structure 2563 and at least one bladder 2564. Bladder 2564 (e.g., a membrane) may be a sealed, inflatable pocket made from a durable and puncture-resistant material, such as thermoplastic polyurethane (TPU), a flexible polymer, or the like. Bladder 2564 contains a medium (e.g., a fluid such as air, inert gas, or even a liquid) that can be added to or removed from bladder 2564 to change a pressure (e.g., fluid pressure) inside the bladder 2564. Support structure 2563 is made from a material that is stronger and stiffer than the material of bladder 2564. A respective support structure 2563 coupled to a respective bladder 2564 is configured to reinforce the respective bladder 2564 as the respective bladder 2564 changes shape and size due to changes in pressure (e.g., fluid pressure) inside the bladder.

The system 2540 also includes a haptic controller 2576 and a pressure-changing device 2567. In some embodiments, haptic controller 2576 is part of the computer system 2540 (e.g., in electronic communication with one or more processors 2577 of the computer system 2540). Haptic controller 2576 is configured to control operation of pressure-changing device 2567, and in turn operation of haptic device 2400. For example, haptic controller 2576 sends one or more signals to pressure-changing device 2567 to activate pressure-changing device 2567 (e.g., turn it on and off). The one or more signals may specify a desired pressure (e.g., pounds-per-square inch) to be output by pressure-changing device 2567. Generation of the one or more signals, and in turn the pressure output by pressure-changing device 2567, may be based on information collected by sensors 2551. For example, the one or more signals may cause pressure-changing device 2567 to increase the pressure (e.g., fluid pressure) inside a first haptic assembly 2562 at a first time, based on the information collected by sensors 2551 (e.g., the user makes contact with an artificial coffee mug or other artificial object). Then, the controller may send one or more additional signals to pressure-changing device 2567 that cause pressure-changing device 2567 to further increase the pressure inside first haptic assembly 2562 at a second time after the first time, based on additional information collected by sensors 2551. Further, the one or more signals may cause pressure-changing device 2567 to inflate one or more bladders 2564 in a first device 2400A, while one or more bladders 2564 in a second device 2400B remain unchanged. Additionally, the one or more signals may cause pressure-changing device 2567 to inflate one or more bladders 2564 in a first device 2400A to a first pressure and inflate one or more other bladders 2564 in first device 2400A to a second pressure different from the first pressure. Depending on number of devices 2400 serviced by pressure-changing device 2567, and the number of bladders therein, many different inflation configurations can be achieved through the one or more signals and the examples above are not meant to be limiting.

The system 2540 may include an optional manifold 2565 between pressure-changing device 2567 and haptic devices 2400. Manifold 2565 may include one or more valves (not shown) that pneumatically couple each of haptic assemblies 2562 with pressure-changing device 2567 via tubing. In some embodiments, manifold 2565 is in communication with controller 2575, and controller 2575 controls the one or more valves of manifold 2565 (e.g., the controller generates one or more control signals). Manifold 2565 is configured to switchably couple pressure-changing device 2567 with one or more haptic assemblies 2562 of the same or different haptic devices 2400 based on one or more control signals from controller 2575. In some embodiments, instead of using manifold 2565 to pneumatically couple pressure-changing device 2567 with haptic assemblies 2562, system 2540 may include multiple pressure-changing devices 2567, where each pressure-changing device 2567 is pneumatically coupled directly with a single haptic assembly 2562 or multiple haptic assemblies 2562. In some embodiments, pressure-changing device 2567 and optional manifold 2565 can be configured as part of one or more of the haptic devices 2400 while, in other embodiments, pressure-changing device 2567 and optional manifold 2565 can be configured as external to haptic device 2400. A single pressure-changing device 2567 may be shared by multiple haptic devices 2400.

In some embodiments, pressure-changing device 2567 is a pneumatic device, hydraulic device, a pneudraulic device, or some other device capable of adding and removing a medium (e.g., fluid, liquid, gas) from the one or more haptic assemblies 2562.

The devices shown in FIGS. 24A-25 may be coupled via a wired connection (e.g., via busing). Alternatively, one or more of the devices shown in FIGS. 24A-25 may be wirelessly connected (e.g., via short-range communication signals).

Memory 2578 includes instructions and data, some or all of which may be stored as non-transitory computer-readable storage media within memory 2578. For example, memory 2578 can include one or more operating systems 2579; one or more communication interface applications 2581; one or more interoperability modules 2584; one or more AR processing applications 2585; one or more data management modules 2586; and/or any other types of applications or modules defined above or described with respect to any other embodiments discussed herein.

Memory 2578 also includes data 2588 which can be used in conjunction with one or more of the applications discussed above. Data 2588 can include: device data 2590; sensor data 2591; and/or any other types of data defined above or described with respect to any other embodiments discussed herein.

In some embodiments, the systems described herein may also include an eye-tracking subsystem designed to identify and track various characteristics of a user's eye(s), such as the user's gaze direction. The phrase "eye tracking" may, in some examples, refer to a process by which the position, orientation, and/or motion of an eye is measured, detected, sensed, determined, and/or monitored. The disclosed systems may measure the position, orientation, and/or motion of an eye in a variety of different ways, including through the use of various optical-based eye-tracking techniques, ultrasound-based eye-tracking techniques, etc. An eye-tracking subsystem may be configured in a number of different ways and may include a variety of different eye-tracking hardware components or other computer-vision components. For example, an eye-tracking subsystem may include a variety of different optical sensors, such as two-dimensional (2D) or 3D cameras, time-of-flight depth sensors, single-beam or sweeping laser rangefinders, 3D LiDAR sensors, and/or any other suitable type or form of optical sensor. In this example, a processing subsystem may process data from one or more of these sensors to measure, detect, determine, and/or otherwise monitor the position, orientation, and/or motion of the user's eye(s).

FIG. 26 is an illustration of an example system 2600 that incorporates an eye-tracking subsystem capable of tracking a user's eye(s). As depicted in FIG. 26, system 2600 may include a light source 2602, an optical subsystem 2604, an eye-tracking subsystem 2606, and/or a control subsystem 2608. In some examples, light source 2602 may generate light for an image (e.g., to be presented to an eye 2601 of the viewer). Light source 2602 may represent any of a variety of suitable devices. For example, light source 2602 can include a two-dimensional projector (e.g., a LCoS display), a scanning source (e.g., a scanning laser), or other device (e.g., an LCD, an LED display, an OLED display, an active-matrix OLED display (AMOLED), a transparent OLED display (TOLED), a waveguide, or some other display capable of generating light for presenting an image to the viewer). In some examples, the image may represent a virtual image, which may refer to an optical image formed from the apparent divergence of light rays from a point in space, as opposed to an image formed from the light ray's actual divergence.

In some embodiments, optical subsystem 2604 may receive the light generated by light source 2602 and generate, based on the received light, converging light 2620 that includes the image. In some examples, optical subsystem 2604 may include any number of lenses (e.g., Fresnel lenses, convex lenses, concave lenses), apertures, filters, mirrors, prisms, and/or other optical components, possibly in combination with actuators and/or other devices. In particular, the actuators and/or other devices may translate and/or rotate one or more of the optical components to alter one or more aspects of converging light 2620. Further, various mechanical couplings may serve to maintain the relative spacing and/or the orientation of the optical components in any suitable combination.

In one embodiment, eye-tracking subsystem 2606 may generate tracking information indicating a gaze angle of an eye 2601 of the viewer. In this embodiment, control subsystem 2608 may control aspects of optical subsystem 2604 (e.g., the angle of incidence of converging light 2620) based at least in part on this tracking information. Additionally, in some examples, control subsystem 2608 may store and utilize historical tracking information (e.g., a history of the tracking information over a given duration, such as the previous second or fraction thereof) to anticipate the gaze angle of eye 2601 (e.g., an angle between the visual axis and the anatomical axis of eye 2601). In some embodiments, eye-tracking subsystem 2606 may detect radiation emanating from some portion of eye 2601 (e.g., the cornea, the iris, the pupil, or the like) to determine the current gaze angle of eye 2601. In other examples, eye-tracking subsystem 2606 may employ a wavefront sensor to track the current location of the pupil.

Any number of techniques can be used to track eye 2601. Some techniques may involve illuminating eye 2601 with infrared light and measuring reflections with at least one optical sensor that is tuned to be sensitive to the infrared light. Information about how the infrared light is reflected from eye 2601 may be analyzed to determine the position(s), orientation(s), and/or motion(s) of one or more eye feature(s), such as the cornea, pupil, iris, and/or retinal blood vessels.

In some examples, the radiation captured by a sensor of eye-tracking subsystem 2606 may be digitized (i.e., converted to an electronic signal). Further, the sensor may transmit a digital representation of this electronic signal to one or more processors (for example, processors associated with a device including eye-tracking subsystem 2606). Eye-tracking subsystem 2606 may include any of a variety of sensors in a variety of different configurations. For example, eye-tracking subsystem 2606 may include an infrared detector that reacts to infrared radiation. The infrared detector may be a thermal detector, a photonic detector, and/or any other suitable type of detector. Thermal detectors may include detectors that react to thermal effects of the incident infrared radiation.

In some examples, one or more processors may process the digital representation generated by the sensor(s) of eye-tracking subsystem 2606 to track the movement of eye 2601. In another example, these processors may track the movements of eye 2601 by executing algorithms represented by computer-executable instructions stored on non-transitory memory. In some examples, on-chip logic (e.g., an application-specific integrated circuit or ASIC) may be used to perform at least portions of such algorithms. As noted, eye-tracking subsystem 2606 may be programmed to use an output of the sensor(s) to track movement of eye 2601. In some embodiments, eye-tracking subsystem 2606 may analyze the digital representation generated by the sensors to extract eye rotation information from changes in reflections. In one embodiment, eye-tracking subsystem 2606 may use corneal reflections or glints (also known as Purkinje images) and/or the center of the eye's pupil 2622 as features to track over time.

In some embodiments, eye-tracking subsystem 2606 may use the center of the eye's pupil 2622 and infrared or near-infrared, non-collimated light to create corneal reflections. In these embodiments, eye-tracking subsystem 2606 may use the vector between the center of the eye's pupil 2622 and the corneal reflections to compute the gaze direction of eye 2601. In some embodiments, the disclosed systems may perform a calibration procedure for an individual (using, e.g., supervised or unsupervised techniques) before tracking the user's eyes. For example, the calibration procedure may include directing users to look at one or more points displayed on a display while the eye-tracking system records the values that correspond to each gaze position associated with each point.

In some embodiments, eye-tracking subsystem 2606 may use two types of infrared and/or near-infrared (also known as active light) eye-tracking techniques: bright-pupil and dark-pupil eye tracking, which may be differentiated based on the location of an illumination source with respect to the optical elements used. If the illumination is coaxial with the optical path, then eye 2601 may act as a retroreflector as the light reflects off the retina, thereby creating a bright pupil effect similar to a red-eye effect in photography. If the illumination source is offset from the optical path, then the eye's pupil 2622 may appear dark because the retroreflection from the retina is directed away from the sensor. In some embodiments, bright-pupil tracking may create greater iris/pupil contrast, allowing more robust eye tracking with iris pigmentation, and may feature reduced interference (e.g., interference caused by eyelashes and other obscuring features). Bright-pupil tracking may also allow tracking in lighting conditions ranging from total darkness to a very bright environment.

In some embodiments, control subsystem 2608 may control light source 2602 and/or optical subsystem 2604 to reduce optical aberrations (e.g., chromatic aberrations and/or monochromatic aberrations) of the image that may be caused by or influenced by eye 2601. In some examples, as mentioned above, control subsystem 2608 may use the tracking information from eye-tracking subsystem 2606 to perform such control. For example, in controlling light source 2602, control subsystem 2608 may alter the light generated by light source 2602 (e.g., by way of image rendering) to modify (e.g., pre-distort) the image so that the aberration of the image caused by eye 2601 is reduced.

The disclosed systems may track both the position and relative size of the pupil (since, e.g., the pupil dilates and/or contracts). In some examples, the eye-tracking devices and components (e.g., sensors and/or sources) used for detecting and/or tracking the pupil may be different (or calibrated differently) for different types of eyes. For example, the frequency range of the sensors may be different (or separately calibrated) for eyes of different colors and/or different pupil types, sizes, and/or the like. As such, the various eye-tracking components (e.g., infrared sources and/or sensors) described herein may need to be calibrated for each individual user and/or eye.

The disclosed systems may track both eyes with and without ophthalmic correction, such as that provided by contact lenses worn by the user. In some embodiments, ophthalmic correction elements (e.g., adjustable lenses) may be directly incorporated into the artificial reality systems described herein. In some examples, the color of the user's eye may necessitate modification of a corresponding eye-tracking algorithm. For example, eye-tracking algorithms may need to be modified based at least in part on the differing color contrast between a brown eye and, for example, a blue eye.

FIG. 27 is a more detailed illustration of various aspects of the eye-tracking subsystem illustrated in FIG. 26. As shown in this figure, an eye-tracking subsystem 2700 may include at least one source 2704 and at least one sensor 2706. Source 2704 generally represents any type or form of element capable of emitting radiation. In one example, source 2704 may generate visible, infrared, and/or near-infrared radiation. In some examples, source 2704 may radiate non-collimated infrared and/or near-infrared portions of the electromagnetic spectrum towards an eye 2702 of a user. Source 2704 may utilize a variety of sampling rates and speeds. For example, the disclosed systems may use sources with higher sampling rates in order to capture fixational eye movements of a user's eye 2702 and/or to correctly measure saccade dynamics of the user's eye 2702. As noted above, any type or form of eye-tracking technique may be used to track the user's eye 2702, including optical-based eye-tracking techniques, ultrasound-based eye-tracking techniques, etc.

Sensor 2706 generally represents any type or form of element capable of detecting radiation, such as radiation reflected off the user's eye 2702. Examples of sensor 2706 include, without limitation, a charge coupled device (CCD), a photodiode array, a complementary metal-oxide-semiconductor (CMOS) based sensor device, and/or the like. In one example, sensor 2706 may represent a sensor having predetermined parameters, including, but not limited to, a dynamic resolution range, linearity, and/or other characteristic selected and/or designed specifically for eye tracking.

As detailed above, eye-tracking subsystem 2700 may generate one or more glints. As detailed above, a glint 2703 may represent reflections of radiation (e.g., infrared radiation from an infrared source, such as source 2704) from the structure of the user's eye. In various embodiments, glint 2703 and/or the user's pupil may be tracked using an eye-tracking algorithm executed by a processor (either within or external to an artificial reality device). For example, an artificial reality device may include a processor and/or a memory device in order to perform eye tracking locally and/or a transceiver to send and receive the data necessary to perform eye tracking on an external device (e.g., a mobile phone, cloud server, or other computing device).

FIG. 27 shows an example image 2705 captured by an eye-tracking subsystem, such as eye-tracking subsystem 2700. In this example, image 2705 may include both the user's pupil 2708 and a glint 2710 near the same. In some examples, pupil 2708 and/or glint 2710 may be identified using an artificial-intelligence-based algorithm, such as a computer-vision-based algorithm. In one embodiment, image 2705 may represent a single frame in a series of frames that may be analyzed continuously in order to track the eye 2702 of the user. Further, pupil 2708 and/or glint 2710 may be tracked over a period of time to determine a user's gaze.

In one example, eye-tracking subsystem 2700 may be configured to identify and measure the inter-pupillary distance (IPD) of a user. In some embodiments, eye-tracking subsystem 2700 may measure and/or calculate the IPD of the user while the user is wearing the artificial reality system. In these embodiments, eye-tracking subsystem 2700 may detect the positions of a user's eyes and may use this information to calculate the user's IPD.

As noted, the eye-tracking systems or subsystems disclosed herein may track a user's eye position and/or eye movement in a variety of ways. In one example, one or more light sources and/or optical sensors may capture an image of the user's eyes. The eye-tracking subsystem may then use the captured information to determine the user's inter-pupillary distance, interocular distance, and/or a 3D position of each eye (e.g., for distortion adjustment purposes), including a magnitude of torsion and rotation (i.e., roll, pitch, and yaw) and/or gaze directions for each eye. In one example, infrared light may be emitted by the eye-tracking subsystem and reflected from each eye. The reflected light may be received or detected by an optical sensor and analyzed to extract eye rotation data from changes in the infrared light reflected by each eye.

The eye-tracking subsystem may use any of a variety of different methods to track the eyes of a user. For example, a light source (e.g., infrared light-emitting diodes) may emit a dot pattern onto each eye of the user. The eye-tracking subsystem may then detect (e.g., via an optical sensor coupled to the artificial reality system) and analyze a reflection of the dot pattern from each eye of the user to identify a location of each pupil of the user. Accordingly, the eye-tracking subsystem may track up to six degrees of freedom of each eye (i.e., 3D position, roll, pitch, and yaw) and at least a subset of the tracked quantities may be combined from two eyes of a user to estimate a gaze point (i.e., a 3D location or position in a virtual scene where the user is looking) and/or an IPD.

In some cases, the distance between a user's pupil and a display may change as the user's eye moves to look in different directions. The varying distance between a pupil and a display as viewing direction changes may be referred to as "pupil swim" and may contribute to distortion perceived by the user as a result of light focusing in different locations as the distance between the pupil and the display changes. Accordingly, measuring distortion at different eye positions and pupil distances relative to displays and generating distortion corrections for different positions and distances may allow mitigation of distortion caused by pupil swim by tracking the 3D position of a user's eyes and applying a distortion correction corresponding to the 3D position of each of the user's eyes at a given point in time. Thus, knowing the 3D position of each of a user's eyes may allow for the mitigation of distortion caused by changes in the distance between the pupil of the eye and the display by applying a distortion correction for each 3D eye position. Furthermore, as noted above, knowing the position of each of the user's eyes may also enable the eye-tracking subsystem to make automated adjustments for a user's IPD.

In some embodiments, a display subsystem may include a variety of additional subsystems that may work in conjunction with the eye-tracking subsystems described herein. For example, a display subsystem may include a varifocal subsystem, a scene-rendering module, and/or a vergence-processing module. The varifocal subsystem may cause left and right display elements to vary the focal distance of the display device. In one embodiment, the varifocal subsystem may physically change the distance between a display and the optics through which it is viewed by moving the display, the optics, or both. Additionally, moving or translating two lenses relative to each other may also be used to change the focal distance of the display. Thus, the varifocal subsystem may include actuators or motors that move displays and/or optics to change the distance between them. This varifocal subsystem may be separate from or integrated into the display subsystem. The varifocal subsystem may also be integrated into or separate from its actuation subsystem and/or the eye-tracking subsystems described herein.

In one example, the display subsystem may include a vergence-processing module configured to determine a vergence depth of a user's gaze based on a gaze point and/or an estimated intersection of the gaze lines determined by the eye-tracking subsystem. Vergence may refer to the simultaneous movement or rotation of both eyes in opposite directions to maintain single binocular vision, which may be naturally and automatically performed by the human eye. Thus, a location where a user's eyes are verged is where the user is looking and is also typically the location where the user's eyes are focused. For example, the vergence-processing module may triangulate gaze lines to estimate a distance or depth from the user associated with intersection of the gaze lines. The depth associated with intersection of the gaze lines may then be used as an approximation for the accommodation distance, which may identify a distance from the user where the user's eyes are directed. Thus, the vergence distance may allow for the determination of a location where the user's eyes should be focused and a depth from the user's eyes at which the eyes are focused, thereby providing information (such as an object or plane of focus) for rendering adjustments to the virtual scene.

The vergence-processing module may coordinate with the eye-tracking subsystems described herein to make adjustments to the display subsystem to account for a user's vergence depth. When the user is focused on something at a distance, the user's pupils may be slightly farther apart than when the user is focused on something close. The eye-tracking subsystem may obtain information about the user's vergence or focus depth and may adjust the display subsystem to be closer together when the user's eyes focus or verge on something close and to be farther apart when the user's eyes focus or verge on something at a distance.

The eye-tracking information generated by the above-described eye-tracking subsystems may also be used, for example, to modify various aspect of how different computer-generated images are presented. For example, a display subsystem may be configured to modify, based on information generated by an eye-tracking subsystem, at least one aspect of how the computer-generated images are presented. For instance, the computer-generated images may be modified based on the user's eye movement, such that if a user is looking up, the computer-generated images may be moved upward on the screen. Similarly, if the user is looking to the side or down, the computer-generated images may be moved to the side or downward on the screen. If the user's eyes are closed, the computer-generated images may be paused or removed from the display and resumed once the user's eyes are back open.

The above-described eye-tracking subsystems can be incorporated into one or more of the various artificial reality systems described herein in a variety of ways. For example, one or more of the various components of system 2600 and/or eye-tracking subsystem 2700 may be incorporated into any of the augmented-reality systems in and/or virtual-reality systems described herein in to enable these systems to perform various eye-tracking tasks (including one or more of the eye-tracking operations described herein).

The process parameters and sequence of the steps described and/or illustrated herein are given by way of example only and can be varied as desired. For example, while the steps illustrated and/or described herein may be shown or discussed in a particular order, these steps do not necessarily need to be performed in the order illustrated or discussed. The various exemplary methods described and/or illustrated herein may also omit one or more of the steps described or illustrated herein or include additional steps in addition to those disclosed.

The preceding description has been provided to enable others skilled in the art to best utilize various aspects of the exemplary embodiments disclosed herein. This exemplary description is not intended to be exhaustive or to be limited to any precise form disclosed. Many modifications and variations are possible without departing from the scope of the present disclosure. The embodiments disclosed herein should be considered in all respects illustrative and not restrictive. Reference should be made to the appended claims and their equivalents in determining the scope of the present disclosure.

Unless otherwise noted, the terms "connected to" and "coupled to" (and their derivatives), as used in the specification and claims, are to be construed as permitting both direct and indirect (i.e., via other elements or components) connection. In addition, the terms "a" or "an," as used in the specification and claims, are to be construed as meaning "at least one of." Finally, for ease of use, the terms "including" and "having" (and their derivatives), as used in the specification and claims, are interchangeable with and have the same meaning as the word "comprising."

It will be understood that when an element such as a layer or a region is referred to as being formed on, deposited on, or disposed "on" or "over" another element, it may be located directly on at least a portion of the other element, or one or more intervening elements may also be present. In contrast, when an element is referred to as being "directly on" or "directly over" another element, it may be located on at least a portion of the other element, with no intervening elements present.

As used herein, the term "approximately" in reference to a particular numeric value or range of values may, in certain embodiments, mean and include the stated value as well as all values within 10% of the stated value. Thus, by way of example, reference to the numeric value "50" as "approximately 50" may, in certain embodiments, include values equal to 50±5, i.e., values within the range 45 to 55.

As used herein, the term "substantially" in reference to a given parameter, property, or condition may mean and include to a degree that one of ordinary skill in the art would understand that the given parameter, property, or condition is met with a small degree of variance, such as within acceptable manufacturing tolerances. By way of example, depending on the particular parameter, property, or condition that is substantially met, the parameter, property, or condition may be at least approximately 90% met, at least approximately 95% met, or even at least approximately 99% met.

While various features, elements or steps of particular embodiments may be disclosed using the transitional phrase "comprising," it is to be understood that alternative embodiments, including those that may be described using the transitional phrases "consisting of" or "consisting essentially of," are implied. Thus, for example, implied alternative embodiments to a lens that comprises or includes polycarbonate include embodiments where a lens consists essentially of polycarbonate and embodiments where a lens consists of polycarbonate.

## Claims

1. A wearable device comprising:
a camera configured to capture image data of a physical environment; and
a visible indicator configured to emit light in response to an operational state of the camera.

2. The wearable device of claim 1, wherein the visible indicator comprises a light ring adjacent to a cover window or cover lens of the camera.

3. The wearable device of claim 1 or claim 2, wherein the visible indicator comprises a light ring disposed beneath a cover window or cover lens of the camera.

4. The wearable device of any preceding claim, wherein:
the visible indicator is configured to emit the light along an optical path of the camera through a lens assembly in response to the operational state of the camera;
the camera is configured to detect the light emitted by the visible indicator along the optical path to verify operation of the visible indicator; and
an operational state of the camera is determined based on the detected light; and preferably
wherein the visible indicator is configured to emit the light along the optical path of the camera through the lens assembly before and after an image capture event, and/or preferably
wherein the visible indicator is configured to emit the light along the optical path of the camera through the lens assembly during a readout period between successive frames of image capture.

5. The wearable device of any preceding claim, further comprising:
a second visible indicator different from the visible indicator;
wherein the visible indicator is configured to emit the light along an optical path of the camera through a lens assembly before and after video capture by the camera in response to the operational state of the camera;
wherein the second visible indicator is configured to emit second light during the video capture;
wherein the camera is configured to detect the light emitted by the visible indicator along the optical path to verify operation of at least one of the visible indicator or the second visible indicator; and
wherein an operational state of the camera is determined based on detected light from at least one of the visible indicator or the second visible indicator.

6. The wearable device of any preceding claim, wherein:
the visible indicator is configured to emit the light along an optical path of the camera through a lens assembly during video capture by the camera in a modulated manner between successive frames of the video capture in response to the operational state of the camera;
the camera is configured to detect the light emitted by the visible indicator along the optical path to verify operation of the visible indicator; and
an operational state of the camera is determined based on the detected light; and preferably
wherein the visible indicator is configured to emit the light at an emission frequency less than a frame rate of the video capture; and/or preferably
wherein the camera comprises a global shutter or a rolling shutter.

7. The wearable device of any preceding claim, wherein:
the visible indicator is configured to emit the light along an optical path of the camera through a lens assembly; and
the light is directionally distributed such that a first portion of the light corresponds to a field of view of the camera and is visible to observers within the field of view, and a second portion of the light corresponds to at least one region outside the field of view and is visible to observers outside the field of view.

8. The wearable device of claim 7, wherein the first portion of the light and the second portion of the light differ in at least one of color, intensity, or modulation.

9. The wearable device of claim 7 or claim 8, wherein:
the visible indicator comprises a plurality of light emitters disposed over a baffle that is parallel to an image sensor of the camera;
the baffle is configured to separate light corresponding to the field of view from light corresponding to the at least one region outside the field of view;
a first set of light emitters of the plurality of light emitters is configured to direct light toward the image sensor such that the light directed toward the image sensor is scattered through the lens assembly; and
a second set of light emitters of the plurality of light emitters is configured to direct light toward the lens assembly from a side of the baffle opposite the image sensor.

10. The wearable device of any one of claims 7 to 9, wherein the visible indicator comprises:
one or more optical components configured to shape an angular distribution of the light; and/or
a single light emitter coupled to an illumination spreading structure configured to produce directionally distributed light.

11. A system comprising:
at least one physical processor; and
physical memory comprising computer-executable instructions that, when executed by the at least one physical processor, cause the at least one physical processor to:
activate a visible indicator to emit light in response to an operational state of a camera;
detect, via the camera, the light emitted by the visible indicator;
verify, based on the detected light, operation of the visible indicator; and
determine an operational state of the camera based on the detected light.

12. A method comprising:
activating a visible indicator of a wearable device to emit light in response to an operational state of a camera of the wearable device;
detecting, via the camera, the light emitted by the visible indicator;
verifying, based on the detected light, an operation of the visible indicator; and
determining an operational state of the camera based on the detected light.

13. The method of claim 12, further comprising:
emitting the light from the visible indicator along an optical path of the camera through a lens assembly in response to the operational state of the camera.

14. The method of claim 12 or claim 13, further comprising:
emitting the light from the visible indicator along an optical path of the camera through a lens assembly during video capture by the camera in a modulated manner between successive frames of the video capture in response to the operational state of the camera.

15. The method of any one of claims 12 to 14, further comprising:
emitting the light from the visible indicator along an optical path of the camera through a lens assembly in a directionally distributed manner such that a first portion of the light corresponds to a field of view of the camera and is visible to observers within the field of view, and a second portion of the light corresponds to at least one region outside the field of view and is visible to observers outside the field of view.
